# EUROPEAN PATENT SPECIFICATION

(11) **EP 1 358 778 B1**
(45) Date of publication and mention of the grant of the patent: **26.03.2008**
(21) Application number: 01977176.5
(22) Date of filing: 26.09.2001
(51) Int. Cl.: H04Q 11/04, H04L 12/56, H04L 12/64, H04Q 11/00

(54) **SWITCHING METHODS WITH A PLURALITY OF TIME INTERVALS**
VERMITTLUNGSVERFAHREN MIT MEHREREN ZEITINTERVALLEN
PROCEDES DE COMMUTATION COMPORTANT UNE PLURALITE DE CRENEAUX TEMPORELS

(30) Priority: 27.09.2000 US 235765 P; 10.01.2001 US 261133 P; 21.09.2001 US 961076
(43) Date of publication of application: 05.11.2003
(73) Proprietor: Synchrodyne Networks, Inc., Tenafly, NY 07670 (US)
(72) Inventor: OFEK, Yoram, Riverdale, NY 10463 (US); BALDI, Mario, I-12100 Cuneo (IT)
(74) Representative: Borsano, Corrado
(86) International application number: PCT/US2001/030052
(87) International publication number: WO 2002/028139

(56) References cited:
- US-A- 5 418 779
- ELBY S D ET AL: "WAVELENGTH-BASED CELL-SWITCHING IN ATM MULTIHOP LIGHTWAVE NETWORKS" COMPUTER NETWORKS AND ISDN SYSTEMS, NORTH HOLLAND PUBLISHING. AMSTERDAM, NL, vol. 26, no. 6/8, 1 March 1994 (1994-03-01), pages 1043-1062, XP000434928 ISSN: 0169-7552
- YEMINI Y ET AL: "Isochronets: a high-speed network switching architecture" NETWORKING: FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS, US, vol. 2 CONF. 12, 28 March 1993 (1993-03-28), pages 740-747, XP010032243 ISBN: 0-8186-3580-0

## Description

### RELATED APPLICATIONS:

This is a application is based upon the continuation-in-part application, filed with the U.S.P.T.O. on September 21,2001, for "SWITCHING METHODS WITH COMMON TIME REFERENCE AND PLURALITY OF TIME FRAME DURATIONS," under 37 C.F.R. §1.53, of pending prior application Serial No. 09/120,700, filed on 07/22/98, for "INTERCONNECTING A SYNCHRONOUS SWITCHING NETWORK THAT UTILIZES A COMMON TIME REFERENCE WITH AN ASYNCHRONOUS SWITCHING NETWORK," and further claims priority of pending provisional application Serial No. 60/235,765, filed on 09/27/2000, for "SWITCHING, GROOMING, AND DEGROOMING METHODS AND LINK TRANSMISSION CONTROL WITH COMMON TIME REFERENCE," and of pending provisional application Serial No. 60/261,133, filed on 01/10/2001, for "SWTICHING METHODS WITH COMMON TIME REFERENCE AND PLURALITY OF TIME FRAME DURATIONS."

### FEDERALLY SPONSORED RESEARCH OR DEVELOPMENT:

Not Applicable.

### BACKGROUND OF THE INVENTION:

This invention relates generally to a method and apparatus for switching and grooming data units in a communications network in a timely manner while providing low switching complexity and performance guarantees, over a plurality of communications links with a plurality of transmission rates.

Circuit-switching networks are still the main carrier for real-time traffic, are designed for telephony service, and cannot be easily enhanced to support multiple services and carry multimedia traffic in their native packet formats. Circuit-switching is based on extremely accurate clock frequencies needed for byte-by-byte switching. This enables circuit-switching networks to transport data streams at constant rates with a small delay jitter. Finally, the clock accuracy for SONET requires a heightened amount of accuracy as line transmission speed increases.

Due to the statistical multiplexing of packet streams, packet switching networks handle bursty data more efficiently than do circuit-switching networks. However, current packet switches and routers operate asynchronously, and only provide "best effort" service in which end-to-end delay and jitter can be neither guaranteed nor bounded. Furthermore, statistical variations of traffic intensity in packet switching networks often lead to congestion that results in excessive delays and loss of packets, thereby significantly reducing the fidelity of real-time streams at their respective points of reception. Finally, since current packet switches and routers electronically process the header of each packet to be routed and switched, a high processing power is required and the scalability of the packet switching network is limited.

In circuit switches routing is time-based. A time period, called frame, is divided into very small slices of time, called slots that contain only one byte of information. The absolute position of each time slice within each time period determines where its respective byte is routed.

Time driven switching/routing, in accordance with some aspects of the present invention, supports more sophisticated and flexible timing than circuit switching. Consequently, time driven switching provides better support of video-based multimedia , applications. In accordance with the present invention, the size of time frames used for time driven switching is larger than the size of time slots used in circuit switching; consequently, time driven switching is far less complicated than circuit switching. In accordance with the present invention, time driven routing is based on control information included in at least one of the headers and trailers of selected ones of the time frames, which current circuit switching cannot provide for.

In accordance with the present invention, time driven switching/routing uses a Common Time Reference (CTR). The CTR, though used in time-driven switching, is not used in circuit switching. The above discrepancy between time driven switching and circuit switching has far reaching implications during comparison of the two. For example, use of a CTR in a network deterministically ensures that time frames as defined by different nodes do not slip, thus enabling the deterministic pipeline forwarding of time frames. The above assurances of a CTR exist in contrast to the properties of a circuit-switching network, where (1) there are time slot slips, and (2) deterministic pipeline forwarding is not possible.

In U.S. Pat. No. 5,418,779 Yemini et al. disclose a switched network architecture that uses time. Time is used in order to determine when a plurality of switches can transmit over a predefined routing tree to one destination. This kind of tree is known as "sink" tree since the destination switch functions as a "sink" for the transmission from all switches. The time interval in which the plurality of switches transmits to a selected "sink" destination switch is called time band. In different time bands the plurality of switches are transmitting to a different single "sink" destination switch. Network switches change their configuration between time bands in order to build the proper "sink" tree during each time band. The present invention does use neither "sink" trees nor time bands for transmission over "sink" trees.

Yemini's invention may not be realizable in communications networks with end-to-end propagation delays that are not much smaller than the time band durations. In general, in Yemini's invention the end-to-end propagation delays introduce a non-trivial scheduling problem that may or may not have a solution. Furthermore, Yemini's invention does not discuss or specify how to take into consideration the link propagation delays and the end-to-end propagation delays. Consequently, general topology switched network cannot be built the way it is taught by Yemini's et al. invention.

Yemini's invention has another problem, which is congestion, that is the direct result of using "sink" trees. Data units received from different upstream switches contend for a single outgoing link towards the root of the "sink" tree. The present invention does not have any congestion. This is a direct consequence of using in the current invention completely different system operation principles and methods.

For example, in Yemini's et al. patent there is no pipeline forwarding: data units do not proceed in a lock-step fashion through the communications network, as it is the case in the present invention. The lack of pipeline forwarding leads to the above mentioned scheduling and congestion problems. Such problems are due to the fact that incoming time bands of Yemini's invention are not aligned in different input ports of the network's switches. Furthermore, it was not specified what are the temporal relationship of the same and different time bands on different "sink" tree switches when the link propagation delay and the end-to-end propagation delay are not zero. In contrast, time frames in the present invention are aligned with a Common Time Reference (CTR) on every switch.

Optical data communications using a single wavelength consist of the transmission of a single data stream into a series of pulses of light that are carried over an optical fiber. These pulses of light are of a single wavelength. Use of a single wavelength vastly under-utilizes the capacity of an optical fiber, which is capable of carrying a large number of signals each at a unique wavelength. Due to the nature of propagation of light signals, an optical fiber can carry multiple wavelengths simultaneously. The process of carrying multiple discrete signals via separate wavelengths of light on the same optical fiber is known in the art as wavelength division multiplexing (WDM). Many optical components, including, but not limited to, WDM multiplexers, WDM de-multiplexers, star couplers, tunable lasers, filters, wavelength waveguide grating routers (WGRs) are deployed in optical networks featuring WDM, and consequently used in the embodiments presented in this disclosure. [T. E. Stem and K. Bala, "Multiwavelength Optical Networks: a Layered Approach," Prentice Hall PTR, Upper Saddle River, NJ, USA, ISBN 020130967X. R. Ramaswami and K. N. Sivarajan, "Optical Networks: a Practical Perspective," Morgan Kaufmann Publishers, San Francisco, CA, USA, ISBN 1-55860-445-6. H. J. R. Dutton, "Understanding Optical Communications," Prentice Hall PTR, Upper Saddle River, NJ, USA, ISBN 0-13-020141-3].

The present invention contains the novel combination of: (1) time-based switching and routing and (2) WDM technology. WDM includes the capabilities for (1) dynamic tunable wavelength transmission, (2) dynamic and static wavelength switching, and (3) tunable wavelength reception.

The increasing demand for communications capacity has led to general deployment of Wavelength Division Multiplexing (WDM), which requires extremely high capacity switches. Lambda or static wavelength *switches* address this need for extremely high switching capacity by switching a whole wavelength from an input optical fiber link to an output optical fiber link without requiring any processing of the transmitted data units. In accordance with the present invention, WDM with whole lambda switching will be deployed in the network's optical core. However, switching of whole lambdas (e.g., lambdas of OC-192) is inefficient and costly because of three inherent problems it causes:
N square problem: the number of lambdas needed to accommodate all the possible connections among all access points is on the order of the square of the number of such access points. This will limit the size of the optical core.

Bandwidth mismatch problem: there is a substantial bandwidth mismatch when extremely high capacity backbone networks feed low capacity access links. As data leaves the core and is moved by packet switches towards the edge, buffers at access links frequently become congested, causing increased delays and dropped packets.

Traffic unbalancing problem: the traffic load across the network is not evenly distributed, i.e., it is not balanced. Thus, trying to satisfy the traffic load requirements using whole lambda switching remains both inflexible and inefficient.

Time driven switching adds the capability of switching fractions of lambdas, or Fractional Lambda Pipes (FLPs), thereby solving the above three problems. This approach, also called Fractional Lambda Switching (FLSw), will permit the optical core to be extended far closer to the network edges while reaching the lower speed network access devices with a bandwidth that matches their operation capability.

FLSw dynamically switches lambda fractions while carrying data units (e.g., IP data packets, and SONET STS1 frames), in a heterogeneous (mix of very high speed and very low speed links) meshed network, while providing deterministic performance guarantees. The size of fractional lambda pipes can be dynamically allocated to satisfy the specific needs of the access networks to which a fractional lambda pipe is connected. Small capacity FLPs can be used at the periphery to access low speed sub-networks, such as, cable modems, xDSL, VoIP gateways and wireless.

Fractional Lambda Switching (FLSw) combines the advantages of circuit switching and packet switching. FLSw is used for constructing a Fractional Lambda Pipe (FLP). A FLP is equivalent to a leased line in circuit switching. A FLP is realized by two simple elements:
A Common Time Reference (CTR) throughout the network that is globally aligned with Coordinated Universal Time (UTC); and
Pipeline Forwarding (PF) of time frames (logical containers of data packets) across FLPs.

The CTR is a reference clock used to realize pipeline forwarding of time frames, both within switches and across FLPs. The CTR is received via either the Global Positioning System (GPS), which is globally available at a low cost with an accuracy of 10-20 nanoseconds, or any other UTC (Coordinated Universal Time) distribution system such as the GLONASS (Russia) and, in the future, Galileo (Europe).

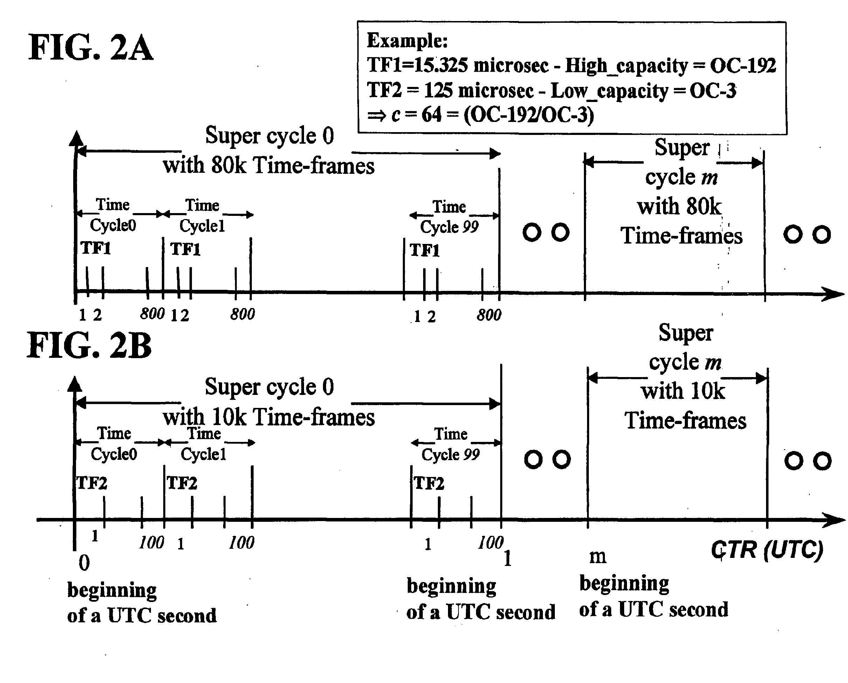

The common time reference or more specifically, the UTC second, is partitioned into time frames. The duration of a time frame is a link parameter - fast links might use shorter time frames, while slow links might use longer time frames. Contiguous time frames are grouped into time cycles, and contiguous time cycles are grouped together into contiguous super cycles. The duration of a super cycle is one UTC second, as shown in Fig. 2, and both the duration of time frames and the number of time frames in a cycle can be chosen for convenience. For example, a 1 Gb/s link might use time cycles of 100 time frames, each time frame having a duration of 125 µs; while a 10 Gb/s link might use time cycles of 1000 time frames, each time frame having a duration of 12.5 microseconds. For both links, each time frame will carry the same 15,625-byte payload, and there will be 80 time cycles in each super cycle or one UTC second, as shown in Fig. 2.

The common time reference can be realized by using UTC (Coordinated Universal Time), which is globally available via, for example GPS (Global Positioning System). By international agreement, UTC is the same all over the world. UTC is the scientific name for what is commonly called GMT (Greenwich Mean Time), the time at the 0 (root) line of longitude at Greenwich, England. In 1967, an international agreement established the length of a second as the duration of 9,192,631,770 oscillations of the cesium atom. The adoption of the atomic second led to the coordination of clocks around the world and the establishment of UTC in 1972. The Time and Frequency Division of the National Institute of Standards and Technologies (NIST) (see http://www.boulder.nist.gov/timefreq) is responsible for coordinating UTC with the International Bureau of Weights and Measures (BIPM) in Paris.

Each FLP's switching schedule is simple, and repeats every time cycle and/or super cycle. Thus, FLPs, together with the predictability provided by the CTR and pipeline forwarding, eliminate the complexity of data packet header processing. Each FLP transports data packets of one protocol, such as IP, MPLS, ATM, FR, or FC. However, different FLPs may carry data units of different protocols, i.e., data units of different protocols can travel across a selected link.

Fractional lambda switches have significantly lower complexity than both packet switches and circuit switches with comparable switching capability for the following reasons:
Minimum switch fabric complexity is implemented using a Banyan network, which has the complexity of a·N·lgₐN switching elements, where N is the total number of optical channels and 'a' is the size (number of inputs/outputs) of each switching element.
Optimal speed-up of the switch fabric that operates at the same speed as the optical channels (e.g., 10 Gb/s with OC-192 links).
Optimal memory access bandwidth is equal to the optical channel bandwidth - the switch architecture enables that, with only 3 input queues, a queue is never used for reading and writing at the same time, i.e., memory access with a speedup of 1.
(Very) small input memory for each optical channel (e.g., a 10 Gb/s channel requires 3 input queues with a total of 48 Kbytes of memory) and no buffering at the output port are needed.
(Very) simple control of the switch fabric suffices, since its configuration changes at a relatively low frequency (e.g., 80,000 times per second) and it is known in advance. This operation complexity is comparable to that of a T1 multiplexer.

Though highly efficient, a Banyan Network is subject to what is known as switch blocking: it may be impossible to connect an idle input with an idle output because a switching element is not available on the path between input and output. An interesting attribute of fractional lambda switching is the nearly complete elimination of blocking through Banyan-based switches.

Advances in optical transport have led to the realization of high-speed optical channels (e.g., OC-192 at 10 Gb/s); however, a single source transmitting to a single destination will not utilize the capacity of such channels. In accordance with the present invention, the following two basic requirements have been formed to enable the full utilization of such high capacity channels: (i) Grooming and degrooming: the need to aggregate (i.e., grooming) traffic from multiple sources into one optical channel and to separate (i.e., degrooming) an optical channel traffic to different destinations; (ii) Dynamic optical switching: the need to route portions from one optical channel (i.e., a lambda or a wavelength) on different optical paths to different destinations.

Dynamic all-optical switching is appealing for a number of reasons, stemming from the transparency of the transported data stream to the switching system itself; such reasons being: (i) intrinsically protocol independent (multi-protocol) transport; (ii) high scalability, since the transmission rate of each optical channel is transparent to the optical switching system; and (iii) no processing performed on switched data units, thus eliminating processing bottlenecks. Dynamic all-optical switching is possible when the optical switch reconfiguration time is significantly smaller than the time between two successive switch configuration changes.

The latest advances in optical switching have resulted in decreasing reconfiguration times of optical switch fabrics. However, taking full advantage of such advances for dynamic optical switching is not obvious, for several reasons: (i) Processing of in band control information, e.g., packet headers, is not possible; (ii) Dynamic optical storage is not available to assist in coping with output port contention and switch control and reconfiguration time; (iii) Optical switch reconfiguration time should be significantly smaller than the time between two successive reconfigurations.

Due to the above limitations it is not possible to realize an asynchronous packet switching system, and therefore, using time is necessary. However, time-based techniques deployed in circuit switching (e.g., SONET, based on byte switching, i.e., byte de-multiplexing and byte multiplexing) are not applicable to all-optical switches.

The most comprehensive solution to the above-mentioned problems is use of a common time reference (CTR) for pipeline forwarding (PF) in order to facilitate dynamic all-optical switching. CTR provides the synchronization needed to orchestrate the control of network switches while eliminating the need for optical storage and processing.

### Dynamic all-optical switching of time frames

Time is divided into time frames and any time frame of a sequence of incoming time frames over one optical channel can be optically switched to any outgoing optical channel. Such time frame switching is the basis of fractional lambda switching (FLSw). FLSw is used for constructing Fractional lambda pipes (FLPs), i.e., fractions of a wavelength. Each FLP transports data units of one protocol - such as, IP, MPLS, ATM, FR, FC, and SONET frames (e.g., STS1 frame) -, thereby realizing the desired protocol independent property of all-optical switching.

An all-optical switch realizes PF in two operational phases. Data units belonging to a whole time frame received from each of the optical channels during the first phase, Phase 1, are switched through the switch in the second phase, Phase 2. In a possible embodiment, if Phase 1 begins in time frame t, Phase 2 takes place in time frame t+1. In another embodiment, if Phase 1 ends in time frame t, Phase 2 takes place in time frame t+1. The 2-phase operation ensures that data units received from the various optical channels are aligned with the CTR before being switched. Phase 2 can be performed during either the time frame immediately following Phase 1, during time frame t+1- immediate forwarding operation, or at a later time frame - non-immediate forwarding operation.

Alignment involves aligning the beginning and end of each time frame from each optical channel with the beginning and end of the CTR time frames. Alignment can be performed either independently on each one of the channels carried by an optical link, or collectively on all of the channels carried by an optical link.

Alignment is needed because the propagation delay on optical links between switches is not an integer multiple of time frames. An optical alignment subsystem is part of the all-optical fractional lambda switch, operates on all the wavelengths carried by each optical fiber, and contributes to the realization of Phase 1 of the PF. The optical alignment subsystem is based on a programmable optical delay line guaranteeing that the overall delay experienced through the optical fiber and the delay line is an integer number of time frames. Data units leave the switch at the transmitting end of a selected optical fiber aligned with the CTR. When they arrive at the output of the optical alignment subsystem at the receiving end of the selected optical fiber, they are still aligned with the CTR. The alignment system is comprised of a controller that detects time frame delimiters and adjusts the delay by using a programmable optical delay line (note: the alignment changes only when the propagation delay on the optical link changes).

The availability of a common time reference (CTR) on a global scale for all network nodes enables the implementation of dynamic optical switches with a simple architecture. This architecture is used to realize fractional lambda switching (FLSw). FLSw is based on a common time reference (CTR) for pipeline forwarding (PF) of time frames. In FLSw, the synchronization provided by the CTR is leveraged to orchestrate the operation of subsystems within a switch and across the whole network.

### SUMMARY OF THE INVENTION:

Some aspects of the present invention utilize an alignment feature within an input port for aligning incoming data units to a time frame boundary prior to the entry to a switch fabric. In a possible embodiment the alignment feature is designed using electrical components, such as random access memory (RAM) and digital circuitry. In another embodiment the alignment feature is designed using optical components, such as optical delay lines.

According to one aspect of the invention disclosed herein, the switching method can be applied to the switching of data units between optical channels wherein the time frame duration on one optical channel is different from the time frame duration on the other optical channels. Moreover, the switching method can be applied to the switching of data units between optical channels wherein capacity of one optical channel is different from the capacity of the other optical channels.

Advances in optical transport have lead to the realization of ever-larger optical channels (40 Gb/s trials are being conducted) whose capacity is utilized by many traffic sources. The increasing amount of optical channel capacity has resulted in the need for the following: (i) grooming - the aggregation of traffic from a large number of sources into one optical channel; (ii) degrooming - the separation of traffic from one optical channel to many different destinations.

For example, when considering a 10 Gb/s high-speed optical channel and a 1 Mb/s "high-speed" residential access, such as the one provided through xDSL services, the traffic from 10,000 such accesses will be groomed in order to fill up a single optical channel. This creates the demand for a large amount of grooming and degrooming equipment with high interface density and low cost per interface.

Grooming of data units from a large number of low speed sources to fill up a high capacity optical channel is a major challenge for network designers. Grooming and degrooming of optical channels cannot be performed in the all-optical domain (i.e., it should be done electronically with either a packet-based or a time-based approach for multiplexing and de-multiplexing).

This patent discloses that the availability of a common time reference (CTR) enables the implementation of simple and scalable time-based grooming and degrooming equipment that will interface to various optical core networks.

In accordance with the present invention, the synchronization requirements are independent of the physical link transmission speed while in circuit switching the synchronization becomes more and more difficult as the link speed increases. In accordance with some aspects of the present invention routing is performed based on timing information; in accordance with some aspects of the present invention routing is to be additionally based on information contained in at least one of an header and a trailer of time frames.

A control mode is provided by the present invention where at least one time frame or a fraction of a time frame-called control time frame and control sub-time frame, respectively-comprises signal information to establish, maintain, and disestablish (or destroy) a reserved traffic channel. The system decodes and is responsive to the control information in the time frame or time frame fraction. The switches of the present invention respond, when able, by at least one of establishing a reserved data channel, establishing a reserved transfer bandwidth, and reserving capacity for the traffic associated with the control information. Analogously, terminating control signals to each switch in a plurality of connected switches causes the switches of the present invention to respond by at least one of destroying, reallocating, and reclaiming the data transfer capacity or bandwidth that had been made available to the traffic channel.

A method is provided for coupling control information to each time frame. Such control information is used by coupled transmitting systems and receiving systems to identify at least one of: the boundaries of the time frames, the ordinal number of the time frame within the ordinal number of the time cycle within the super cycle. Deployment of this method enables the requirement on the accuracy of the common time reference to be relaxed which thereby increases the robustness and reliability of the switching systems operating responsive to the common time reference.

A system design and a method is provided for switching time frames using control information, such as a label, coupled with each time frame. In one aspect of the disclosed invention the label is contained within a header associated with each time frame. A method and system is provided for mapping a time frame onto the proper switching time and forwarding time, wherein the method for mapping is responsive to the control information, such as a label, coupled with the time frame, wherein switching and forwarding is responsive to the common time reference.

Coupling control information with each time frame enables an increase of reliability of the switching system and a reduction of accuracy requirement on the common time reference signal. In addition, one aspect of this invention comprises methods for providing protection switching by pre-allocating protection channels. In a possible embodiment, the protection channel is idle while the corresponding primary channel is carrying traffic. In an alternative embodiment, the protection channel carries the same traffic as the primary channel, while the latter is working properly. In another possible embodiment, the same protection channel is shared by a plurality of primary channels. In an alternative embodiment, a protection channel carries low priority traffic while the primary channel operates normally.

One aspect of the invention described in the present disclosure is a method and system for switching time frames using different time references in different switches. One aspect of the invention is a method for a switching system to derive the common time reference from neighboring switches in the event that the common time reference is not available through an external signal, such as the GPS. A method is also provided for enabling a plurality of switching systems to operate with the time reference generated by one of the switching systems called a reference node. The invention encompasses a method for electing the reference node in a distributed fashion.

The method for switching with different time references provides the switching systems with increased robustness and independence with regards to the availability of an external common time reference signal.

In accordance with some aspects of the present invention, a novel time frame switch fabric controller is provided which stores a predefined sequence of switch fabric configurations that are responsive to a high level controller coordinating multiple switching systems. The high level controller applies the stored predefined sequence of switch fabric configurations on a cyclical basis, having at least one of both simple periodicity and complex periodicity. The application of the stored predefined switch fabric configurations permits the switches of the present invention to relay data over predefined, scheduled, and/or reserved data channels without the computational overhead of computing those schedules ad infinitum within each switch. This frees the switch computation unit to operate relatively autonomously so that it can handle new traffic reservation requests without changing the predefined switch fabric configurations at large, due to the fact that the switch computation unit provides for finding routes for such new requests by determining how to utilize unused switch bandwidth. The computational requirements of determining a small incremental change to a switch fabric are far less than the computational requirements when having to re-compute the entire switch fabric configuration. Moreover, the bookkeeping operations associated with the incremental changes are significantly less time-consuming to track than tracking the entire state of the switch fabric as it changes over time.

A switching method is disclosed for designing multi-terabit SONET/SDH (Synchronous Optical NETwork/Synchronous Digital Hierarchy) switches. A method is provided for encapsulating SONET/SDH frames within time frames that are groomed, switched, and degroomed responsive to the common time reference. Transforming SONET/SDH frame switching into time frame switching provides for the scalability needed to design switches with aggregated switching capacity of multiple terabits/second.

Electronic components are one of the limiting factors in designing switching systems operating at very high switching rates. Optical components are independent of the bit rate of information carried by the optical signal upon which they operate. Thus, optical switch fabrics, optical filters, and waveguide grating routers enable the design of very high capacity switching systems. Components of the above listed types are changing from being static, i.e., their configuration can be changed on a long time scale, to dynamic wherein their configuration can be changed on a very short time scale.

When designing dynamic optical switching, an unresolved issue is the control of the switching configuration. Due to the lack of flexible and simple optical storage capability, optical packet switching - which provides a way of controlling the switching configuration responsive to the control information contained in the packet header - is impractical. Switching of time frames responsive to the common time reference provides a solution to the control of dynamic reconfigurable optical components.

Quickly tunable lasers are being implemented and are going to be commercially available in the near future. Switch designs based on tunable lasers and a method to control them responsive to the common time reference are disclosed in the present invention.

The present invention also discloses switch designs based on wavelength conversion and a method to control the wavelength conversion responsive to the common time reference. Optical components such as wavelength converters, tunable lasers, tunable receivers, tunable filters, passive star couplers, and passive waveguide grating routers are utilized in the disclosed designs.

Some of the disclosed embodiments are based exclusively on optical components (i.e., the disclosed systems are all-optical dynamic switching systems). The designs and methods disclosed in the present invention provide a unique path to prompt deployment and utilization of such dynamic optical components.

The subject of the invention is described in claim 1.

### BRIEF DESCRIPTION OF THE DRAWINGS:

FIG. 1 shows two switching systems interconnected with links of different speeds, operating according to the present invention;
FIG. 2A contains a timing diagram of a common time reference (CTR) that is aligned with the coordinated universal time (UTC) standard, as utilized by the present invention, wherein the CTR is divided into a plurality of contiguous periodic super cycles each comprised of 100 contiguous time cycles which are then each comprised of 800 contiguous time frames;
FIG. 2B contains a timing diagram of a common time reference (CTR) that is aligned with the coordinated universal time (UTC) standard, as utilized by the present invention, wherein the CTR is divided into a plurality of contiguous periodic super cycles each comprised of 100 contiguous time cycles which are then each comprised of 100 contiguous time frames;
FIG. 3A shows an optical switching system with the following basic components: a plurality of WDM DMUXes (de-multiplexers), a plurality of either electronic or optical alignment subsystem, an either electronic or optical switch fabric, a plurality of WDM MUXes (multiplexers).
FIG. 3B shows a two phase forwarding method illustrated across an either electronic or optical switching system, where phase 1 is for Receiving & Alignment and phase 2 is for Transmission & Switching (across the optical fabric);
FIG. 4 shows a switching system operating according to the disclosed invention wherein data units arriving during one time frame over a plurality of low capacity input channels are switched and forwarded over one high capacity output channel during a plurality of time frames, wherein the data units received during a plurality of time frames over one high capacity input channel are switched and forwarded over a plurality of low capacity output channels during one time frame;

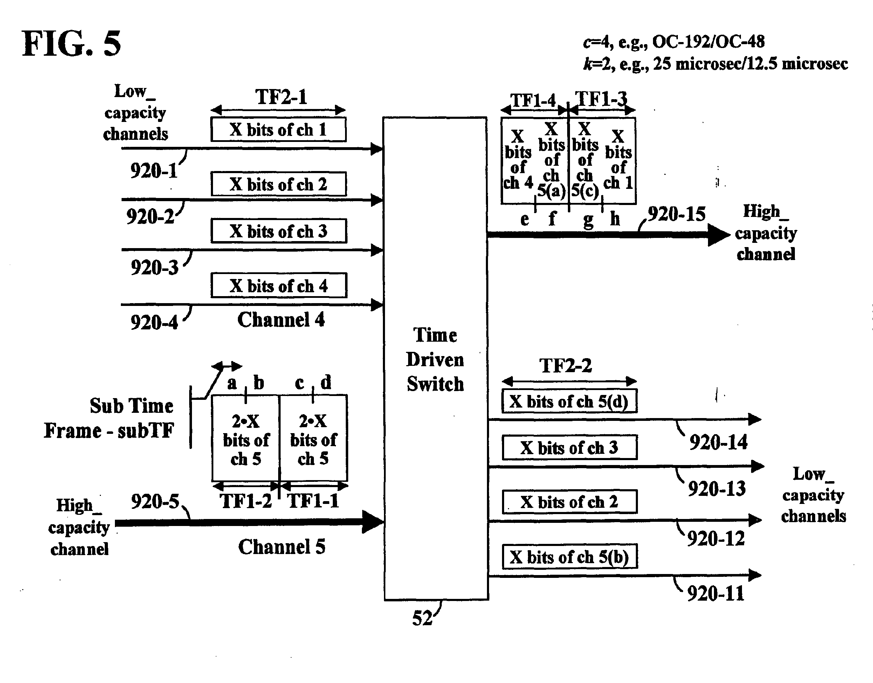

FIG. 5 shows a switching system operating according to the disclosed invention wherein data units arriving during one time frame, over a plurality of low capacity input channels; are switched and forwarded over one high capacity output channel, during a plurality of time frames and over a plurality of low capacity output channels, during one time frame, wherein data units received, during a plurality of time frames over one high capacity input channel, are switched and forwarded, over a plurality of low capacity output channels, during one time frame and over one high capacity output channel, during a plurality of time frames;
FIG. 6 shows a switching system operating according to the disclosed invention wherein data units arriving during one time frame, over a plurality of low capacity input channels, are switched and forwarded, over a plurality of low capacity output channels, during one time frame, wherein the data units received, during one time frame over one high capacity input channel, are switched and forwarded, over one high capacity output channel, during one corresponding time frame;
FIG. 7 shows the high level architecture of a time driven switch capable of multiplexing and de-multiplexing data units received and transmitted over channels with different capacity, wherein the architecture includes one alignment subsystem for each input channel, one switch fabric with a transfer rate equal to the transmission rate of the highest capacity channel, as many inputs as the number of input channels of the switch, and one rate matching buffer for each low capacity output channel;
FIG. 8 is a block diagram of an alignment subsystem comprising a plurality of queues in which incoming-data-units are stored responsive to the input channel unique time reference (UTR) and the time structure (with sub-time frame subdivision) in use within the switch, wherein data units are retrieved from the queues responsive to both the common time reference (CTR) and the time structure deployed within the switch (with sub-time frame subdivision);
FIG. 9 depicts the block diagram of a rate matching buffer (RMB) comprising at least one of a plurality of queues in which incoming data units are stored responsive to both the common time reference (CTR) and the time structure (time frame subdivision) in use on the channel coupled with the RMB, wherein data units are retrieved from the queues responsive to both the common time reference (CTR) and the time structure (time frame subdivision) in use on the channel coupled to the RMB;
FIG. 10 is the architecture of a possible implementation of a Fractional Lambda Interface. The fractional lambda interface is installed at the ingress of a network that deploys time driven switching from a networks that does not deploy time driven switching. The fractional lambda interface is responsible for mapping incoming data units on fractional lambda pipes;
FIG. 11 shows a grooming scenario in which multiple low capacity channels (OC-3, 155 Mb/s) are aggregated in a single high capacity channel (OC-768, 40 Gb/s);
FIG. 12 shows a pictorial representation of a grooming operation according to the disclosed invention wherein data units arriving during one time frame over a plurality of low capacity input channels are forwarded over one high capacity output channel during a plurality of shorter time frames;
FIG. 13 shows a functional architecture of the grooming system comprising a grooming module and a grooming controller responsive to the Common Time Reference (CTR **002**) and the Unique Time References (UTRs) of each input channel;
FIG. 14 shows a block diagram of the grooming module comprising a plurality of alignment subsystems, each responsive to the Common Time Reference (CTR **002**) and the Unique Time Reference (UTR) of the input channel coupled to the alignment subsystem;
FIG. 15 shows a degrooming scenario in which multiple low capacity channels (OC-3, 155 Mb/s) are derived from a single high capacity channel (OC-768, 40 Gb/s);
FIG. 16 shows a pictorial representation of a degrooming operation according to the disclosed invention wherein data units arriving over a single high capacity input channel are forwarded over a plurality of low capacity input channels;
FIG. 17 shows the functional architecture of a degrooming system comprising a degrooming module a degrooming controller responsive to both the Common Time Reference (CTR 002) and the Unique Time Reference (UTR) of a high capacity input channel;
FIG. 18 shows a block diagram of the degrooming module comprising at least one of a plurality of alignment subsystems, each responsive to both the Common Time Reference (CTR 002) and the Unique Time Reference (UTR) of an input channel, and at least one of a plurality of routing modules; wherein a routing module has one input channel and a plurality of output channels over which it routes data units received from an input channel;
FIG. 19 is a schematic diagram of the routing module, comprising a routing table, a plurality of queues, and a routing controller that determines to which output port an incoming data unit should be switched;
FIG. 20 shows a scenario in which a time driven switching network, also called fractional lambda switching network, provides transport for SONET/SDH channels thus offering SONET connectivity among SONET cross-connects, SONET Add/Drop Multiplexers, and SONET equipment, such as PBXs, wherein fractional lambda interfaces are deployed at the interface between the SONET devices and the time driven switching network;
FIG. 21 shows four possible scenarios of time framing and multiplexing of SONET STS-48 frames received from a SONET network and forwarded on a time driven switching network;
FIG. 21A exemplifies the time framing of whole STS-48 frames - one STS-48 frame for each time frame;
FIG. 21B exemplifies the time framing of STS-12 frames de-multiplexed from the original STS-48 frames - one or more STS-12 frames for each time frame;
FIG. 21C shows the multiplexing of entire STS-48 frames time framed in different time frames;
FIG. 21D shows the multiplexing of STS-12 frames de-multiplexed from the original STS-48 frame;
FIG. 22 shows four possible scenarios of time framing and multiplexing of SONET STS-48 frames received from a SONET network and forwarded over a time driven switching network;
FIG. 22A exemplifies the time framing of a fraction of an STS-48 frames - one STS-48 frame is time framed over a plurality of consecutive time frames;
FIG. 22B exemplifies the time framing of a fraction of an STS-48 frames - one STS-48 frame is time framed over a plurality of consecutive time frames, wherein the same time frame possibly contains fractions from a plurality of STS-48 frames;
FIG. 22C shows the multiplexing of entire STS-48 frames time framed in different time frames, wherein each STS-48 frame is time framed over a plurality of consecutive time frames;
FIG. 22D shows the multiplexing of fractions of STS-48 frames time framed in a plurality of non-consecutive time frames, wherein fractions of different STS-48 frames can be time framed in consecutive time frames;
FIG. 23A shows a diagram of the functions to be performed in order to provide SONET/SDH services over a time driven switched network, i.e., in order to carry STS-N frames over a time driven switched network and reconstruct the original OC-N channel at the egress of the time driven switching network;
FIG. 23B is the high level architecture of a fractional lambda interface used to provide SONET services;
FIG. 24 shows the architecture of the ingress module of a fractional lambda interface for mapping SONET channels onto fractional lambda pipes;
FIG. 25 shows the architecture of the egress module of a fractional lambda interface for mapping fractional lambda pipes onto SONET channels;
FIG. 26 shows four possible scenarios of time de-framing of SONET STS-48 frames received from a time driven switching network and forwarded on a SONET network;
FIG. 27 shows four possible scenarios of time de-framing of SONET STS-48 frames received from a time driven switching network and forwarded on a SONET network;
FIG. 28A depicts the structure of a SONET (Synchronous Optical NETwork) frame used for transmission at about 50 Mb/s (STS-1 channel;
FIG. 28B depicts the structure of a SONET (Synchronous Optical NETwork) frame used for transmission integer multiple N of STS-1- which is STS-N;
FIG. 29 is a pictorial representation of the alignment principle wherein unaligned time frames on all the inputs are aligned to the common time reference prior to being switched;
FIG. 39A is a block diagram of a time driven tunable laser comprising a tunable laser-scheduling controller for changing the laser wavelength responsive to the common time reference;

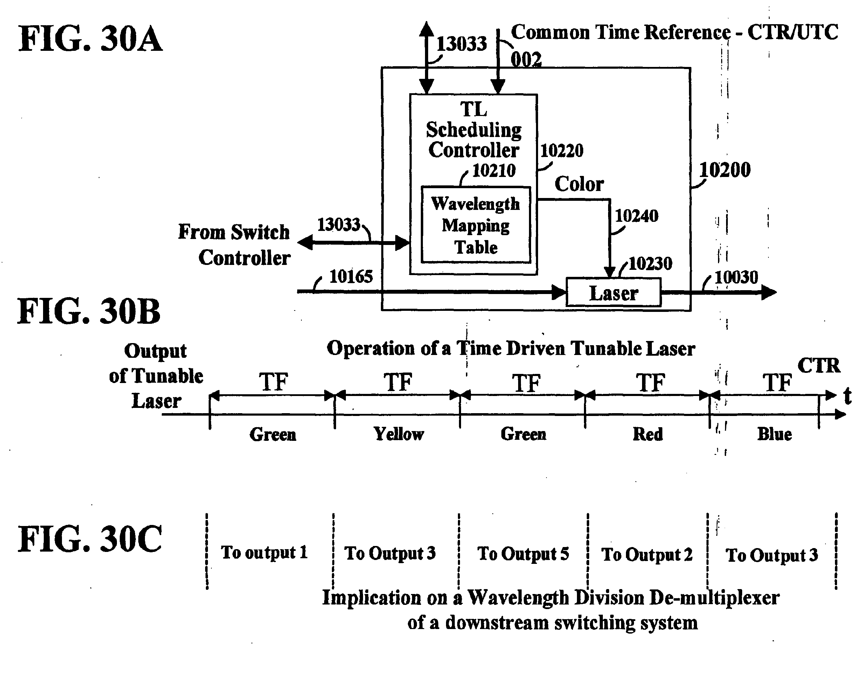

FIG. 30B is a timing diagram showing the wavelength generated by the time driven tunable laser during subsequent time frames;
FIG. 30C shows an output port selected on the downstream switch as a consequence of the usage of a selected wavelength during a selected time frame;

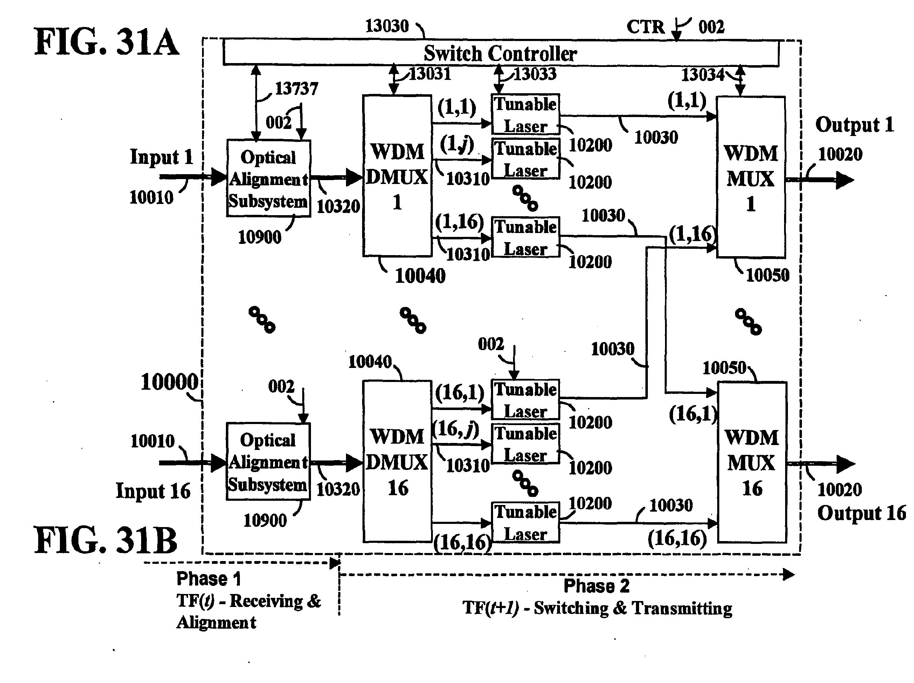

FIG. 31A is an architecture of a switching system responsive to the common time reference (CTR) based on tunable lasers and comprising a switch controller, a plurality of WDM de-multiplexers, a plurality of optical alignment subsystems - one for each input line -, a plurality of WDM multiplexers, and a plurality of optical interconnections;
FIG. 31B is a timing diagram of a switching operation that is responsive to the common time reference with two pipeline forwarding phases: (i) receiving & alignment and (ii) switching & transmitting;

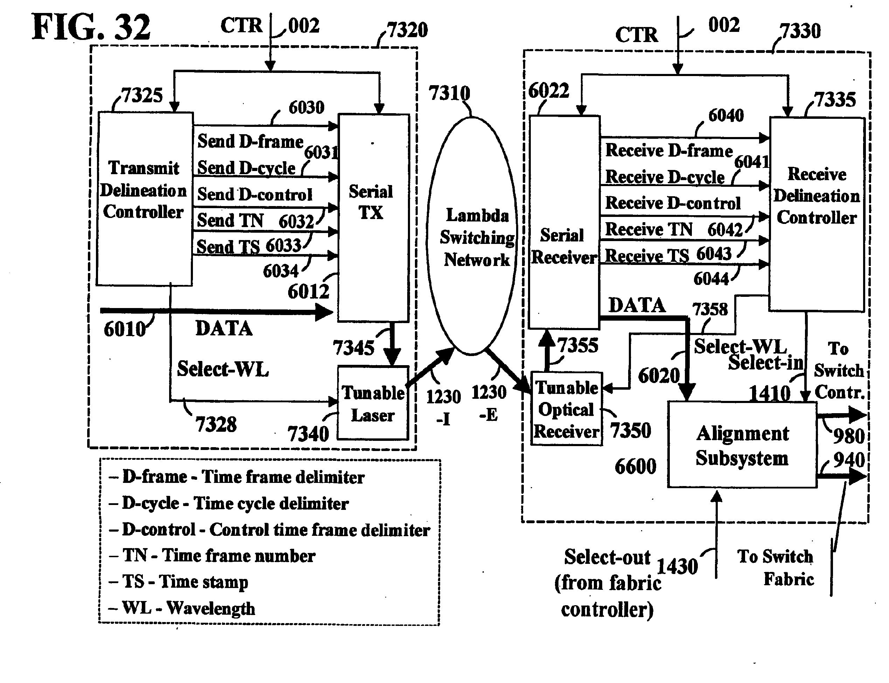

FIG. 32 shows a communications system responsive to the common time reference wherein data units are associated to a specific time frame, wherein such data units are transmitted over a specific wavelength across a Wavelength Division Multiplexing (WDM) network (or lambda switching network) whose network nodes (called wavelength routers or lambda routers) possibly route different wavelengths towards different destinations;

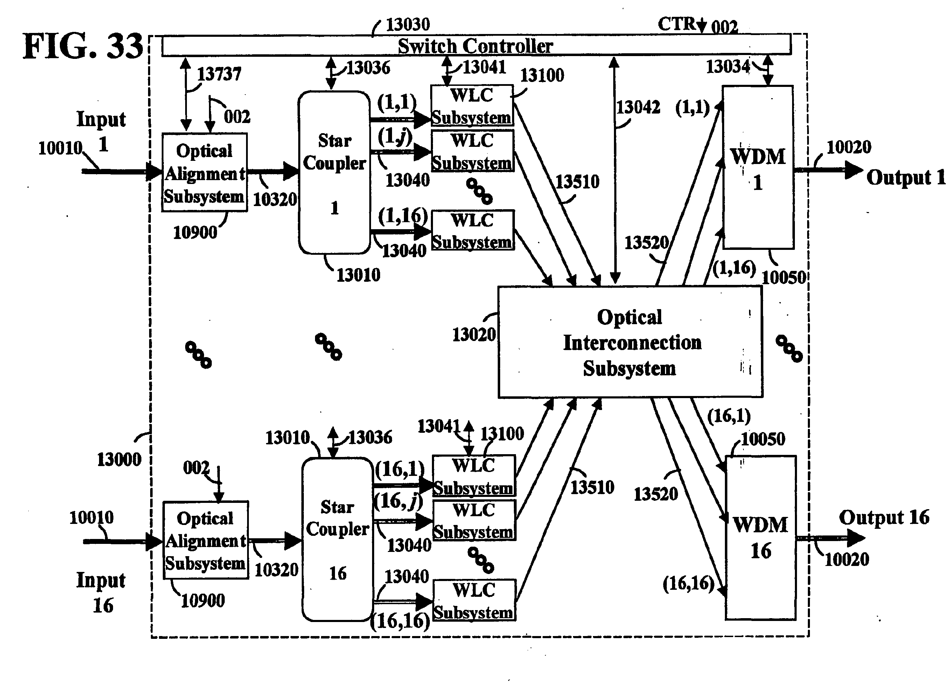

FIG. 33 is an architecture of a switching system responsive to the common time reference (CTR) based on wavelength conversion (WLC) subsystems and comprising a switch controller, a plurality of optical alignment subsystems - one for each input line -, a plurality of star couplers, a plurality of wavelength division multiplexers (WDMs), and an optical interconnection subsystem between WLC subsystems and WDMs;

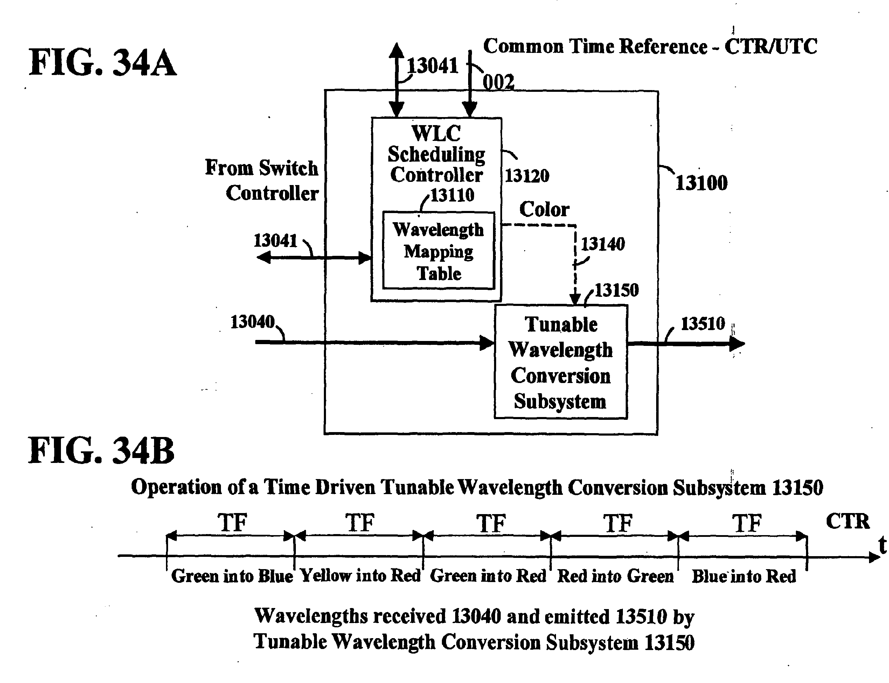

FIG. 34A is the block diagram of a wavelength conversion subsystem comprising a wavelength conversion (WLC) scheduling controller for changing the converted wavelength and possibly the emitted wavelength responsive to the common time reference and to a wavelength mapping table;
FIG. 34B is a timing diagram showing the wavelength received by the wavelength conversion subsystem during subsequent time frames;

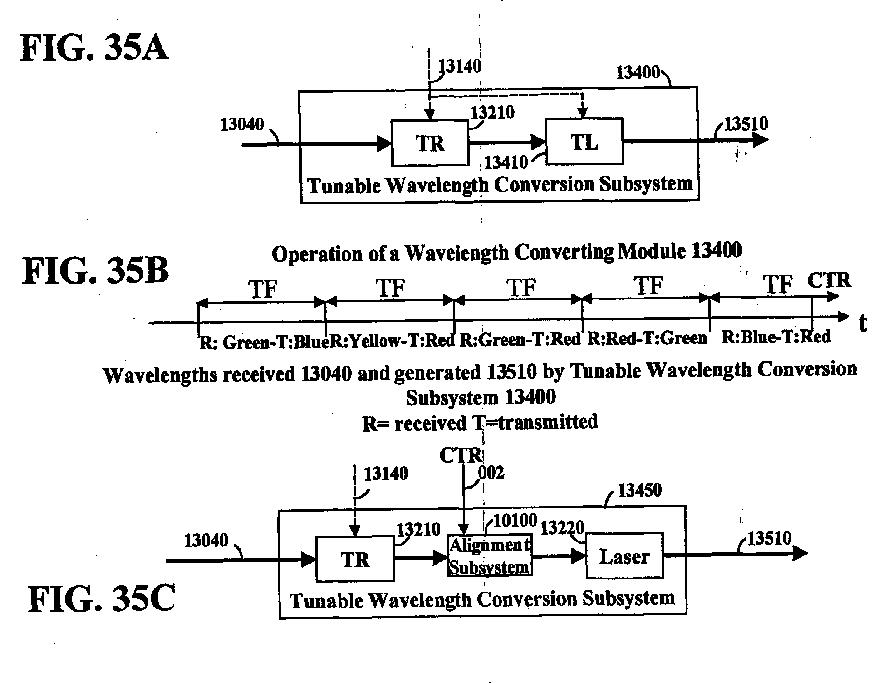

FIG. 35A is a block diagram of a possible embodiment of tunable wavelength conversion subsystem comprising a tunable receiver (TR) and a tunable laser (TL) both responsive to a color control signal;
FIG. 35B is a timing diagram showing the wavelength received by the tunable receiver (TR) and the wavelength generated by the tunable laser (TL) during subsequent time frames;
FIG. 35C is a block diagram of a possible embodiment of tunable wavelength conversion subsystem comprising a tunable receiver (TR) responsive to a color control signal, an alignment subsystem responsive to the common time reference (CTR), and a fixed laser; and

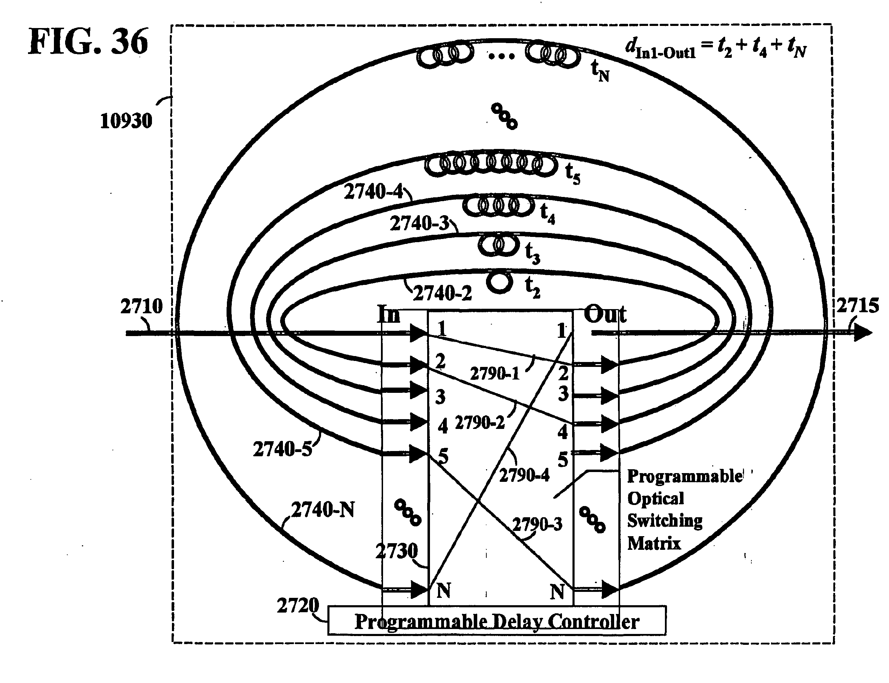

FIG. 36 shows a possible embodiment of optical programmable delay system based on a programmable optical switching matrix and a set of fiber connections between switch outputs and switch inputs.

### DETAILED DESCRIPTION OF THE PREFERRED EMBODIMENT:

While this invention is susceptible of embodiment in many different forms, there is shown in the drawings and will be described herein in detail, specific embodiments thereof with the understanding that the present disclosure is to be considered as an exemplification of the principles of the invention and is not intended to limit the invention to the specific embodiments illustrated.

The present invention relates to a system and method for switching and forwarding data units over a network with optical WDM (wavelength division multiplexing) links. The switches of the network maintain a common time reference (CTR), which is obtained either from an external source (such as GPS - Global Positioning System, or GLONASS, or Galileo) or is generated and distributed internally. The common time reference is used to define time intervals, which include super cycles, time cycles, time frames, sub-time frames, and other kinds of time intervals. The time intervals are arranged in both simple periodicity and complex periodicity (i.e., like seconds and minutes of a clock).

A data unit that arrives to an input port of a switch or a grooming or de-grooming system is switched to an output port based on either arrival time information and/or specific routing information in the data unit's header (e.g., IPv4 destination address in the Internet, VCI/VPI labels in ATM, MPLS-multi-protocol label switching-labels). Each switch along a route from a source to a destination forwards data units in periodic time intervals that are predefined using the common time reference.

A system is provided for managing data transfer of data units from a source to a destination. The transfer of the data units is provided during a predefined time interval, comprised of a plurality of predefined time frames. The system is further comprised of a plurality of switches. A common time reference signal is coupled to each of the switches, and a time assignment controller assigns selected predefined time frames for transfer into and out from each of the respective switches responsive to the common time reference signal.

Each communications channel may use a different time frame duration generated from the common time reference signal. Data units received during at least one of a plurality of time frames over at least one of a plurality of input channels can be transmitted during a single time frame over a single output channel. Data units received during a single time frame from an input link are transmitted during at least one of a plurality of time frames over at least one of a plurality of output links.

For each switch, there is a first predefined (optical) channel and first predefined time frame within which a respective data unit is transferred into the respective switch, and a second predefined (optical) channel and a second predefined time frame within which the respective data unit is forwarded out of the respective switch, wherein the first and second predefined time frames may have different durations. The time assignment provides consistently fixed time intervals between the input to and output from the fractional lambda pipe.

In a preferred embodiment, there is a predefined subset of the predefined time frames during which the data units are transferred in the switch, and for each of the respective switches, there is a predefined subset of the predefined time frames during which the data units are transferred out of the switch.

For each of the data units, there is an associated time of arrival to a respective input port. The time of arrival is associated with a particular predefined time frame. For each of the mappings by the routing controller, there is an associated mapping by a scheduling controller, which maps each of the data units between the time of arrival and forwarding time out. The forwarding time out is associated with a specified predefined time frame.

There is a fixed time difference between the time frames for the associated time of arrival and forwarding time out for each of the data units. A predefined interval is comprised of a fixed number of contiguous time frames comprising a time cycle. Data units that are forwarded over a given fractional lambda pipe are forwarded from an output port within a predefined subset of time frames in each time cycle.

The time frames associated with a particular switches within the fractional lambda pipe are associated with the same switch for all the time cycles, and are also associated with one of input into or output from the particular respective switch.

In one embodiment of the present invention, there is a constant fixed time between the input into and output from a respective one of the switches for each of the time frames within each of the time cycles. A fixed number of contiguous time cycles comprise a super cycle, which is periodic. Data units that are forwarded over a given fractional lambda pipe are forwarded from an output port within a predefined subset of time frames in each super cycle. Furthermore, the number of data units that can be forwarded in each of the predefined subsets of time frames within a super cycle for a given fractional lambda pipe is also predefined.

In the preferred embodiment, the common time reference signal is devised from the GPS (Global Positioning System), and is in accordance with the UTC (Coordinated Universal Time) standard. The UTC time signal does not have to be received directly from GPS. Such a signal can be received through various means, as long as the delay or time uncertainty associated with that UTC time signal does not exceed half a time frame. In an alternative embodiment the UTC signal is received from at-least one of the Russian Global Navigation Satellite System (GLONASS) and the European Galileo system.

In one embodiment, the super cycle duration is equal to one second as measured using the UTC (Coordinated Universal Time) standard. In an alternate embodiment the super cycle duration spans multiple UTC seconds. In another alternate embodiment the super cycle duration is a fraction of a UTC second. In a preferred embodiment, the super cycle duration is a small integer number of UTC seconds.

Data units can be Internet Protocol (IP) data packets, multi-protocol label switching (MPLS) data packets, Point-to-Point Protocol (PPP) frames, High-level Data Link Control (HDLC) frames, Frame Relay frames, fiber channel data units, asynchronous transfer mode (ATM) cells, or SONET/SDH frames.

In accordance with one aspect of the present invention, a system is provided for transferring data units across a data network while maintaining for reserved data traffic, constant bounded jitter (or delay uncertainty), and no congestion-induced loss of data units. Such properties are essential for many multimedia applications, such as telephony and video teleconferencing.

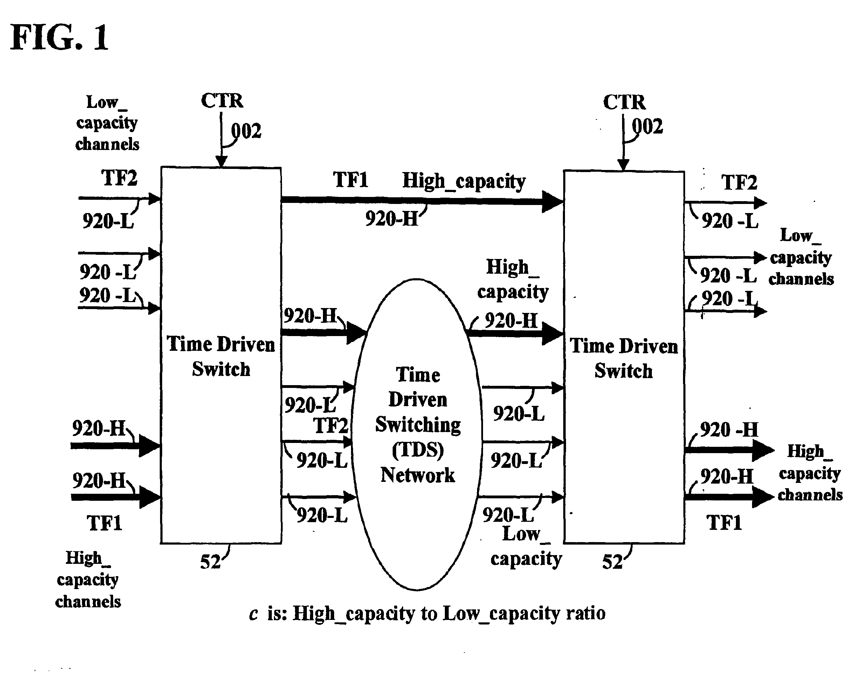

In accordance with one aspect of an illustrated implementation of the present invention, as shown in FIG. 1, two or more switching systems 52 can be connected through one or more links comprising a plurality of channels having at least one of a plurality of transmission capacities. Each switching system is responsive to a common time reference (CTR) signal 002 which can be implemented, among other ways, by using the timing signal provided by the global positioning system (GPS) or other positioning systems such as GLONASS and Galileo. The switching systems move data units received at input ports to selected output ports according to the time driven switching operating principles.

### Time Frames and Time Cycles

FIG. 2 is an illustration of a common time reference (CTR) that is aligned to UTC. Consecutive time frames are grouped into time cycles. FIG. 2A and FIG. 2B provide examples of the common time reference (CTR) organized according to time frames of two different durations. As shown in the example illustrated in FIG. 2A, there are 800 time frames in each time cycle, where each time frame lasts 12.5 microseconds. For illustration purposes, the time frames within a time cycle are numbered 1 through 800. According to the example shown in FIG. 2B, there are 100 time frames in each time cycle, where each time frame lasts 125 microseconds. For illustration purposes, the time frames within a time cycle are numbered 1 through 100.

Time frames having a different duration can be used for transmission over channels with a different capacity. FIG. 2A provides an example in which 15.325 microseconds time frames are coupled to OC-192 (2.4 Gb/s) channels, while FIG. 2B exemplifies the coupling of 125 microseconds time frames with OC-3 (155 Mb/s) channels. In FIG. 2 the ratio c between the transmission speed of a high capacity channel and the transmission speed of a low capacity channel is defined. In the example in FIG. 2, c is 64.

As shown in FIG. 2, consecutive time cycles are grouped together into super cycles, and there are 100 time cycles in each super cycle. For illustration purposes, time cycles within a super cycle are numbered 0 through 99. Super cycles 0 and m are shown in FIG. 2. Time cycles of different durations can be coupled with channels that deploy time frames of different durations. Equivalently, super cycles comprised of a different number of time cycles can be coupled with different channels that deploy time frames having different durations.

FIG. 2 is illustrative of the relationship between time frames, time cycles, and super cycles; in alternate embodiments, the number of time frames within a time cycle may be different than 100 or 800, and the number of time cycles within a super cycle may be different than 100.

FIG. 2 illustrates how the common time reference signal can be aligned with the UTC (Coordinated Universal Time) standard. In this illustrated example; the duration of every super cycle is exactly one second as measured by the UTC standard. Moreover, as shown in FIG. 2, the beginning of each super cycle coincides with the beginning of a UTC second. Consequently, when leap seconds are inserted or deleted for UTC corrections (due to changes in the earth's rotation period), the cycle and super cycle periodic scheduling will not be affected. The time frames, time cycles, and super cycles are each associated in the same manner with all respective switches within a fractional lambda pipe at all times.

In the embodiment illustrated in FIG. 2, the super cycle duration is equal to one second as measured using the UTC (Coordinated Universal Time) standard. In an alternate embodiment the super cycle duration spans multiple UTC seconds. In another alternate embodiment the super cycle duration is a fraction of a UTC second. In another embodiment, the super cycle duration is a small integer number of UTC seconds. A time frame may be further divided into time slots in the preferred embodiment, not illustrated in FIG. 2.

### Fractional Lambda Interface

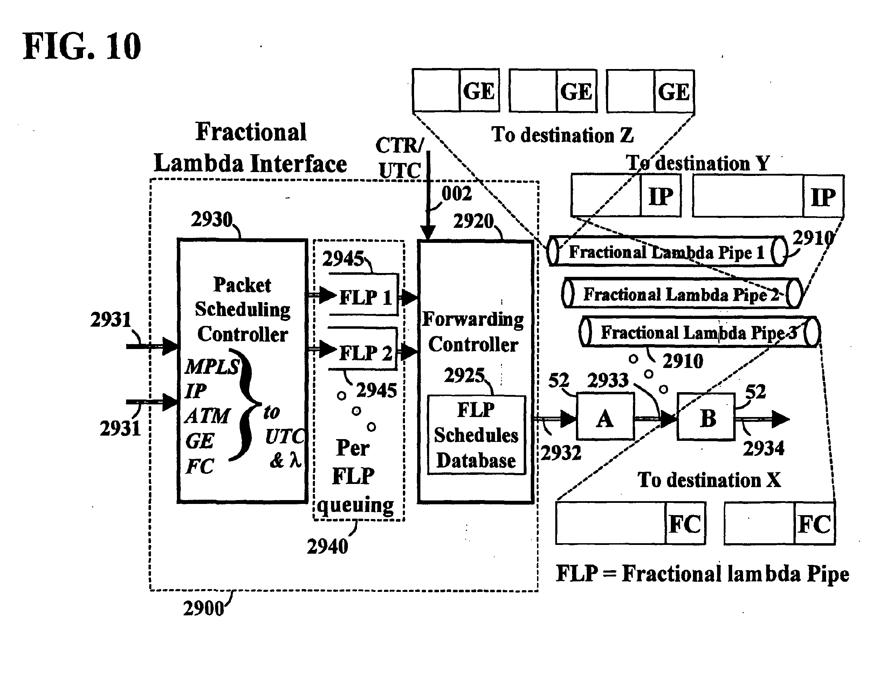

A time driven switch **52,** also called fractional lambda switch, in FIG. 1 is capable of switching the data units received through a selected input optical channel to at least one of a plurality of output optical channels (also called wavelength or lambdas) coupled to at least one of a plurality of optical fibers (also called optical links). As shown in FIG. 10, data units that time driven switches are required to switch in the same way (from the same input channel to the same output channel) are associated with a Fractional Lambda Pipe (FLP) **2910** in FIG. 10. Data units belonging to a plurality of protocols can be carried on the same optical link (i.e., switched by one switching system). Data units belonging to different protocols are associated with different FLPs.

FIG. 10 shows 3 Fractional Lambda Pipes (FLPs) defined across the time driven switches **A** and **B**. FLP 1 carries Gigabit Ethernet (GE) frames that have to be delivered to destination **Z**, FLP 2 carries IP packets to destination **Y**, and FLP 3 carries Fiber Channel (FC) data units to destination **X**. A deterministic quality of service is guaranteed by reserving resources to each FLP. In the context of time driven switching, also called fractional lambda switching, resources are reserved to an FLP by requiring and being granted exclusive access to an output channel during at least one of a plurality of time frames or time frame fractions.

A Fractional Lambda Interface (**2900** in FIG. 10) at the boundary of a subnetwork that is not deploying time driven switching is responsible for mapping incoming data units on fractional lambda pipes (FLPs). The mapping is based on either control information carried in the data units' header-in case of packet switching-or the data units' arrival time-in case of circuit switching.

FIG. 10 shows the block diagram of the preferred embodiment of fractional lambda interface **2900**. A Packet Scheduling Controller **2930** processes data units (for example asynchronous packets or SONET frames) arriving from at least one of a plurality of input channels **2931**. Based on information contained in the packet header - such as an MPLS label, or the destination address in an IP packet, or the VCI/VPI in an ATM cell, or other header fields - or the time position of a SONET STS-N frame in a multiplexed STS-M frame, where M>N, the Packet Scheduling Controller **2930** identifies the fractional lambda pipe **2910** to which the data unit belongs. The relevant header information is used for example, as a lookup key, to retrieve fractional lambda pipe information from a pre-computed table.

Once processed by the Packet Scheduling Controller **2930** in FIG. 10, data units are stored in a per fractional lambda pipe (FLP) queuing system **2940**. The per fractional lambda pipe (FLP) queuing system **2940** comprises a multiplicity of queues **2945.** Each queue is associated with one fractional lambda pipe. The Forwarding Controller **2920** retrieves the data units contained in a specific queue **2945** during each of the time frames reserved to the associated fractional lambda pipe **2910**.

Another implementation of a fractional lambda interface features a per time frame queuing system that contains one queue for each time frame in the time cycle. For each data unit, the Packet Scheduling Controller **2930** in FIG. 10 uses the control information associated with the data unit as a key to a fractional lambda pipe schedules table to retrieve the pointers to the queue in which the data unit should be stored. Multiple ways exist according to which the Packet Scheduling Controller **2930** can choose the specific queue in which to store a data unit. One possible implementation consists in choosing the first queue that will be served (i.e., the one associated with the next time frame to come which is reserved for the fractional lambda pipe **2910** to which the data unit belongs).

At each time frame, the Forwarding Controller **2920** in FIG. 10 retrieves and forwards on the line **2932** towards a time driven switch **52** data units stored in the queue associated with the fractional lambda pipe **2910** to which the given time frame has been reserved. The current time frame is identified in accordance with the Common Time Reference **002**.

At the beginning of a new time frame the Forwarding Controller **2920** in FIG. 10 may change the queue **2945** from which data units are retrieved. The new queue **2945** is identified by consulting the FLP schedules database **2925**, which contains among other information, the fractional lambda pipe to which each time frame had been reserved.

Each of the per-fractional lambda pipe queues **2945** can be logically organized in a plurality of sub-queues. When retrieving data units from each of the queues **2945**, the Forwarding Controller **2920** can apply a variety of scheduling algorithms, such as FIFO, simple priority, round robin, weighted fair queuing, to the plurality of sub-queues. The order in which data units are retrieved from the various sub-queues (i.e., the relative priority of the sub-queues) depends on the adopted queue management policy.

With reference to the preferred embodiment comprising a per FLP queuing system **2940**, all the data units that happen to be remaining in a queue **2945** by the end of a time frame will be served during the upcoming time frames reserved to the fractional lambda pipe **2910** associated with the given queue **2945**.

The fractional lambda interface **2900** can have multiple lower capacity input lines **2931** that are aggregated on the same higher speed output line **2932**. In other words, data units are received from multiple input lines **2931**, sorted in the queues **2945** of the same per-FLP queuing system **2940**, from which the Forwarding Controller **2920** retrieves data units for transmission on the output channel **2932**.

The Forwarding Controller **2920** can be comprised of a plurality of Forwarding Controllers, each one associated with at least one of the output channels **2932.** There can be a plurality of sets of queues **2940**, each set comprising at least one queue **2945**, wherein each set **2940** is associated with one of the Forwarding Controllers **2920**.

The Forwarding Controller **2920** in FIG. 10 can retrieve data units from more than one queue **2945** and forward them on more than one output channel **2932**. In this case the FLP Schedules database **2925** provides for each selected time frame, the FLP **2910**, to which the selected time frame has been reserved on each of the output channels **2932**. Thus, each time frame can be reserved to zero (not reserved) FLPs, to one FLP, to as many FLPs **2910** as the number of output channels **2932**, or a number of FLPs larger than the number of output channels **2932**, in the case where more than one FLP share the same time frame on the same channel **2932**.

The Fractional Lambda Interface **2900** in FIG. 10 can comprise a plurality of Forwarding Controller Modules **2920** each associated with at least one of a plurality of asynchronous data units streams (packet streams) or synchronous streams (circuit switched channels).

### Switching with Pipeline Forwarding with a Plurality of Time Frame Durations and a Plurality of Channel Capacities

One of the aspects of the disclosed invention is related to the capability of forwarding, over the same output channel during the same time frame, data units received during at least one of a plurality of time frames over at least one of a multiplicity of incoming channels. This operation is known as multiplexing and takes place at least at one of two different levels.

Multiplexing can be done at the channel capacity level by aggregating data units from a plurality of low capacity channels on a single high capacity channel. In a possible scenario of channel capacity level multiplexing, the sum of the capacity of the incoming channels equals the capacity of the output channel.

Multiplexing can be done at the time frame level by transmitting, during the same time frame, data units received during the same time frame on a plurality of input channels. In another scenario, time frame level multiplexing is realized by transmitting, during the same time frame, data units received during a plurality of time frames on a single input channel. In another scenario, time frame level multiplexing is realized by transmitting, during the same time frame, data units received during a plurality of time frames over a plurality of input channels. In a possible scenario of time frame level multiplexing, the sum of the time frame durations employed at the incoming channels equals the duration of the time frame employed at the output channel.

Multiplexing at the channel capacity level or at both the channel capacity and time frame level is called grooming. Grooming refers in general to the capability of aggregating data units received on a plurality of low capacity channels over a single higher capacity channel.

Data units received by a time driven switch **52** in FIG. 1 over one of its input channels during a first time frame are forwarded by the time driven switch over a predefined one of its output channels during a predefined second time frame, wherein the second time frame is either the one immediately following the first one, such that this operation is called immediate forwarding, or the second time frame is another one of the time frames following the first time frame, such that this operation is called non-immediate forwarding. If the first time frame in which the data units are received is predefined, the second time frame is consequently predefined. This in turn makes the time frame, in which the data units will be received by a downstream time driven switch 52, predefined.

For example, in FIG. 10 once the time frame during which the Fractional Lambda Interface transmits on its output channel **2932** data units belonging to a FLP is known, given the type of forwarding (immediate or non-immediate) performed by the time driven switches **A** and **B** on the path of the FLP, the time frame during which the data units will be forwarded on each of the communications channels **2933** and **2934** will be uniquely determined.

In other words the time frames, in which data units belonging to a given FLP are transmitted over each of the traversed links, are strictly coupled. Once a time frame used on any one of the communications links traversed by the FLP is determined, each corresponding one of the time frames used on all the other links traversed by the FLP is univocally determined, given the type of forwarding (immediate or non-immediate) performed by the time driven switches traversed by the FLP.

In order to properly reserve switching capacity in the time driven switches **52** (A and **B** in the example shown in FIG. 10) and transmission capacity over the communications channels (**2932**, **2933**, and **2934** in the example shown in FIG. 10) traversed by an FLP, a scheduling problem has to be solved for finding the number of time frames required to provide the desired capacity to the FLP, wherein the chosen time frames are not already used for switching and transmitting data units belonging to another FLP on any of the traversed switches **52** and communications channels, wherein each chosen time frame on each one of the links traversed by the FLP is properly coupled to the corresponding time frame chosen on the other communications links traversed by the FLP, given the type of forwarding (immediate or non-immediate) performed by the time driven switches traversed by the FLP.

### The Two Phases Operation

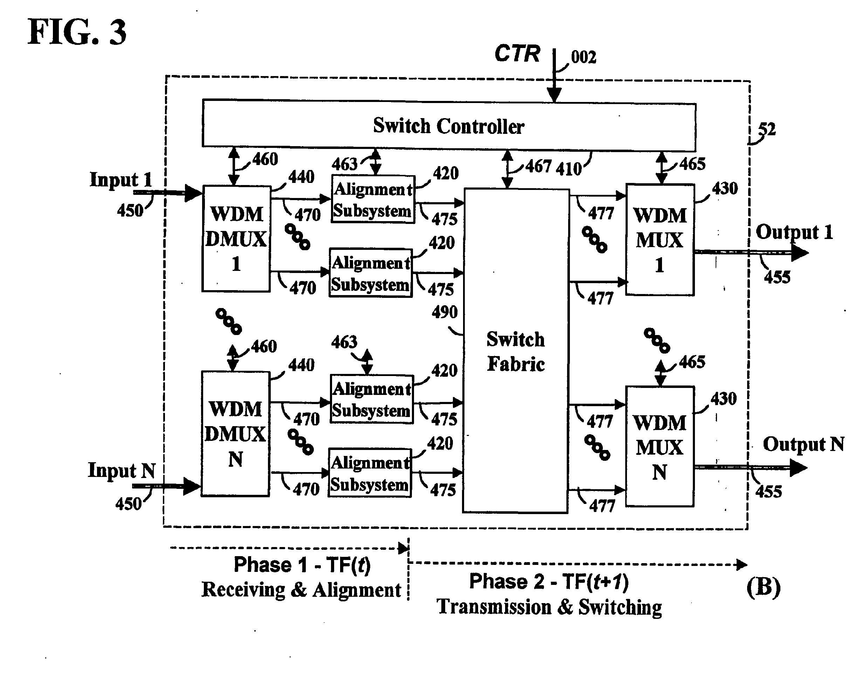

In a (all-optical) time driven switch, pipeline forwarding (PF) is realized in two operational phases, as shown in FIG. 3B. Data units belonging to a whole time frame received from each of the optical channels 470 during the first phase, Phase 1, are switched through the switch fabric 490 in the second phase, Phase 2. In a possible embodiment, if Phase 1 begins in time frame t, Phase 2 takes place in time frame t+1. In another embodiment, if Phase 1 ends in time frame t, Phase 2 takes place in time frame t+1. The 2 phase operation ensures that data units received from the various optical channels are aligned with the CTR before being switched. Phase 2 can be performed during either the time frame immediately following Phase 1, during time frame t+1 - immediate forwarding operation, or at a later time frame - non-immediate forwarding operation.

Alignment serves to align the beginning and end of each time frame on each optical channel with the beginning and end of the CTR time frames. The alignment is needed since the propagation delay on optical links between switches 52 is not an integer number of time frames. The alignment subsystem 420 shown as part of the fractional lambda switch in FIG. 3A operates on one of the wavelengths carried by each optical fiber 450, and is part of Phase 1 of PF. The alignment subsystem is based on a plurality of queues guaranteeing that the overall delay experienced through the optical fiber 450 and the alignment subsystem 420 is an integer number of time frames. As a result, when data units - that have left the switch 52 at the transmitting end of a fiber 455 aligned with the CTR - exit the alignment subsystem 420 at the receiving end are again aligned with respect to CTR. Various embodiments of the alignment subsystem **420** will be presented in the reminder of this disclosure.

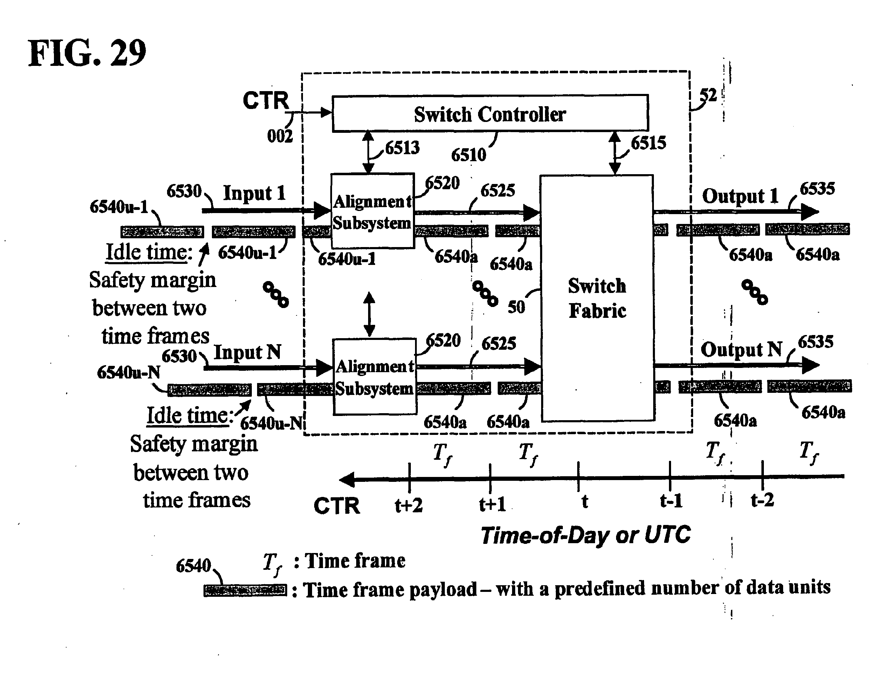

The alignment principle is exemplified in FIG. 29. Time frames received on the input links **6530** are not aligned with the CTR. Each time frame contains a payload **6540;** an idle time acts as a safety margin separating the payloads **6540** of adjacent time frames. The payloads 6540u of the time frames on the input links **6530** are not aligned with the CTR. Time frame payloads received from different input links **6530** are not necessarily aligned among themselves (see for example **6540u-1** and **6540u-N** in FIG. 29).

An alignment subsystem **6520** coupled with each input **6530** delays incoming, unaligned time frame payloads **6540u** such that time frame payloads **6540a** are aligned upon exiting the alignment subsystem **6520.** Time frame payloads **6540a** on all the inputs **6525** of the switch fabric **50** are aligned to the CTR. Time frame payloads **6540** switched to the outputs **6535** are all aligned to the CTR.

The ratio between the switch reconfiguration time (i.e., the idle time between time frames) and the time frame duration represents the switching overhead. In order to keep the switching overhead acceptable, the time frame duration must be significantly larger than the switch reconfiguration time. On the other hand, the time cycle size (i.e., the number of time frames in each time cycle) determines the minimum capacity that can be allocated to an FLP. The channel capacity, time frame duration, and time cycle size determine the maximum access time to the FLP, (i.e., the maximum delay a data unit experiences before entering an FLP while waiting for the first time frame allocated to its FLP).

### Time Frame Switching with Different Time Frame Durations

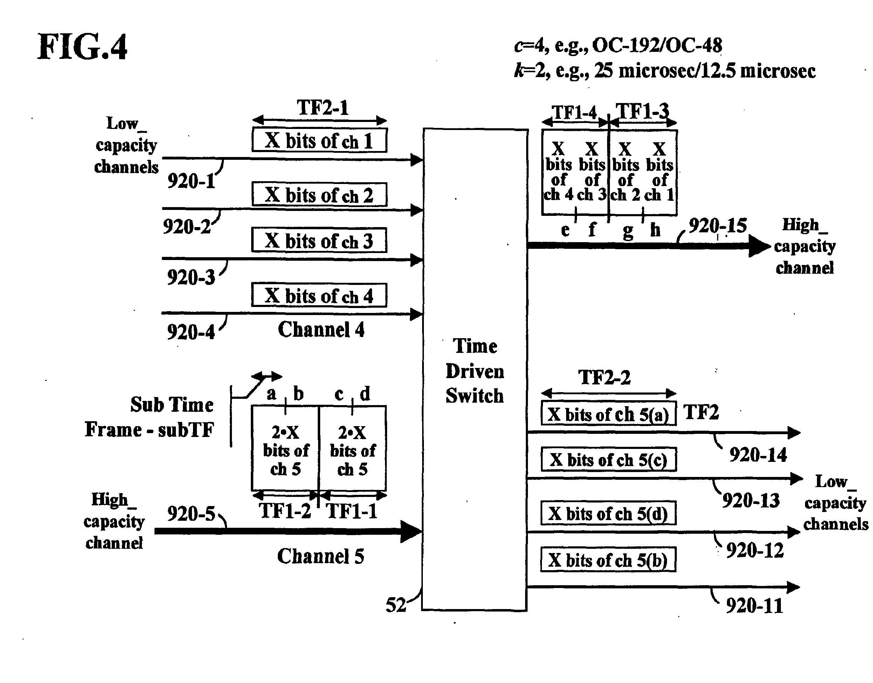

FIG. 4, FIG. 5, and FIG. 6 provide a logical view of the operation of a time driven switch **52** equipped with channels with different capacities. The switching systems depicted in FIG. 4, FIG. 5, and FIG. 6 have channels of two different capacities: four low capacity input channels **920-1** through **920-4** and four low capacity output channels **920-11** through **920-14,** all eight of capacity: **Low_capacity;** and one high capacity input channel **920-5** and one high capacity output channel **920-15,** both of capacity: **High_capacity.** For example the four low capacity channels could be OC-48 SONET channels (**Low_capacity**=2.4 Gb/s) and high capacity channels could be OC-192 SONET channels (**High_capacity**=9.6 Gb/s). Channels **1920-1** though 4 **920-4** and channels 11 **920-11** through 14 **920-14** are low capacity channels; channels **5 920-5** and 15 **920-15** are high capacity channels. Time frames of duration **TF2** are deployed on low capacity channels; time frames of duration **TF1** are employed on high capacity channels. Sample durations are **TF1**=12.5 microseconds and **TF2=**25 microseconds, yielding ***k*=TF1/TF2=2.** Time driven switches could be equipped with channels having more than two different capacities and employing more than two different time frame durations. The principles underlying the switching system operation and the multiplexing and de-multiplexing of data units are not conceptually different from the ones exemplified in FIG. 4, FIG. 5, and FIG. 6.

FIG. 4, FIG. 5, and FIG. 6 are examples of how data units received on a mixture of low capacity and high capacity channels can be forwarded by a time driven switch over a mixture high capacity and low capacity channels, wherein data units from separate input channels could be aggregated on the same output channel and data units on the same input channel can be separated for transmission over a plurality of output channels.

In the example in FIG. 4, data units received during a predefined time frame **TF2-1** of duration **TF2** on the low capacity input channels **920-1** to **920-4** are transmitted on the high capacity output channel **920-15**. The data units received on channel 1 **920-1,** comprising **X** bits, are transmitted on the output channel **920-15** during a first predefined sub-time frame **h** - having duration **subTF** - of a first predefined time frame **TF1-3** of duration **TF1.** The **X** bits of data units received on channel 2 **920-2** are forwarded over the output channel **920-15** during the second sub-time frame **g** of the first predefined time frame **TF1-3.** Data units received during the predefined time frame **TF2-1** on input channels 3 **920-3** and 4 **920-4** are transmitted on the output channel **920-15** during specific predefined sub-time frames **f** and **e**, respectively, within a second predefined time frame **TF1-4.**

The mapping between a specific time frame on a specific input channel and a specific sub-time frame on an output channel is repeated cyclically, for example over each time cycle, or each super cycle, or a multiple thereof. The specific time frame and sub-time frame therein upon which an incoming time frame and input channel are mapped can be fixed or changed in each cyclical mapping. Each time frame in a time cycle or super cycle can have a different mapping. The same mapping can be used for more than one time frame in the same cycle or super cycle.

Data units can be identified as belonging to different time frames and sub-time frames by means of delimiters introduced during the transmission operation. Explicit delimiters can be realized by one of a plurality of different methods. There can be a different delimiter control word to signal the beginning of a new time frame (i.e., a time frame delimiter - TFD), sub-time frame, time cycle (i.e., a time cycle delimiter - TCD) and super cycle (i.e., a super cycle delimiter - SCD). The explicit delimiter signaling can be realized by the SONET/SDH path overhead field that was design to carry control, signaling and management information. An implicit delimiter can be realized by measuring the UTR time with respect to the CTR. An alternative way of implementing an implicit delimiter is by counting the number of bytes from an explicit delimiter.

Alternatively, time frame delineation can be based on time frame delimiter in the optical signal carried on the communications link coupled to input i. A possible embodiment of time frame delimiter consists of dedicating one of the wavelengths of the communications link for transmission of the delimiter.

Data units can also be identified as belonging to different time frames and sub-time frames by means of their time of arrival or time of transmission, or by counting the amount of data received since the end of the previous time frame or sub-time frame.

The sub-time delimiter can comprise a time frame identifier implemented, for example, according to one of the methods outlined above. The time frame identifier identifies the sub-time frame within its time frame or the time frame within its time cycle.

The time frame identifier can carry control information regarding the data units belonging to the corresponding time frame or sub-time frame. For example, when the bits transmitted during a time frame have been received either over a plurality of input channels or during a plurality of time frames, the time frame identifier can identify at least one of the input channels over which the bits had been received and the time frame during which the bits had been received. In the example shown in FIG. 4, the first selected sub-time frame **h** of the first time frame **TF1-3** during which the **X** bits received from Channel 1 **920-1** are transmitted, has an identifier uniquely identifying at least one of the sub-time frames h of the first selected time frame **TF1-3** during which the **X** bits are transmitted, the channel **920-1** on which the **X** bits had been received, and the time frame **TF2-1** during which the **X** bits had been received from the input channel 1 **920-1**.

In a possible embodiment, time frame identifiers are constructed hierarchically to carry information about the time frames during which the corresponding data units were received in each time driven switch that has aggregated (or groomed) such data units. Time frame and input channel information is added by each aggregating (or grooming) time driven switch, and removed by each de-aggregating (or degrooming) time driven switch.

In the example in FIG. 4, the data units received during two predefined time frames, **TF1-1** and **TF1-2** of duration **TF1** on the high capacity input channel 5 **920-5,** are transmitted on the low capacity output channels **920-11** through **920-14**. The data units, comprising **2·X** bits, received on channel 5 **920-5** during time frame **TF1-1** are transmitted on the output channels **920-12** and **920-13** during a predefined time frame **TF2-2** of duration **TF2.** The **X** bits of data units received on channel 5 **920-5** during a first predefined sub-time frame **d -** having duration **subTF**-of the first predefined time frame **TF1-1** are forwarded over the output channel **920-12.** The **X** bits of data units received during the second sub-time frame c of the first predefined time frame **TF1-1** are transmitted over output link **920-13** during the same time frame **TF2-2**. The data units received during the predefined sub-time frames **b** and **a** within the time frame **TF1-2** on input channel **5 920-5** are transmitted on the output channels **920-11** and **920-14** respectively, during the predefined time frame **TF2-2.**

In the example depicted in FIG. 5, the data units received during a predefined time frame **TF2-1** of duration **TF2** on the low capacity input channels **920-1** and **920-4** are transmitted on the high capacity output channel **920-15**; the data units received on the low capacity input channels **920-2** and **920-3** during the predefined time frame **TF2-1** are transmitted over the low capacity channels **920-12** and **920-13,** respectively, during a fifth predefined time frame **TF2-2** of duration **TF2**. The data units, comprising **X** bits, received on channel 1 **920-1** are transmitted on the output channel **920-15** during a first predefined sub-time frame **h** of duration **subTF** within a first predefined time frame **TF1-3** of duration **TF1.** The **X** bits of data units received on channel 4 **920-4** are forwarded over the output channel **920-15** during a first sub-time frame e of a second predefined time frame **TF1-4.**

In the example in FIG. 5, the data units received during two predefined time frames **TF1-1** and **TF1-2** of duration **TF1** on the high capacity input channel 5 **920-5** are transmitted partly over the high capacity output channel 15 **920-15** and partly on the low capacity output channels **920-11** and **920-14**. The data units received on channel 5 **920-5** during a third predefined time frame **TF1-1,** comprising **2·X** bits, are transmitted partly on the low capacity output channel **920-14** during a fifth predefined time frame **TF2-2** of duration **TF2**, and partly on the high capacity output channel **920-15** during a predefined sub-time frame of duration **subTF** within the first predefined time frame **TF1-3.** The **X** bits of data units received on channel 5 **920-5** during a first predefined sub-time frame **d** of duration **subTF** within the first predefined time frame **TF1-1** are forwarded over the output channel **920-14.** The **X** bits of data units received during a second sub-time frame c of the third predefined time frame **TF1-1** are transmitted over output link **920-15** during a predefined sub-time frame **g** of duration **subTF** within the first predefined time frame **TF1-3.**

The data units received during the predefined sub-time frames b and a within a fourth predefined time frame **TF1-2** on input channel 5 **920-5** are transmitted on the output channel **920-11** during the predefined time frame **TF2-2** and on the output channel **920-15** during the predefined sub-time frame **f** within the second predefined time frame **TF1-4** respectively.

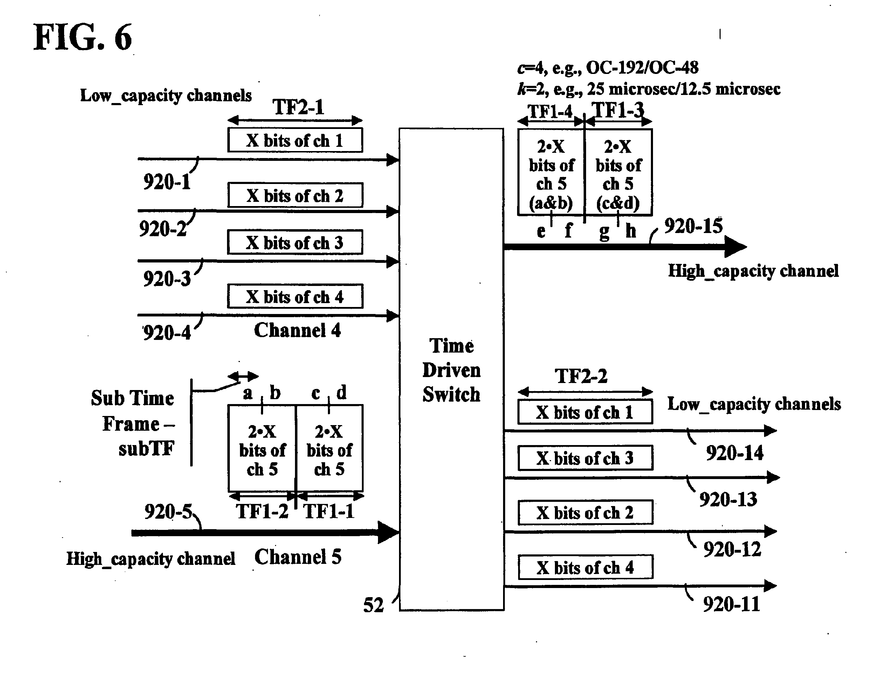

In the example depicted in FIG. 6, the data units received during a predefined time frame **TF2-1** of duration **TF2** on the low capacity input channels **920-1** through **920-4** are transmitted over the low capacity channels **920-11** through **920-14** during a predefined time frame **TF2-2** of duration **TF2**. The data units received on channel 1 **920-1,** comprising **X** bits, are transmitted on the output channel **920-14;** the **X** bits of data units received on channel 2 **920-2** are forwarded over the output channel **920-12;** the data units received on channel 3 **920-3**, comprising **X** bits, are transmitted on the output channel **920-13;** the **X** bits of data units received on channel 4 **920-4** are forwarded over the output channel **920-11**.

In the example in FIG. 6, the data units received during two predefined time frames **TF1-1** and **TF1-2** of duration **TF1** on the high capacity input channel 5 **920-5** are transmitted over the high capacity output channel 15 **920-15** during two predefined time frames **TF1-3** and **TF1-4,** respectively. The data units received on channel 5 **920-5** during time frame **TF1-1** and time frame **TF1-2** are organized into different sub-time frames. The **X** bits of data units received on channel 5 **920-5** during a first predefined sub-time frame d of duration **subTF** within the first predefined time frame **TF1-1** are forwarded over the output channel **920-15** during a first predefined sub-time frame **h** of duration **subTF.** The **X** bits of data units received during a second sub-time frame **c** of the first predefined time frame **TF1-1** are transmitted over output link **920-15** during a predefined sub-time frame **g** of duration **subTF** within a second predefined time frame **TF1-3.**

The data units received during predefined sub-time frames b and a within a third predefined time frame **TF1-2** on input channel 5 **920-5** are transmitted on the output channel **920-15** during the predefined sub-time frames f and e, respectively, within a fourth predefined time frame **TF1-4.**

### Time driven Switch with Rate Matching Buffer (RMB)

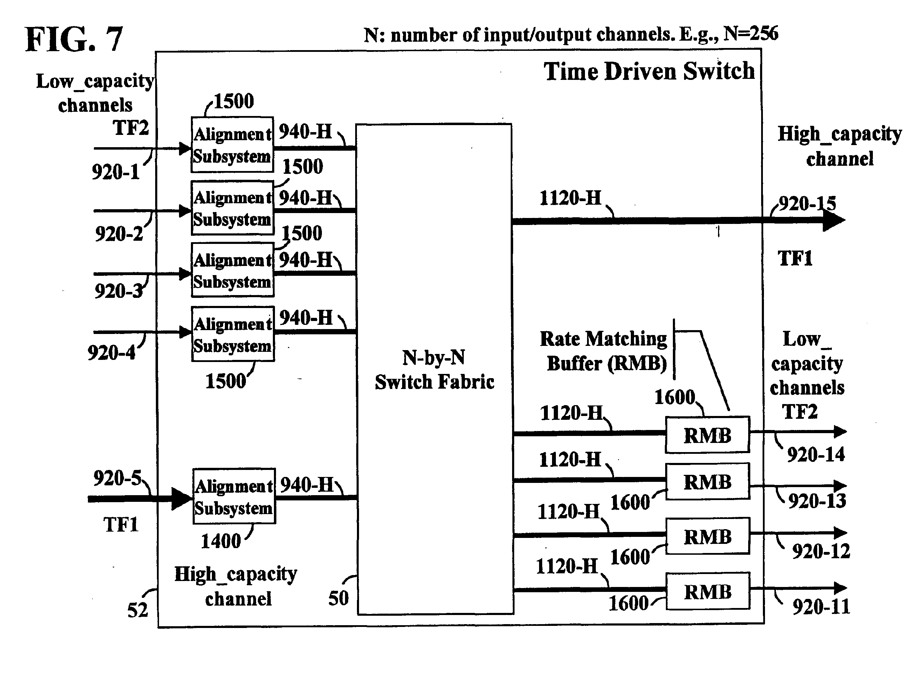

FIG. 7 shows the high level architecture of one possible embodiment of a time driven switch with a plurality of input and output channels having different transmission capacity. The switching system of the example presented in FIG. 7 has the same input/output channel configuration as the switches presented in the examples contained in FIG. 4, FIG. 5 and FIG. 6, including the duration of time frames deployed on each channel. The total number of input (and output) channels is N. In the sample switch configuration presented in FIG. 5A, N=256; in the sample switch configuration presented in FIG. 7, N=5.

The architecture depicted in FIG. 7 is characterized by being based on a N-by-N switch fabric with an input/output transfer capacity equal to the transmission capacity **High_capacity** of the high capacity channels. In other words, the input lines **940-H** and the output lines **1120-H** of the switch fabric have transmission capacity **High_capacity**.

Low capacity input channels **920-1** through **920-4** are connected to a first type of alignment subsystem **1500,** while the high capacity input channel **920-5** is connected to a second type of alignment subsystem **1400.** Other configurations are also feasible. For example, a single type of alignment subsystem **1500** could be used for both low capacity and high capacity input channels **920.**

The high capacity output channel **920-15** is connected directly to one of the output lines **1120-H** of the switch fabric 50. Each of the low capacity output channels **920-11** through **920-14** is fed by a Rate Matching Buffer (RMB) **1600** which receives over one output line **1120-H** data transferred through the switch fabric **50**.

After the alignment subsystem has aligned the data units received on each input channel **920-1** through **920-5** with the common time reference, they can be transferred through the switch fabric. During each time frame all the data units received during one previous time frame are moved from a buffer in the alignment subsystem to the output lines **1120-H** of the switch fabric **50**.

With reference to the switch architecture presented in FIG. 7, data units that are to be routed over the high capacity channel **920-15** are immediately transmitted over the output channel **920-15.** This switching and forwarding method is called 2 phase switching and forwarding and is illustrated in FIG. 3B.

With reference to the switch architecture presented in FIG. 7, data units that are to be routed over the low capacity channels **920-11** through **920-14** are buffered in a rate matching buffer (RMB) **1600** and forwarded in a following time frame, which can be the next time frame in a possible embodiment. This switching and forwarding method is called 3 phase switching and forwarding and it is illustrated in FIG. 3B.

There are a plurality of methods for transferring data units from input **940-H** to output **1120-H** through the switch fabric **50**. In a first method, all the data units received on one of the input channels **920-1** through **920-5** during a first predefined time frame are transferred to the same output line **1120-H** during a second predefined time frame, wherein the second predefined time frame follows the first predefined time frame. In a second method, the data units received during a first predefined time frame over one of the input channels **920-1** through **920-5** can be transferred to different output lines **1120-H,** wherein data units received during the same sub-time frame of the first predefined time frame are transferred to the same output line **1120-H.**

Data units to be transmitted on one of the low speed output channels **920-11** through **920-14** are stored in a Rate Matching Buffer (RMB) **1600** which they enter through a line **1120-H** having capacity **High_capacity,** and are transmitted through the low capacity channel **920-11** through **920-14** coupled to the RMB at a lower rate **Low_capacity.**

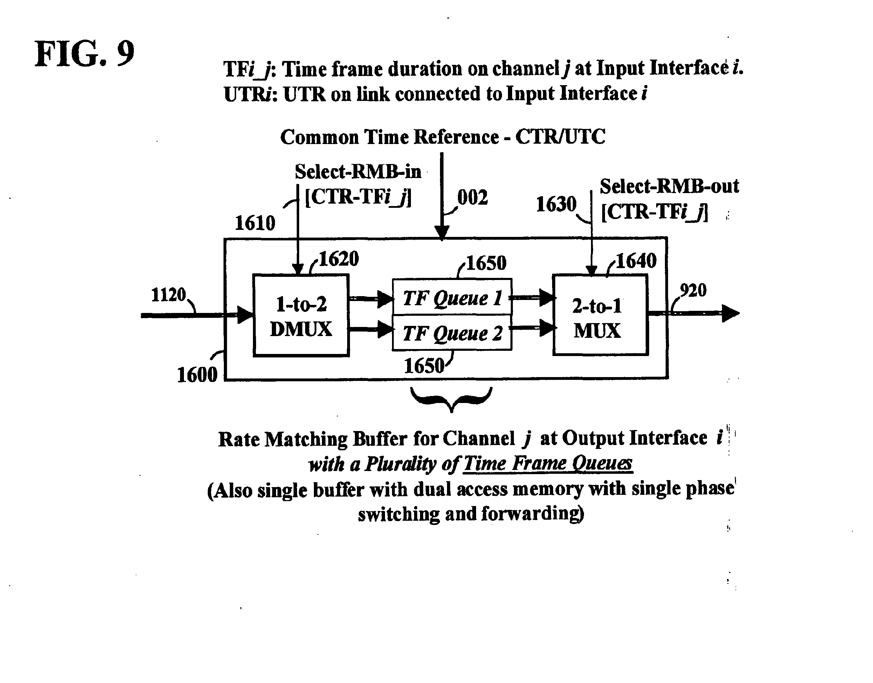

FIG. 9 shows the block diagram of a Rate Matching Buffer **1600** receiving data units from one of the output lines **1120** of the switch fabric **50**, and transmitting data units on one of the output channels **920** of the time driven switch **52**. The data flows through input **1120** and through output **920** have different rates.

In the switch configuration presented in FIG. 7, the output lines **1120** from the switch fabric **50** have capacity **High_capacity,** while the output channels **920-11** through **920-14** have capacity **Low_capacity,** where **High_capacity** > **Low_capacity**. Thus, the RMBs **1600** deployed in this configuration receive data units in the queues at a rate higher than the rate at which data units are transmitted out of the queues.

The RMB **1600** depicted in FIG. 9 comprises two buffer queues **1650** which are deployed according to the following principles: During each time frame of duration **TFi_j** as deployed on channel j of link i associated to the RMB,
- each queue is associated to either the input **1120** or the output **920** of the RMB;
- the input line **1120** is associated to a respective one of the TF queues **1650**;
- the output line **920** is associated to a respective one of the TF queues **1650**.

In FIG. 9, a 1-to-2 de-multiplexer (DMUX) **1620** is responsible for coupling the input line **1120** with a respective one of the TF queues **1650** during each time frame **TFi_j** according to the principles listed above, responsive to the Select-RMB-in signal **1610** from the fabric controller **55,** wherein the Select-RMB-in signal **1610** is aligned to the CTR **002.**

In FIG. 9, a 2-to-1 multiplexer (MUX) **1640** is responsible for coupling the output line **920** with a respective one of the TF queues **1650** during each time frame **TFi_j** according to the principles listed above, responsive to the Select-RMB-out signal **1630** from the fabric controller **55,** wherein the Select-RMB-in-signal **1630** is aligned to the CTR **002**.

Consequently during each time frame **TFi_j,** data units are received in the selected one of the TF queues **1650** at the rate of the input line **1120** and are transmitted out of another TF queue **1650** at the rate of the output line **920**.

Another possible implementation of an **RMB -** not shown in FIG. 9 - comprises a single buffer queue in which data units are concurrently stored while received from the input line **1120** at the rate of the line (for example **High_capacity,** in the switch configuration depicted in FIG. 7) and are retrieved and then transmitted on the output line **920** at the line rate (for example **Low_capacity**, in the configuration depicted in FIG. 7), where the rate at which data units are stored is different from the rate at which data units are retrieved. This alternative implementation with single buffer does not require data units to be stored in the RMB for a whole time frame, thus allowing for the implementation of 2 phase switching and forwarding (see FIG. 3B) on low capacity output channels. On the other hand, this alternative implementation requires at least one of a double access memory and a memory with access speedup (i.e., access speed higher than the rate of each of the input **1120** and output **920** data lines).

### Unique Time Reference (UTR) and Alignment to CTR

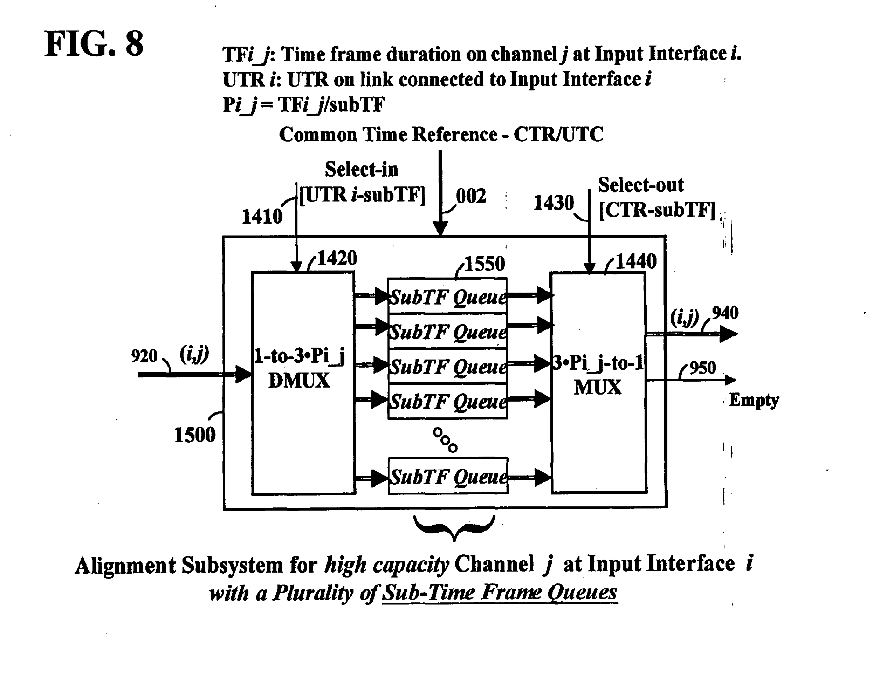

In FIG. 8, a plurality of buffer queues **1550** are part of each alignment subsystem **1500**, wherein each of the respective buffer queues is associated, for each of the subTFs, with a unique combination of one of the incoming optical channels and one of the outgoing optical channels.

A mapping controller within the switch controller, in FIG. 3 logically maps, for each of the (UTR-i) subTFs, selected incoming optical channels **920** to selected buffer queues **1550**, in FIG. 8, and logically maps, for each of the CTR TFs, selected ones of the plurality of buffer queues **1550** to selected outgoing channels **940**.

In FIG. 8, the Select-in signal **1410** generated by the switch controller **410** (see FIG. 3) determines which of the buffers **1550** will receive data units from the channel **920** at every sub-time frame **subTF** as it is defined by the UTR-i. The selection process by the alignment subsystem **1500** is responsive to the Select-in signal **1410** received from the fabric controller **55**. The Select-in signal **1410** is fed into a 1-to-3·**Pi_j** DMUX (de-multiplexer) **1420** that selects one of 3·**Pi_j** buffer queues **1550. Pi_j** is the number of sub-time frames of duration **subTF** contained in one TF of duration **TFi_j** employed on the incoming channel **920**. Prior to output, the buffer queues in the alignment subsystem **1500** for each time frame and sub-time frame can be filled to an arbitrary level with data units arranged in an arbitrary order.

The alignment subsystem **1500** in FIG. 8 is comprised of a plurality of TF queues **1550**, wherein each of the sub-time frame queues comprises means to determine that the respective sub-time frame queue **1550** is empty, wherein each of the sub-time frame queues further comprises a means to determine that the respective sub-time frame queue is not empty. The empty (and not empty) signal **950** is provided to the switch controller **410,** in FIG. 3.

In FIG. 8, the mapping controller within the fabric controller **55** further provides for the coupling of selected sub-time frame queues **1550** to their respective ones of the outgoing channels **940**, for transfer of the respective stored data units during the respective CTR sub-time frames. This operation is performed responsive to the Select-out signal **1430,** as shown in FIG. 8.

During each of the subTFs of the CTR, only one of the buffer queues **1550** is associated with the outgoing line **940**. For each of the subTFs of the UTR-i, only one of the buffer queues is associated with the incoming channel **920**. The same buffer queue **1550** is never associated at the same time with both the incoming channel **920** and the outgoing line **940**.

In FIG. 8, the alignment subsystem **1500** can have more than **3·Pi_j** TF queues **1550** - this can be used for the non-immediate forwarding method: in this method a data unit is delayed in the input port until there is an available sub-time frame for it so that it may be switched to the selected one of the outgoing optical channels **920.** In this method, the delay is increased (i.e., more time frames may be needed to get from input to output). The non-immediate forwarding method adds flexibility to the scheduling process of fractional lambda pipes.

### Grooming and Degrooming

Communications networks are engineered to support different amounts of traffic in different areas of the network. Usually network users (individuals or organizations) access the network through dedicated low capacity channels. Traffic generated by multiple users is aggregated over higher capacity channels that span metropolitan and regional areas. Traffic generated in metropolitan and regional areas is aggregated over higher capacity channels that span national and continental areas.

Dually, traffic flowing among and across continents through very high capacity channels needs to be sorted and directed towards the proper destination over the lower speed national, regional, and eventually metropolitan channels.

Methods for (i) switching data units among channels with different capacity, (ii) aggregating data flows from a plurality of low capacity channels to a single high capacity channel (grooming), and (iii) de-aggregating data flows from a single high capacity channel to a plurality of low capacity channels (degrooming) are instrumental in properly and flexibly engineering communications networks.

The Switching Methods with Common Time Reference and Plurality of Time Frame Durations described above in the present disclosure fulfill (i). The Time-based Grooming Methods with Common Time Reference described in the following fulfill (ii), while Time-based Degrooming Methods with Common Time Reference that will be described below in the present disclosure fulfill (iii).

Grooming is a process of multiplexing where the number of inputs is (much) larger than the number of outputs, possibly one, while degrooming is a process of de-multiplexing where the number of inputs is (much) smaller, possibly one, than the number of outputs.

Grooming takes place at least at one of two different levels: the channel capacity level - also called inter-time frame grooming - and the time frame level - also called intra-time frame grooming. When operating at the channel capacity level data units from a plurality of low capacity channels are aggregated on a single high capacity channel. In a possible scenario of channel capacity level multiplexing, the sum of the capacity of the incoming channels equals the capacity of the output channel. Data units received during a single time frame on a plurality of input channels are transmitted on the high capacity output channel during separate, possibly consecutive time frames. When operating at the time frame level, data units received during multiple time frames on at least one of a plurality of input channels, are transmitted on a high capacity channel during a single time frame.

Grooming can be done at both the channel capacity and time frame level in one of the following ways:
by transmitting during the same time frame data units that were received during the same time frame from a plurality of input channels;
by transmitting during the same time frame data units that were received during a plurality of time frames from a single input channel;
by transmitting during the same time frame data units that were received during a plurality of time frames from a plurality of input channels.

In a possible scenario of combined channel capacity and time frame level grooming, the time frame duration employed on the incoming channels equals the duration of the time frame employed on the output channel, wherein the size of the time frame employed on the output channel equals the sum of the time frame sizes employed on the incoming channels, wherein the time frame size is the amount of information that can be sent during a time frame over a given communications channel.

### Time-based Grooming and Degrooming Methods with CTR

The common time reference (CTR) is partitioned into successive *time frames* (TFs), as shown in FIG. 2A and FIG. 2B. Contiguous time frames are grouped into time cycles and contiguous time cycles are grouped into contiguous super cycles, wherein one super cycle is equal to and temporally aligned with one UTC second, as shown in FIG. 2A. Each time frame may be sub-divided into a plurality of sub-time frames (subTF). Pipeline forwarding (PF) of time frames through a sequence of grooming, switching, and degrooming systems is realized by pre-scheduling the forwarding time of data units contained in each time frame and/or sub-time frame. Thus, no processing of in-band information, e.g.: packet header, is necessary once data units belonging to each time frame enter a network with CTR.

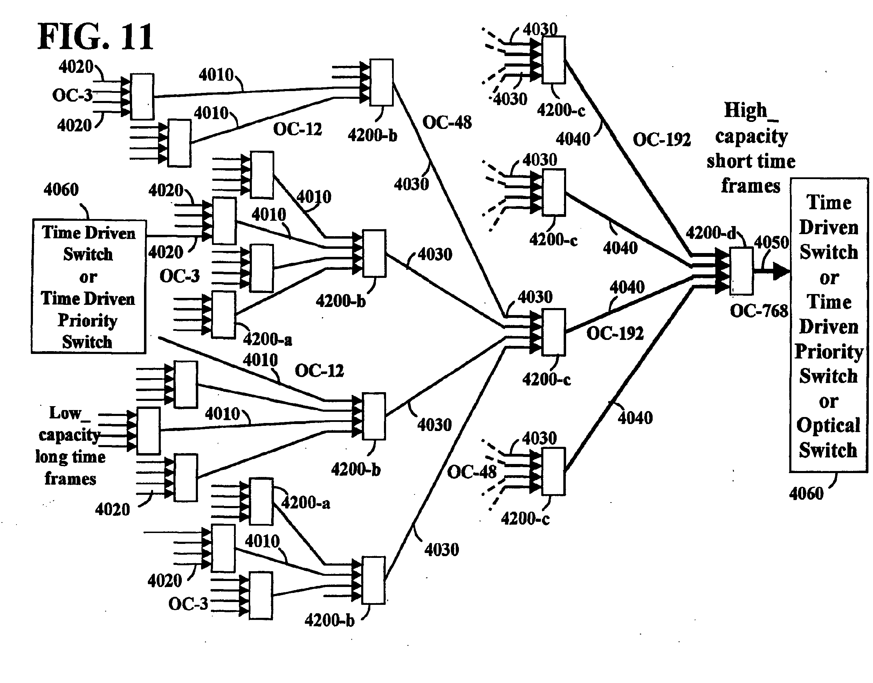

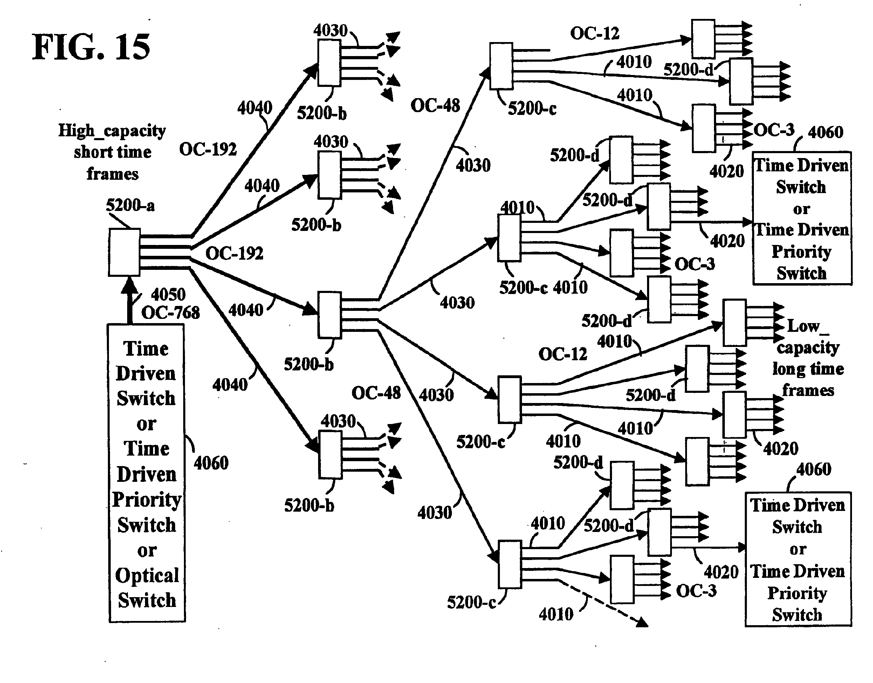

Data units on the low capacity input channels of the grooming and degrooming devices depicted in FIG. 11 and FIG. 15, respectively, are organized in time frames that are not aligned to the CTR, due to the propagation delay on the various channels. Thus, data units received on each channel are first aligned with the CTR and then switched and multiplexed (or de-multiplexed and switched) onto the output channels. The result of the alignment operation is that the beginning and end of each time frame after alignment occurs at the same time as the beginning and end of the CTR time frames.

The time frame duration and its size (the number of bits that can be transmitted during one time frame) over the output channels may be different from the duration and size used over the input channels. In the most general case, time frame duration might not be the same on all the input channels. However, without loss of generality, in order to keep the following description simple it is assumed that the same time frame duration is used over all input channels and all output channels.

### Grooming Deployment

A possible realization of the grooming subnetwork **4000** is provided in FIG. 11, while FIG. 15 shows a possible realization of the degrooming subnetwork **5000**.

FIG. 11 shows a typical grooming scenario based on channels of the SONET (Synchronous Optical NETwork) hierarchy. Data units transmitted through a plurality of OC-3 (155 Mb/s) channels are aggregated and transmitted over a single OC-768 (40 Mb/s) channel. The aggregation, or grooming architecture shown in FIG. 11 is based on grooming systems **4200-a** through **4200-d.**

At the periphery of the network, a plurality of grooming systems **4200-a** aggregate data flows from 4 OC-3 channels **4020** over a single OC-12 channel **4010** (622 Mb/s). In a real world scenario, the network shown in FIG. 11 could be the network of a service provider offering access to a plurality of customers. The local area networks of the customers are connected to a Time driven Switch or a Time driven Priority switch **4060**, which forwards their traffic on a respective one of the OC-3 links **4020**. The traffic generated by each of a plurality of groups of four customers is aggregated in the provider's point of presence (POP) closest to the customers on a single OC-12 channel **4010**, and carried towards a metropolitan aggregation point where a grooming system **4200-b** further aggregates traffic carried by OC-12 channels **4010** and generated by a plurality of users dispersed in the metropolitan area. Notice that the span of the links carrying the OC-12 channels **4010** can be between a few meters (when the grooming systems **4200-a** and **4200-b** are co-located within the same central office) and a few kilometers.

In FIG. 11, each one of the plurality of grooming systems **4200-b**, aggregates traffic received over four OC-12 channels **4010** for transmission over a single OC-48 (2.5 Gb/s) channel **4030**. In a real world example, a service provider could use this architecture to gather traffic from customers located in various metropolitan areas geographically close and connected through OC-12 channels **4010** and transfer the aggregated data flows to a regional aggregation point over a plurality of OC-48 channels **4030.**

In the regional aggregation points, in FIG. 11, each one of a plurality of grooming systems **4200-c** aggregates the data units received over four OC-48 channels **4030** for transmission over a single OC-192 (10 Mb/s) channel **4040**. The OC-192 channel **4040** is used to carry the traffic to a continental concentration point where a grooming system **4200-d** aggregates the traffic from four OC-192 channels **4040** for transmission over an intercontinental backbone of OC-768 (40 Gb/s) channels **4050** and Time driven Switches or Time driven Priority switches **4060**.

The grooming architecture depicted in FIG. 11 allows all the traffic generated by all the customers of the service provider to be aggregated on a single OC-768 channel **4050** that is fed in a switching system **4060** operating according to either Time driven Switching or Time driven Priority.

### Grooming Methods:

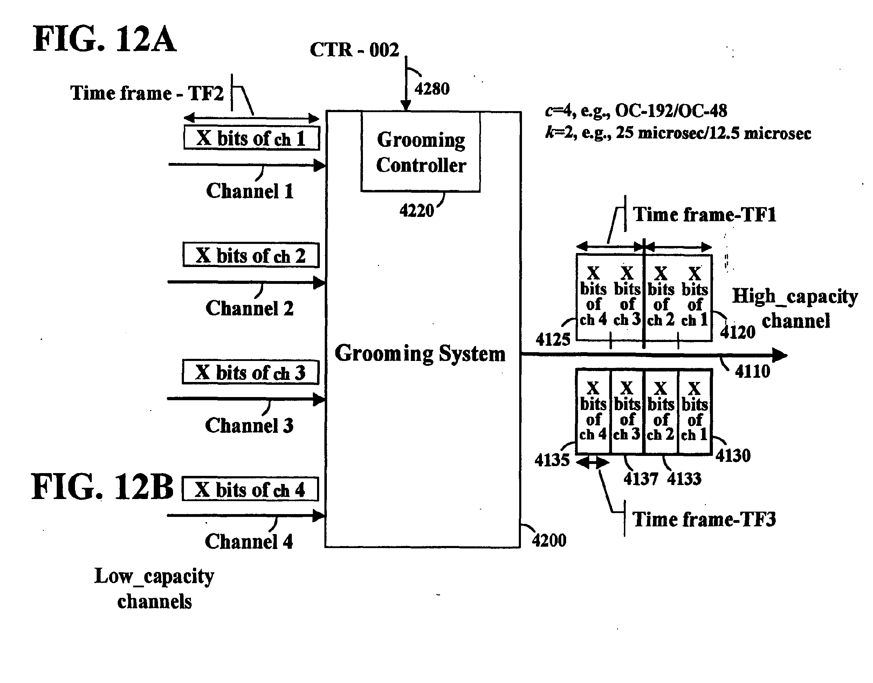

Grooming can be performed according to at least one of two methods.
(1) Intra-time frame grooming. The time frame duration on the output channel is the same as on the input channel; however, the time frame size on the output channel is larger than on the input channel. For example, if the output channel capacity is N times larger than the input channel capacity, time frames on the output channel are N times larger than are those on the input channel. Multiplexing is achieved by combining N time frames worth of data units received from all the input channels during the same time frame on the output channel. Data units received from different input channels are multiplexed in the same time frame within separate sub-time frames.
(2) Inter-time frame grooming. The time frame size on the output channel is the same as on the input channels; however, due to the higher capacity of the output channel, the time frame duration is proportionally shorter. For example, if the output channel capacity is N times larger than the input channel capacity, time frames on the output channel are N times shorter than are those on the input channels. Multiplexing is achieved by interleaving time frames of data units received from the various input channels Channel 1 through Channel 4 on the output channel **4110**, as shown in FIG. 12. In the example depicted in FIG. 12 the output channel **4110** capacity is four times the capacity of the input channels (e.g., the output channel is an OC-192 channel, while each input channels is an OC-48 channel).

Grooming that combines the above two methods, shown in FIG. 12A, is such that grooming is obtained by interleaving time frames containing data units from different input channels (inter-time frame grooming), each time frame being composed of two sub-time frames (intra-time frame grooming).

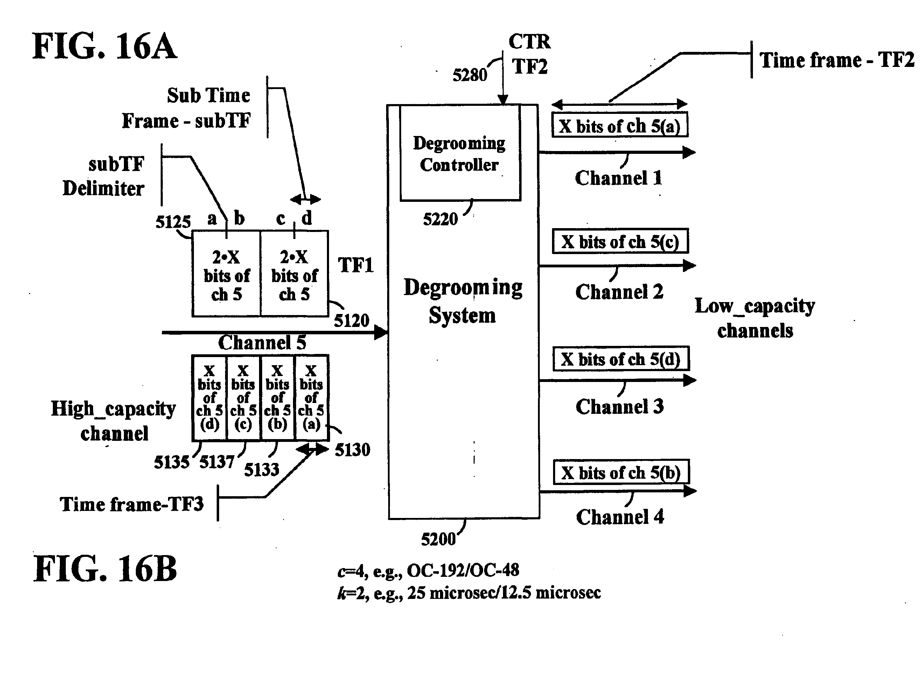

FIG. 16 shows how degrooming is performed. Data units are received on a high capacity input channel Channel5 during each time frame. When intra-time frame degrooming is performed, after data units received from the input channel Channel5 during a first time frame have been aligned, they are transmitted during a second time frame of duration **TF2** on multiple output channels Channel1 through Channel4, wherein data units received during the same sub-time frame of the first time frame are transmitted over the same channel, wherein data units received during different sub-time frames of the first time frame are transmitted over different output channels.

When inter-time frame degrooming is performed, as shown in FIG. 16B, data units received during multiple consecutive time frames **5130** through **5137** of duration **TF3** from a high capacity input channel Channel5 are transmitted during one selected time frame of duration **TF2** over multiple lower capacity output channels Channel1 through Channel4. Finally, as shown in FIG. 16A, a combination of the two degrooming methods, inter-frame degrooming and intra-frame degrooming, can be deployed as well.

The time frame duration to be deployed on each communications channel should be chosen wisely according to the channel capacity. In fact, a small time frame size is not desirable because the grooming and degrooming system operation is simpler and more efficient if any data unit transmitted on the channels fits within a single time frame - and even simpler and more efficient if a few data units are contained in each time frame. On the other hand, time frames that are too large are undesirable as well since in order to align received data units with the CTR, all the data units received in a time frame need to be buffered. Consequently, the larger the time frames, the larger the amount of memory needed to perform CTR alignment.

In summary, short time frames result in high speed control within each grooming and degrooming system, while long time frames result in longer alignment times and consequently longer delay introduced by each grooming and degrooming system.

### Grooming Realization

FIG. 12 shows a schematic description of the operation of a grooming system **4200**. The grooming system **4200** in FIG. 12 has four low capacity input channels and one high capacity output channel. Multiplexing over the output channel of data units received from the four input channels can be done at least at two levels: (i) the channel capacity level - also called inter-time frame grooming - and (ii) the channel capacity and time frame leveL FIG. 12A shows an example of multiplexing (or grooming) at both the channel capacity level (inter-time frame grooming) and time frame level (intra-time frame grooming); FIG. 12B shows an example of multiplexing (or grooming) at the channel capacity level, or inter-time frame grooming.

In the configuration shown in FIG. 12, time frames of duration **TF2** are deployed on the four input channels **Channel1** through **Channel4** that have capacity **Low_capacity.** Consequently time frames have size **X** bits. **A** different time frame duration and possibly time frame size is used on the output channel **4110** that has capacity **High_capacity.** In a sample configuration, **Low_capacity** could be 2.5 Gb/s (OC-48) and **High_capacity** could be 10 Gb/s (OC-192), with **TF2=25** microseconds and **TF1**=12.5 microseconds. In this scenario the size of the time frames **TF1** is double than the size of the time frames **TF2.** FIG. 12A depicts such a configuration, which could be the configuration of a grooming system **4200-c** in FIG. 11.

In the sample configuration depicted in FIG. 12A**,** the size (i.e., the amount of bits that can be transmitted) of the time frames **TF1** deployed on the output channel is double (2·**X** bits) the size of the time frames **TF2** deployed on the four input channels **(X** bits). In FIG. 12, the grooming system **4200** receives **X** bits from each of the four input channels during a first selected time frame of duration **TF2**.

As shown in FIG. 12, during a second selected time frame **4120** of duration **TF1,** the grooming system **4200** transmits the **X** bits received, during the first selected time frame, from **Channel1** and the **X** bits received, during the first selected time frame, from **Channel2** over the output channel **4110 ,** wherein the second selected time frame follows the first selected time frame.

In a possible embodiment, in FIG. 12A, the **X** bits received from **Channel1** can be transmitted during a first selected sub-time frame of the second time frame **4120** of duration **subTF=TF1/2,** and the **X** bits received from **Channel2** can be transmitted during a first selected sub-time frame of the second time frame **4120** of duration **subTF=TF1/2.**

The two sub-time frames of time frame **4120** can be delineated by a sub-time frame delimiter that can be either an implicit one or an explicit one. Explicit delimiters can be realized by one of a plurality of different methods. There can be a different delimiter control word to signal the beginning of a new time frame (i.e., a time frame delimiter - TFD), sub-time frame, time cycle (i.e., a time cycle delimiter - TCD) and super cycle (i.e., a super cycle delimiter - SCD). The explicit delimiter signaling can be realized by the SONET/SDH path overhead field that was design to carry control, signaling and management information. An implicit delimiter can be realized by measuring the UTR time with respect to the CTR. An alternative way of implementing an implicit delimiter is by counting the number of bytes from an explicit delimiter.

Alternatively, delimiters can be realized as an optical signal carried on the communications link coupled to input i. A possible embodiment of time frame delimiter consists of dedicating one of the wavelengths of the communications link for transmission of the delimiter.

The sub-time frame delimiter can comprise a time frame identifier that identifies the sub-time frame within its time frame or the time frame within its time cycle. The time frame identifier can carry control information regarding the data units belonging to the corresponding time frame or sub-time frame. For example, when the bits transmitted during a time frame had been received either by a previous grooming system over a plurality of input channels or during a plurality of time frames, the time frame identifier can identify at least one of the input channels over which the bits were received and the time frame during which the bits were received. In the example shown in FIG. 12A, the first selected sub-time frame of the second time frame **4120** during which the **X** bits received from **Channel1** are transmitted has an identifier uniquely identifying at least one of the sub-time frames of the second time frame **4120** during which the **X** bits are transmitted, the channel **Channel1** on which the **X** bits had been received, and the first selected time frame during which the **X** bits had been received from the input channel **Channel1.**

In a possible embodiment, time frame identifiers are constructed hierarchically to carry information about the time frames during which the corresponding data units where received in each grooming system they had traversed.

In an alternative embodiment, **X** bits received from **Channel1** can be transmitted during a plurality of sub-time frames of the second time frame **4120** multiplexed with the **X** bits received from **Channel2** that are transmitted during a plurality of distinct sub-time frames of the second time frame **4120.** The sub-time frames of the second time frame **4120** can be delineated by a sub-time frame delimiter that can be either an implicit one or an explicit one implemented according to the methods described above in this disclosure.

In a third alternative embodiment, the **X** bits received from **Channel1** and the **X** bits received from **Channel2** are multiplexed and transmitted during the second time frame **4120**.

During a third selected time frame **4125** of duration **TF1,** the grooming system **4200** transmits the **X** bits received, during the first selected time frame, from **Channel3** and the **X** bits received, during the first selected time frame, from **Channel4** over the output channel **4110** , wherein the third selected time frame **4125** follows the first selected time frame. The **X** bits received from **Channel3** and the **X** bits received from **Channel4** during the first selected time frame can be transmitted on the output channel during the third selected time frame **4125** during either two separate sub-time frames, during a plurality of distinct multiplexed sub-time frames, or multiplexed during the time frame **4125,** similar1 to what was described above for the transmission of the **X** bits received from **Channel1** and **Channel2.**

In a possible configuration, the third selected time frame **4125** follows the second selected time frame **4120,** as shown in the example depicted in FIG. 12A. In an alternative configuration, the second selected time frame **4120** follows the third selected time frame **4125**.

In a possible configuration, the second time frame **4120** is adjacent to the third time frame **4125**, as shown in the example depicted in FIG. 12A. In an alternative configuration, the second time frame **4120** is not adjacent to the third time frame **4125**.

In the sample configuration depicted in FIG. 12B, the size (i.e., the number of bits that can be received) of the time frames **TF3** deployed on the output channel is the same as the size (i.e., the number of bits that can be transmitted) of the time frames **TF2** deployed on the four input channels **(X** bits). The grooming system **4200** receives **X** bits from each of the four input channels during a first selected time frame of duration **TF2**.

During a second selected time frame **4130** of duration **TF3**, as depicted in FIG. 12B, the grooming system **4200** transmits the **X** bits received from **Channel1** over the output channel **4110,** wherein the second selected time frame **4130** follows the first selected time frame.

During a third selected time frame **4133** of duration **TF3**, the grooming system **4200** transmits the **X** bits received from **Channel2** over the output channel **4110,** as depicted in FIG. 12B, wherein the third selected time frame **4133** follows the first selected time frame.

During a fourth selected time frame **4137** of duration **TF3**, the grooming system **4200** transmits the **X** bits received from **Channel3** over the output channel **4110,** wherein the fourth selected time frame **4137** follows the first selected time frame.

During a fifth selected time frame **4135** of duration **TF3,** the grooming system **4200** transmits the **X** bits received from **Channel4** over the output channel **4110,** wherein the fifth selected time frame **4135** follows the first selected time frame.

In a possible configuration, as depicted in FIG. 12B, the fifth selected time frame **4135** follows the fourth selected time frame **4137**, that in turn follows the third selected time frame **4133**, that in turn follows the second selected time frame **4130,** as shown in the example depicted in FIG. 12A. In alternative configurations, the four time frames **4130** through **4137** follow each other in any other possible order.

In a possible configuration, the four time frames **4130** through **4137** are adjacent, as shown in the example depicted in FIG. 12A. In an alternative configuration, the four time frames **4130** through **4137** are not all adjacent to at least one of the others. In a possible configuration, each of the four time frames **4130** through **4137** is not adjacent to any one of the others.

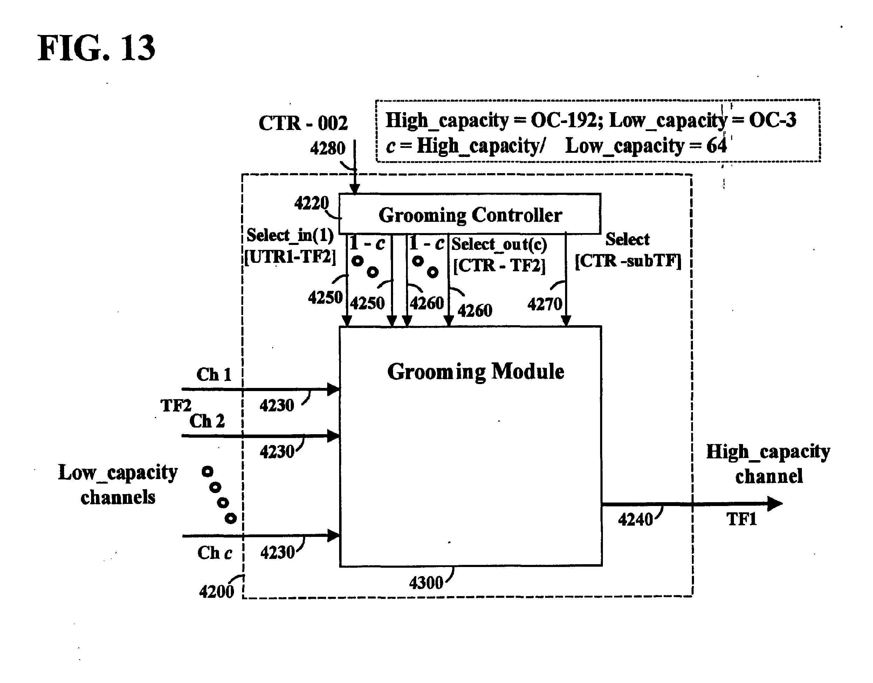

FIG. 13 depicts the architecture of a possible embodiment of a Grooming system **4200** comprising a Grooming Controller **4220** and a Grooming Module **4300** between a plurality of low capacity input channels **4230** and a higher capacity output channel **4240**. In the sample configuration shown in FIG. 13, the grooming system **4200** has c input channels at capacity **Low_capacity** and one output channel at capacity **High_capacity,** where **High_capacity=*c*·Low_capacity.**

In FIG. 13, the grooming module **4300** aggregates data units received on the input channels **4230** for transmission over the output channel **4240** responsive to the control signals **4250, 4260**, and **4270** from the grooming controller **4220**. The grooming controller **4220** generates the control signals for the grooming module **4300** responsive to the common time reference (CTR) **002** received through an external control line **4280**, and responsive to the unique time reference (UTR) coupled with each input channel **4230**. The grooming controller **4220** devises such UTR by using the time frame and sub-time frame delimiters included in the data stream according one of the methods described above in the present disclosure.

In FIG. 13, The control signals sent from the grooming controller **4220** to the grooming module **4300** comprise a Select_in signal **4250** for each one of the plurality of input channels **4230,** a Select_out signal **4260** for each one of the plurality of input channels **4230,** and a Select signal **4270.**

Each Select_in signal **4250** is aligned with the UTR coupled to the corresponding input channel **4230** and has a period equal to the time frame duration **TF2** deployed on the corresponding input channel **4230.**

Each Select_out signal **4260** is aligned with the CTR and has a period equal to the time frame duration **TF2** deployed on the corresponding input channel **4230**.

The Select signal **4270** is aligned with the CTR and has a period equal to the sub-time frame duration **subTF** deployed on the output channel **4240**.

The grooming systems **4200-a** through **4200-d** deployed in the grooming scenario presented in FIG. 11 can be implemented using the architecture shown in FIG. 13, where ***c***=4. For example, the Grooming systems **4200-c** can be implemented with the architecture shown in FIG. 13, where **Low_capacity**=2.5 Gb/s (OC-48 **4030**) and **High_capacity**=10 Gb/s (OC-192 **4040**).

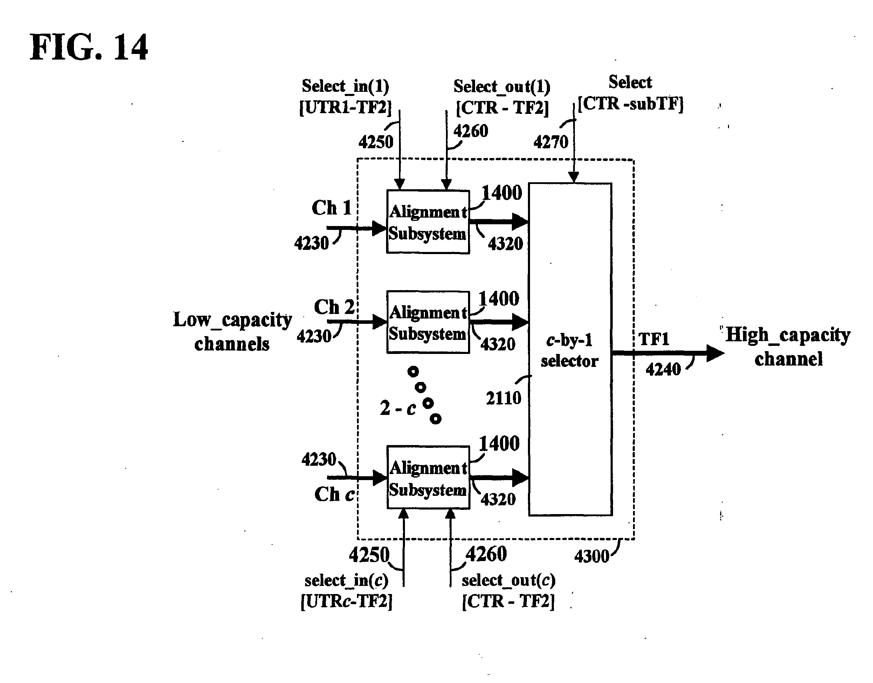

A possible implementation of the grooming module **4300** is shown in FIG. 14. An array of alignment subsystems **1400** receives data units from the low capacity input channels **4230**. After having been aligned to the CTR **002** within the alignment subsystem, the data units received over different input channels in a previous time frame are sent to the high capacity output channel **4240.** Data units to be transmitted over the high capacity output channel **4240** during each predefined sub-time frame are retrieved from their respective alignment subsystem **1400** through the data lines **4320**. The specific one of the alignment subsystems **1400** from which data units are to be retrieved to be transmitted over the high capacity output channel **4240** is selected by a c-by-1 selector **2110** in each sub-time frame responsive to the Select signal **4270** from the grooming controller **4220**.

FIG. 14 shows the sample implementation of a grooming module **4300** with ***c*** low capacity input channels **4230**. The same architecture with ***c***=4 can be used in the implementation of the grooming module **4300** comprised within the grooming systems **4200** deployed in the sample grooming scenario presented in FIG. 11. For example, the grooming module **4300** within one of the grooming systems **4200-b** operates between four input channels **4230** having capacity Low_capacity=622 Mb/s (OC-12 **4010)** and an output channel **4240** having capacity **High_capacity**=2.5 Gb/s (OC-48 **4030).**

An alternative implementation of the grooming module 4300 comprises a buffer queue between the *c*-by-1 selector **2110** and the output channel **4240**. Such buffer queue - not shown in the block diagram depicted in FIG. 14 - decouples the transmission of data units on lines **4320** and through the *c*-by-1 selector **2110** from the transmission on the output channel **4240**.

### Degrooming Deployment:

FIG. 15 shows a typical degrooming scenario based on channels of the SONET (Synchronous Optical NETwork) hierarchy. Data units transmitted through a single OC-768 (40 Mb/s) channel are de-aggregated and transmitted over a plurality of OC-3 (155 Mb/s) channels. The de-aggregation, or degrooming, architecture shown in FIG. 15 is based on degrooming systems **5200-a** through **5200-d**.

The traffic carried over an OC-768 (40 Gb/s) channel **4050** is divided by a degrooming system **5200-a** over four separate OC-192 (10 Gb/s) channels **4040.** In a real world scenario, the network shown in FIG. 15 could be the network of a service provider offering access to a plurality of customers. The traffic in the intercontinental backbone of the network is handled by Time driven Switches or Time driven Priority switches **4060** that forward backbone traffic directed to a given continental area over an OC-768 channel **4050**. Traffic from the intercontinental backbone is divided over four OC-192 (10 Gb/s) channels **4040** to be carried to four distinct continental de-aggregation points.

In FIG. 15, each one of the degrooming systems **5200-b** in the continental de-aggregation points divides the traffic received over its respective OC-192 channel **4040** over four distinct OC-48 (2.5 Gb/s) channels **4030** which are connected to respective regional de-aggregation points.

In FIG. 15, each one of the degrooming systems **5200-c** divides the traffic received over a respective one OC-48 channel **4030** over four distinct OC-12 (622 Mb/s) channels **4010**. In a real world example, a service provider could use this architecture to divide the traffic received at a regional aggregation point through an OC-48 channel **4030** and addressed to customers located in various metropolitan areas geographically close and connected through OC-12 channels **4010** to the regional aggregation point.

In FIG. 15, each of the degrooming systems **5200-d** in the Point of Presence (POP) of the provider within metropolitan areas receives traffic through an OC-12 channel **4010** and divides it over four OC-3 (155 Mb/s) channels **4020,** each one connected to a respective customer. The local area networks of the customers are connected to a Time driven Switch or a Time driven Priority switch **4060** which receives their traffic through a respective one of the OC-3 links **4020**.

The degrooming architecture depicted in FIG. 15 allows all the traffic addressed to all the customers of the service provider to be routed by a switching system **4060** operating according to either Time driven Switching or Time driven Priority on a single OC-768 channel **4050**. The traffic is further divided over lower capacity channels until it reaches the intended customer over its respective OC-3 channel **4020**.

### Degrooming Realization:

FIG. 16 shows a schematic description of the operation of a degrooming system **5200**. The degrooming system **5200** in FIG. 16 has one high capacity input channel and four low capacity output channels. De-multiplexing of data units received from the input channel over the four output channels during transmission can be done at least at two levels: (i) the channel capacity level - also called inter-time frame degrooming - and (ii) the channel capacity and time frame level. FIG. 16A shows an example of de-multiplexing (or degrooming) at both the channel capacity and time frame level; FIG. 16B shows an example of de-multiplexing (or degrooming) at the channel capacity level - also called inter-time frame degrooming.

In FIG. 16, time frames of duration **TF2** are deployed on the four output channels **Channel1** through **Channel4** that have capacity **Low_capacity**. Consequently time frames have size **X** bits. A different time frame duration and possibly time frame size is used on the input **Channel5** that has capacity **High_capacity.** In a sample configuration, **Low_capacity** could be 2.5 Gb/s (OC-48) and **High_capacity** could be 10 Gb/s (OC-192), with **TF2**=25 microseconds and **TF1**=12.5 microseconds. In this scenario the size of the time frames **TF1** is double the size of the time frames **TF2.** FIG. 16A depicts such a configuration which could be the configuration of a degrooming system **5200-b** in FIG. 15.

In the sample configuration depicted in FIG. 16A, the size of the time frames **TF1** deployed on the input channel **Channel5** is double (2·**X** bits) the size of the time frames **TF2** deployed on the four output channels **(X** bits). The degrooming system **5200** receives **2·X** bits from the input channel **Channel5** during a first selected time frame **5120** of duration **TF1** and another **2·X** bits from the input channel **Channel5** during a second selected time frame **5125** of duration **TF1.**

According to the configuration presented in FIG. 16, during a third selected time frame of duration **TF2**, the degrooming system **5200** transmits over the output channels **Channel1** through **Channel4** the 4·**X** bits received from the from the input channel **Channel5** during the first selected time frame **5120** and the second selected time frame **5125**, wherein the third selected time frame follows the first **5120** and the second **5125** selected time frames.

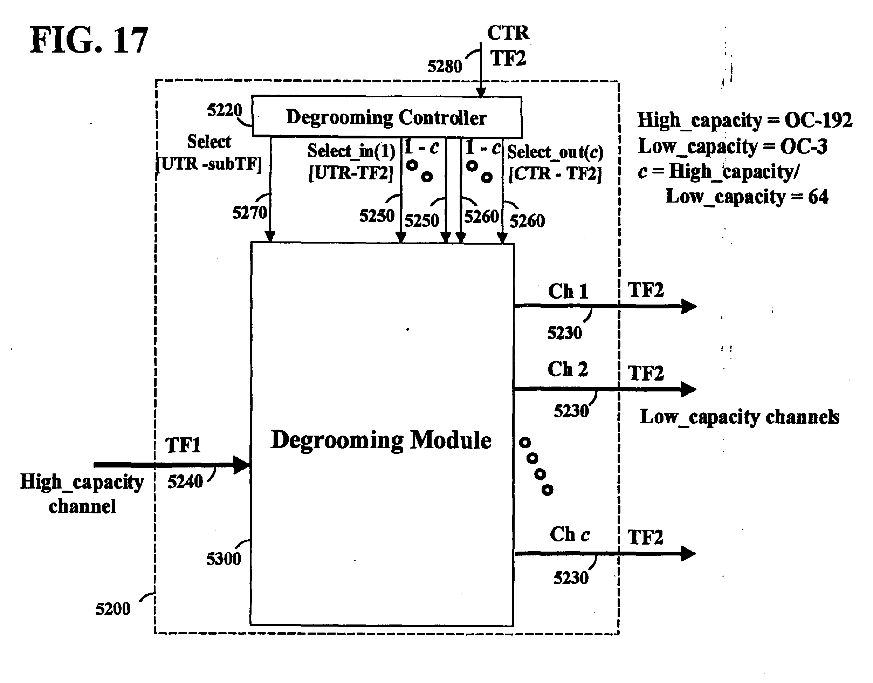

In a possible embodiment, the **X** bits received from **Channel5** during a first selected sub-time frame **d** of the first time frame **5120** of duration **subTF=TF1/2** are transmitted on a predefined output channel **Channel3,** as shown in the example in FIG. 17. The **X** bits received from **Channel5** during a second selected sub-time frame **c** of the first time frame **5120** of duration **subTF=TF1/2** are transmitted on a predefined output channel **Channel2.**

In FIG. 16, the two sub-time frames **c** and **d** of the first selected time frame **5120** can be delineated by a sub-time frame delimiter that can be either an implicit one or an explicit one implemented according to the methods described later in this disclosure. The sub-time delimiter may comprise a time frame identifier implemented according to the methods described later in this disclosure. The time frame identifier identifies the sub-time frame within its time frame or the time frame within its time cycle.

The time frame identifier can carry control information regarding the data units belonging to the corresponding time frame or sub-time frame. For example, when the bits received during a time frame had been previously aggregated by a grooming system after having been received either over a plurality of input channels or during a plurality of time frames, the time frame identifier can identify at least one of the input channels over which the bits were received and the time frame during which the bits were received.

In a possible embodiment, a degrooming system **5200** selects the output channel and the time frame during which data units are to be transmitted over the selected output channel responsive to the control information contained in the identifier of time frame or sub-time frame during which the data units were received. In the example shown in FIG. 16A, the first selected sub-time frame **d** of the first time frame **5120** during which **X** bits are received from the input channel **Channel5** has an identifier uniquely associated to the **X** bits. Responsive to such an identifier, the degrooming system **5200** forwards the respective **X** bits over the output channel **Channel3** during the third selected time frame. In other words, the output channel **Channel3** and the third selected time frame are chosen responsive to the identifier of sub-time frame **d** of time frame **5120**.

Alternatively, delimiters can be realized as an optical signal carried on the communications link coupled to input i. A possible embodiment of time frame delimiter consists of dedicating one of the wavelengths of the communications link for transmission of the delimiter.

In a third alternative embodiment, the **X** bits transmitted on **Channel3** and the **X** bits transmitted on **Channel2** are multiplexed and received from **Channel5** during the first time frame **5120**.

The 2·**X** bits received from **Channel5** during a the second selected time frame **5125** of duration **TF1** are transmitted by the degrooming system **5200** on two predefined output channels **Channel4** and **Channel1** during the third selected time frame of duration **TF2,** as shown in the example in FIG. 17. The **2·X** bits transmitted over **Channel4** and **Channel1** can be received from **Channel5** either during two separate sub-time frames, during a plurality of distinct multiplexed sub-time frames, or multiplexed during the time frame **5125**, similarly to what was described above for the reception of the **2·X** bits received from **Channel5.**

In a possible configuration, the second selected time frame **5125** follows the first selected time frame **5120,** as shown in the example depicted in FIG. 16A. In an alternative configuration, the first selected time frame **5120** follows the second selected time frame **5125**.

In a possible configuration, the first time frame **5120** is adjacent to the second time frame **5125**, as shown in the example depicted in FIG. 16A. In an alternative configuration, the first time frame **5120** is not adjacent to the second time frame **5125**.

In the sample configuration depicted in FIG. 16B, the size of the time frames **TF1** deployed on the input channel **Channel5** is the same as the size of the time frames **TF2** deployed on the four output channels **(X** bits). The degrooming system **5200** receives **4·X** bits from the input channel **Channel5** during four-selected time frames **5130** through **5137** of duration **TF3**.

During a fifth selected time frame of duration **TF2**, the degrooming system **5200** transmits the **X** bits received, during the first selected time frame **5130**, from the input channel **Channel5** over the output channel **Channel1,** wherein the fifth selected time frame of duration **TF2** follows the first selected time frame **5130**.

During a fifth selected time frame of duration **TF2**, the degrooming system **5200** transmits the **X** bits received, during the second selected time frame **5133,** from the input channel **Channel5** over the output channel **Channel4** , wherein the fifth selected time frame of duration **TF2** follows the second selected time frame **5133**.

During a fifth selected time frame of duration **TF2,** the degrooming system **5200** transmits the **X** bits received, during the third selected time frame **5137,** from the input channel **Channel5** over the output channel **Channel2** , wherein the fifth selected time frame of duration **TF2** follows the third selected time frame **5137.**

During a fifth selected time frame of duration **TF2**, the degrooming system **5200** transmits the **X** bits received, during the fourth selected time frame **5135,** from the input channel **Channel5** over the output channel **Channel1** , wherein the fifth selected time frame of duration **TF2** follows the fourth selected time frame **5135**.

In a possible configuration, the fourth selected time frame **5135** follows the third selected time frame **5137**, that in turn follows the second selected time frame **5133**, which in turn follows the first selected time frame **5130,** as shown in the example depicted in FIG. 16A. In alternative configurations, the four time frames **5130** through **5137** follow each other in any other possible order.

In a possible configuration, the four time frames **5130** through **5137** are adjacent, as shown in the example depicted in FIG. 16A. In an alternative configuration, the four time frames **5130** through **5137** are not all adjacent to at least one of the others. In a possible configuration, each of the four time frames **5130** through **5137** is not adjacent to any one of the others.

FIG. 17 depicts the architecture of a possible embodiment of a degrooming system **5200** comprising a Degrooming Controller **5220** and a Degrooming Module **5300** between a high capacity input channel **5240** and a plurality of lower capacity output channels **5230**. In the sample configuration shown in FIG. 17, the degrooming system **5200** has ***c*** output channels at capacity **Low_capacity** and one input channel at capacity **High_capacity,** where **High_capacity=*c*·Low_capacity.**

The degrooming module **5300** de-aggregates data units received from the input channel **5240** for transmission over the output channels **5230** responsive to the control signals **5250, 5260,** and **5270** from the degrooming controller **5220**. The degrooming controller **5220** generates the control signals for the degrooming module **5300** responsive to the common time reference (CTR) **002** received through an external control line **5280** and responsive to the unique time reference (UTR) coupled with the input channel **5240.** The degrooming controller **5220** devises the UTR by means of at least one of the time frame delimiters and sub-time frame delimiters embedded in the flow of data according to at least one of the methods described later in the present disclosure.

The control signals sent from the degrooming controller **5220** to the degrooming module **5300** comprise a Select_in signal **5250** for each one of the plurality of output channels **5230,** a Select_out signal **5260** for each one of the plurality of output channels **5230,** and a Select signal **5270.**

Each Select_in signal **5250** is aligned to the UTR coupled with the input channel **5240** and has a period equal to the time frame duration **TF2** deployed on the corresponding output channel **5230**.

Each Select_out signal **5260** is aligned to the **CTR** and has a period equal to the time frame duration **TF2** deployed on the corresponding output channel **5230**.

The Select signal **5270** is aligned to the UTR devised from the input channel **5240** and has a period equal to the sub-time frame duration **subTF** deployed on the input channel **5240**.

The degrooming systems **5200-a** through **5200-d** deployed in the degrooming scenario presented in FIG. 15 can be implemented using the architecture shown in FIG. 17, where ***c***=4. For example, the Degrooming systems **5200-b** can be implemented with the architecture shown in FIG. 17, where **Low_capacity**=2.5 Gb/s (OC-48 **4030**) and **High_capacity=10 Gb/s (OC-192 4040).**

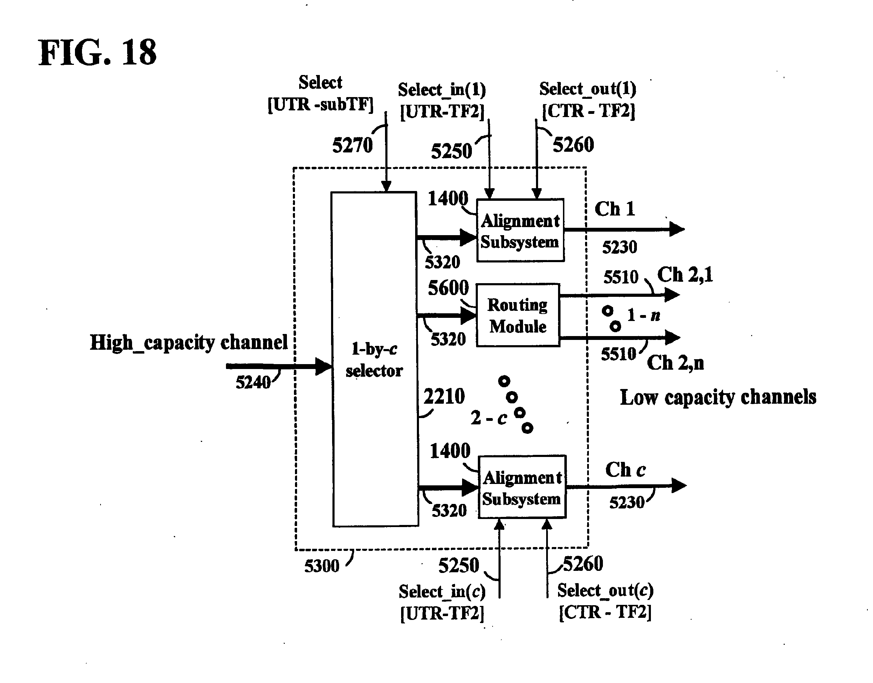

Another alternative implementation of the degrooming module **5300** is shown in FIG. 18. The embodiment of degrooming module **5300** shown in FIG. 18 comprises a plurality of alignment subsystems **1400**, at least one of a plurality of routing modules **5600,** and a 1-by-*c* selector **2210.** The embodiment of degrooming module **5300** depicted in FIG. 18 combines synchronous (time-based) degrooming with asynchronous (routing-based) degrooming.

In FIG. 18, each Alignment Subsystem **1400** and each routing module **5600** handle data units received during a specific sub-time frame of a first time frame from the high capacity channel **5240**. Data units are received by each Alignment Subsystem **1400** and each routing module **5600** through a respective one of the data lines **5320** from the 1-by-*c* selector **2210.**

In the embodiment shown in FIG. 18, after having been aligned to the CTR **002** within the alignment subsystem **1400**, the data units received over the high capacity input line **5320** during a respective sub-time frame of a first time frame are transmitted over the corresponding low capacity output channel **5230** during a second time frame, wherein the second time frame follows the first time frame. The specific one of the alignment subsystems **1400** in which data units are to be transferred through a respective one of the data lines **5320** is selected by the 1-by-*c* selector **2210** in each sub-time frame responsive to the Select signal **5270** from the degrooming controller **5220**.

In the embodiment shown in FIG. 18, the data units received by each of the routing modules **5600** over the high capacity input line **5320** during a respective sub-time frame of a first selected time frame are transmitted over at least one of a plurality of output channels **5510** at a non previously selected time following the first selected time frame. The specific one of the routing modules **5600** in which data units are to be transferred through a respective one of the data lines **5320** is selected by the 1-by-c selector **2210** in each sub-time frame responsive to the Select signal **5270** from the degrooming controller **5220**.

The routing module **5600** is equipped with at least one output channel **5510**. In one possible implementation, each of the ***n*** output channels **5510** has capacity **Low_capacity/*n*.** In a possible alternative implementation, each of the output channels **5510** has capacity **Low_capacity.** In an alternative implementation, each of the output channels **5510** has capacity **High_capacity.** In an alternative embodiment, output channels **5510** have different capacities, including but not limited to, **Low_capacity**, **High_capacity,** and a fraction or multiple thereof.

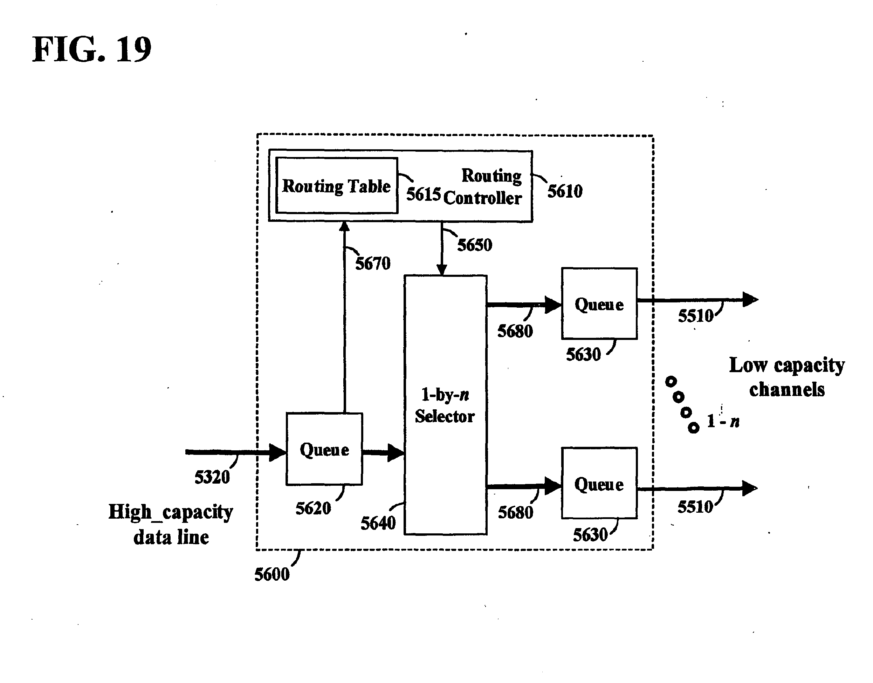

FIG. 19 shows the architecture of a possible embodiment of the routing module **5600** comprising one input queue **5620**, a 1-by-n selector **5640**, a plurality of output queues **5630**, and a routing controller **5610**. Data units received from the high capacity data line **5320** are stored in the input queue **5620** while waiting for the routing controller **5610** to process them. Based on the control information associated to the data unit at the head of the input queue **5620**, the routing controller **5610** determines the output channel **5510** on which said data unit is to be transmitted. In a possible embodiment, the routing controller **5610** retrieves the control information associated with the data units in the input queue **5620** through a data line **5670** and looks up the retrieved control information in a routing table **5615**. The selected routing table entry identifies the output channel **5510** on which the corresponding data unit is to be transmitted. The routing controller **5610** selects the corresponding output **5680** of the selector **5640** and the processed data unit is stored in the corresponding output queue **5630** until the corresponding output channel **5510** is available for transmission.

In a possible implementation data units are packets and the control information is contained in the packet's header. In a possible embodiment, packets are IP (Internet Protocol) packets and the control information processed by the routing controller **5610**, as in FIG. 19, is the destination address contained in the respective field of the IP header. In another embodiment, data units are ATM (Asynchronous Transfer Mode) cells and the control information is at least one of the VPI (Virtual Path Identifier) and VCI (Virtual Connection Identifier) in the cell header.

### SONET Switching with Common Time Reference

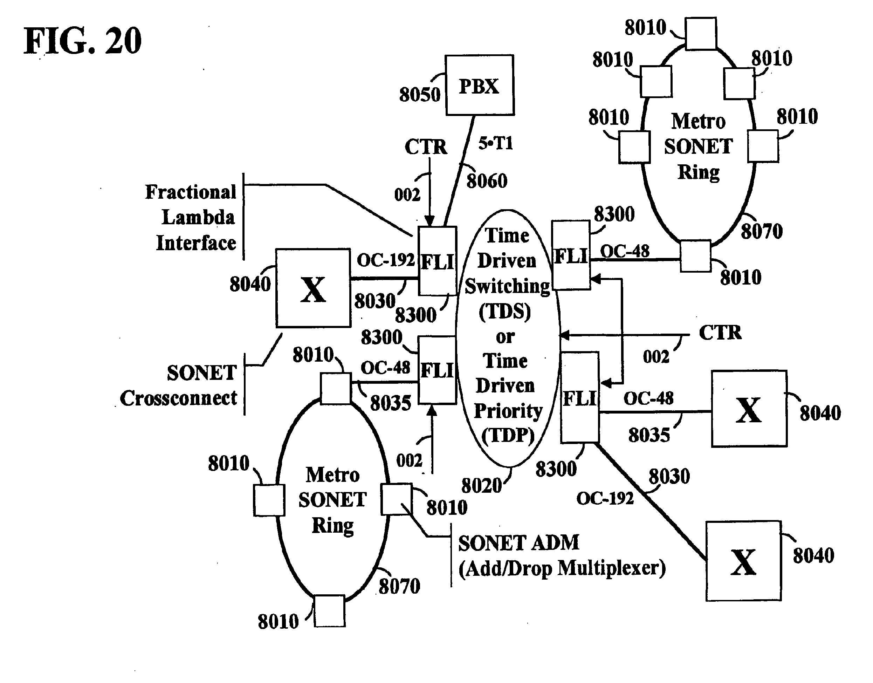

Time driven switching can be used to implement very high capacity switching systems for SONET/SDH (Synchronous Optical NETwork/Synchronous Digital Hierarchy) channels. FIG. 20 shows a scenario where at least one of a time driven switching network i.e., a network composed of a plurality of time driven switches interconnected in an arbitrary topology by communications links and a time driven priority network [C-S Li, Y. Ofek and M. Yung, "Time driven Priority Flow Control for Real-time Heterogeneous Internetworking," IEEE INFOCOM'96, Apr. 1996.] is deployed to provide SONET/SDH services. A SONET channel, also called path, can be created across native SONET equipment (such as SONET cross connects **8040** and SONET add/drop multiplexers **8010**) and the time driven switches used to realize a time driven switching subnetwork **8020.**

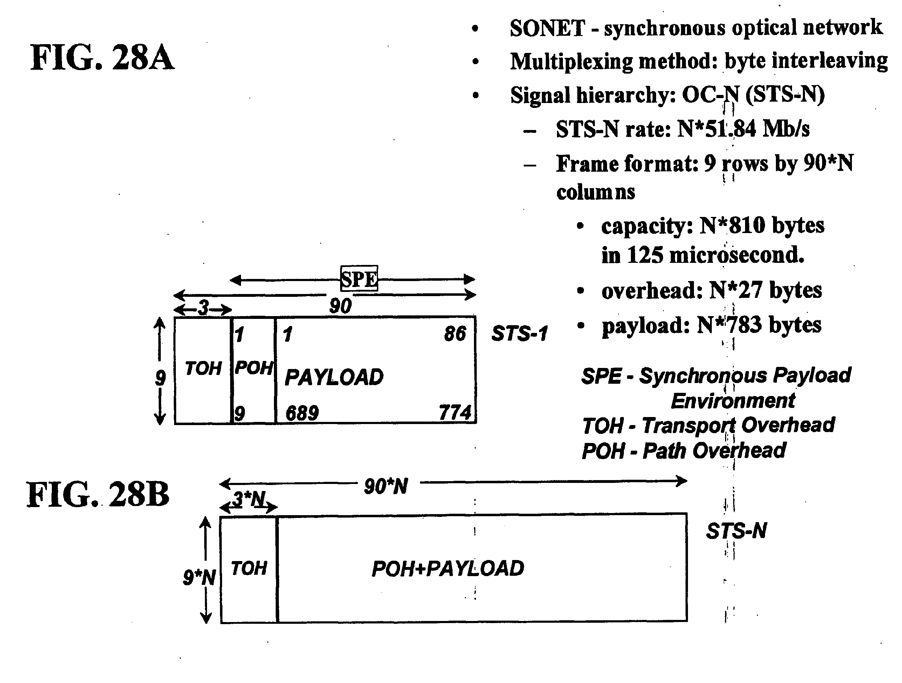

SONET frames, whose structure is depicted in FIG. 28, can be exploited to embed control information in the flow of data units. FIG. 28A is the structure of a STS-1 (Synchronous Transport Signal) frame used for transmission on channels at speed 51.84 Mb/s, and FIG. 28B shows the structure of an STS-N frame used for transmission on channels at speed N·51.84 Mb/s. The STS-1 frame is organized in rows and columns; the frame is transmitted on a serial communications channel, e.g., **920** in FIG. 1, by rows. The STS-1 frame is composed of 9 lines of 90 bytes. The first 3 bytes of every row carry control information called Transport Overhead **TOH.** The control information in the Transport Overhead **TOH** is used by the network elements at the end points of sections (repeaters) and lines (add-drop multiplexers). The remaining 87 bytes on each row are transported between the end points of a communication.

Data traveling end to end is not put in the STS-1 frame simply starting from column 3 of row 1. Instead, data is inserted in what is called a SONET Payload Environment **SPE** that can start at any position within the rightmost 87 columns of the STS-1 frame. The SPE is said to float within the payload of the STS-1 frame. Two of the bytes in the **TOH,** called bytes H1 and H2, are a pointer to the position of the SPE within the STS-1 frame.

The SPE, comprising 9 rows of 87 bytes, is further divided in a payload part **PAYLOAD** and an overhead part, called Path Overhead **POH** that consists of the first byte of each row-first column. User data traveling on a communications channel defined over a SONET network are carried within the **PAYLOAD** part. The STS-N frame, shown in FIG. 28B, is obtained by byte interleaving N STS-1 frames. As a result, the first 3·N columns of an STS-N frame contain the transport overhead **TOH**, while the remaining N·87 columns contain N SPEs, each one possibly floating independently. An STS-N frame (with N ≥ 1) is transmitted in 125 microseconds, resulting in a transmission speed of N.51.84 Mb/s.

As shown in FIG. 20, native SONET devices access the services of the time driven switching subnetwork **8020** through a fractional lambda interface **8300**. In the ingress direction, the fractional lambda interface **8300** provides time framing and synchronization with the CTR (common time reference) of STS-N frames prior to transmission within the time driven switching or time driven priority subnetwork **8020**. In the egress direction the fractional lambda interface **8300** provides time de-framing and synchronization to the SONET network time reference of STS-N frames prior to transmission within a SONET subnetwork. Native SONET devices, for example, SONET cross-connects **8040**, and SONET Add/Drop Multiplexers **8010**, that are part of SONET rings **8070** in FIG. 20, and SONET CPE (customer premise equipment; for example PBXs **8050**, in FIG. 20) are connected to fractional lambda interfaces **8300** through SONET channels (for example, OC-48 **8035**, OC-192 **8030**) in the scenario shown in FIG. 20, and fractional channels (e.g., 5 bundled, or concatenated, T1 channels **8060**) in the sample scenario shown in FIG. 20. Since the fractional lambda interfaces **8300** deployed in this scenario are used to provide SONET services, they are also called SONET fractional lambda interfaces (or SONET FLI) in the reminder of this document.

In a sample scenario, with reference to FIG. 20, a SONET channel created through a SONET cross-connect **8040** is routed over a link connected to a respective SONET fractional lambda interface **8300**, switched through the TDS subnetwork **8020** towards an egress point and through the corresponding fractional lambda interface **8300** over a link connected to a SONET Add/Drop multiplexer **8010** that inserts the channel over a SONET metropolitan ring **8070**.

The time driven switching network **8020** operates as a SONET Network Element (NE) providing section level termination. In an alternative embodiment, the TDS network **8020** is transparent to the SONET equipment. In another alternative embodiment, the TDS network **8020** acts as a SONET user providing path level termination.

A SONET channel entering the TDS subnetwork **8020** through a fractional lambda interface **8300** can be switched to a single egress point, or its component SONET sub-channels can be switched to different egress points. For example, a whole OC-192 **8030** channel entering the TDS subnetwork can be switched to an egress point to which native SONET equipment is connected through an OC-192 **8030** or higher capacity SONET channel. Alternatively, an OC-192 **8030** channel entering the TDS subnetwork can be de-multiplexed in its four OC-48 components channel and each component channel can be switched separately to a plurality of egress points to which native SONET equipment is connected via an OC-48 **8035**, OC-192 **8030**, or higher capacity SONET channel. If the original OC-48 channel exits the networks through an egress point connected to an OC-192 **8030** or higher capacity channel, the egress fractional lambda interface **8300** is responsible for multiplexing the OC-48 channel **8035** with others within the outgoing SONET channel.

Multiple SONET channels entering the TDS subnetwork **8020** through a selected fractional lambda interface **8300** multiplexed over the same access link - for example using WDM (Wavelength Division Multiplexing) - can be switched to a single egress point or to different egress points.

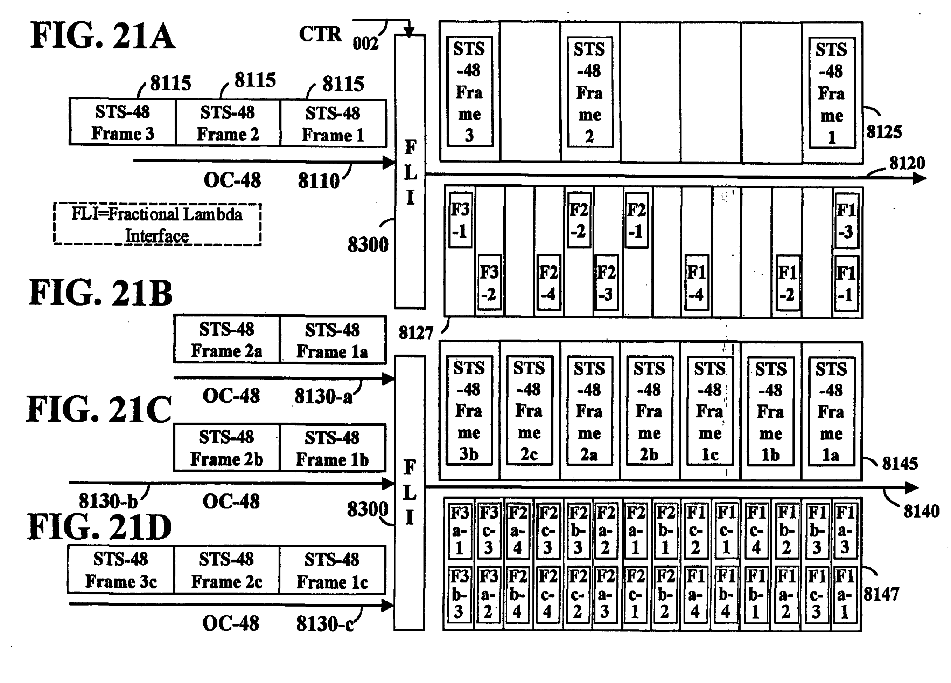

FIG. 21, FIG. 22, FIG. 26, and FIG. 27 show a schematic description of the time framing and multiplexing operations as performed by alternative embodiments of a fractional lambda interface **8300** providing SONET services.

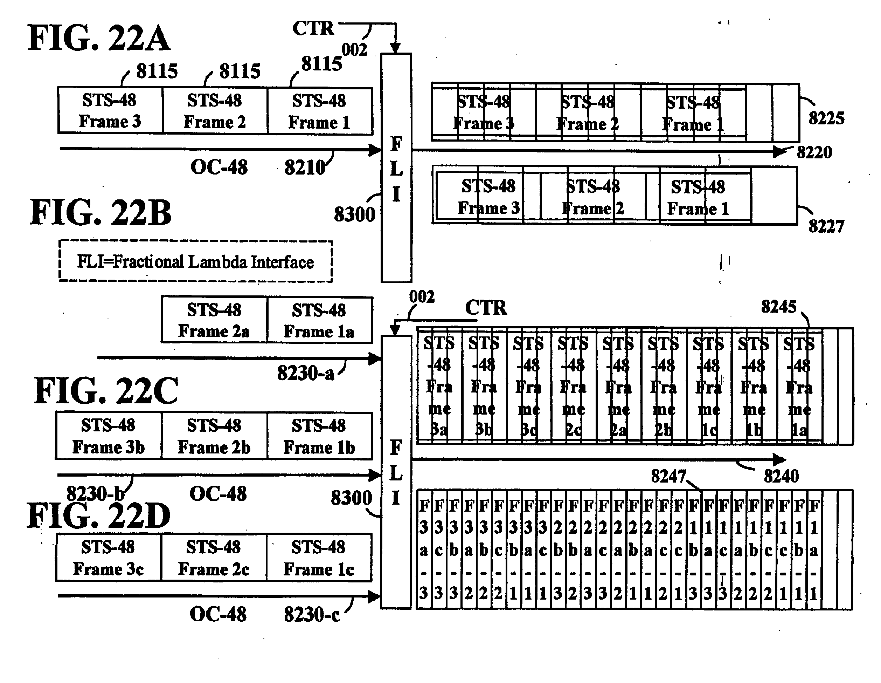

FIG. 21A and FIG. 21B show a fractional lambda interface (FLI) **8300** with one OC-48 (2.5 Gb/s) input channel **8110** and one output channel **8120** that has a capacity about three times the capacity of the respective OC-48 input channel **8110**. FIG. 22A and FIG. 22B show a fractional lambda interface (FLI) **8300** with one OC-48 (2.5 Gb/s) input channel **8210** and one output channel **8220** that has about the same capacity as the respective OC-48 input channel **8210**.

FIG. 21C, FIG. 21D, FIG. 22C, and FIG. 22D show a fractional lambda interface (FLI) **8300** with three OC-48 (2.5 Gb/s) input channels **8130** and **8230**, and one output channel **8140** and **8240**, respectively, that has a capacity about three times the capacity of each of the respective OC-48 input channels **8130** and **8230**.

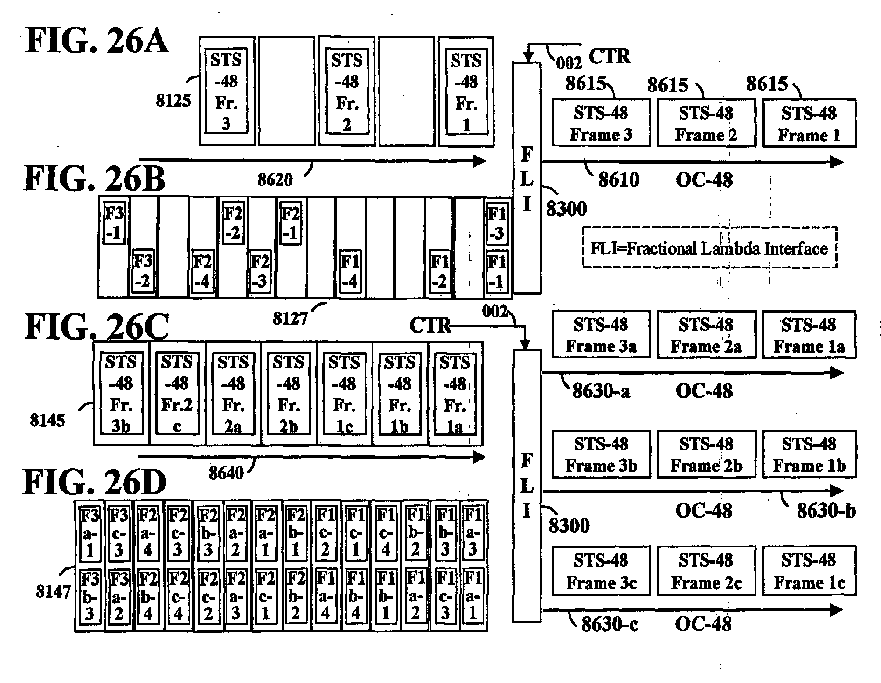

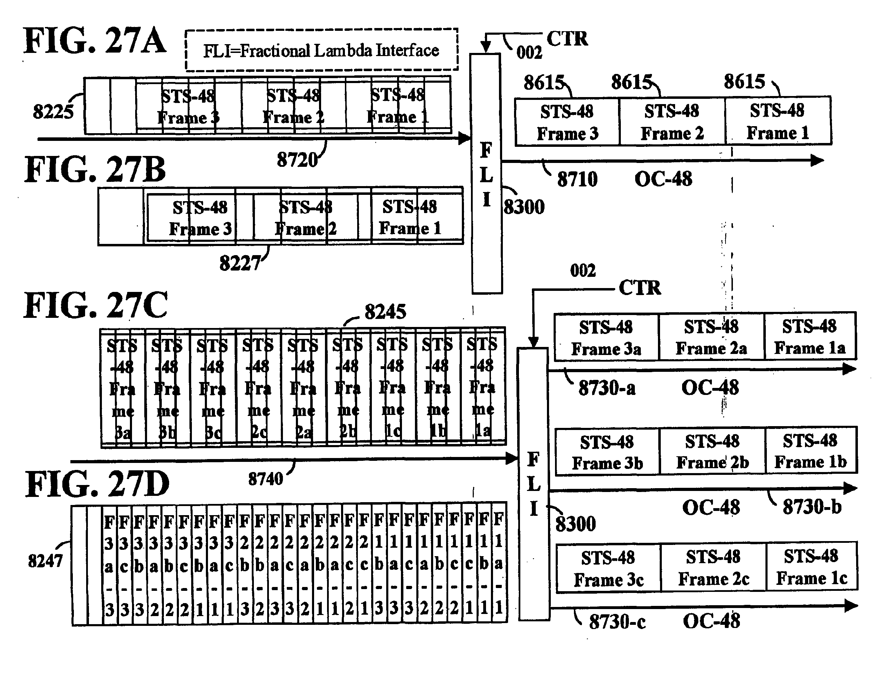

FIG. 26A and FIG. 26B show a fractional lambda interface (FLI) **8300** with one OC-48 (2.5 Gb/s) output channel **8610** and one input channel **8620** that has a capacity about three times that of the respective OC-48 output channel **8610**. FIG. 27A and FIG. 27B show a fractional lambda interface (FLI) **8300** with one OC-48 (2.5 Gb/s) output channel **8710** and one input channel **8720** that has about the same capacity as the respective OC-48 output channel **8710.**

FIG. 26C, FIG. 26D, FIG. 27C, and FIG. 27D show a fractional lambda interface (FLI) 8300 with three OC-48 (2.5 Gb/s) output channels **8630** and **8730** and one input channel **8640** and **8740**, respectively, that has a capacity about three times that of the respective OC-48 output channels **8630** and **8730**.

FIG. 21A shows a scenario in which each STS-48 frame **8115** received on the OC-48 input channel **8110** is transmitted over the output channel **8120** during a single time frame **8125.** Given the capacity of the output channel **8120** (three times the capacity of the input channel **8110**) and the duration of time frames **8125** on the output channel **8120**, one STS-48 frame is transmitted over the output channel **8120** on average every three time frames.

In a possible embodiment, the whole STS-48 frame **8115** received on the input channel **8110** is transmitted on the output channel **8120**. In an alternative embodiment, only the Synchronous Payload Environment (see FIG. 28) is transmitted over the output channel **8120**.

The mapping between the STS-48 frames and the time frames during which they are transmitted on the output channel **8120** in FIG. 21 repeats every time cycle or super cycle.

The time frames **8125** on the output channel **8120** are delineated according to at least one of the methods presented earlier in this disclosure.

In a possible embodiment, time frame delineation on the output channel **8120** is provided at the network layer (as defined within the ISO OSI layered model) - for example, carrying control information for time frame delineation within the Internet Protocol (IP) payload or header. Each STS-48 frame transmitted on the output channel **8120** is encapsulated in an IP packet.

In an alternative embodiment, time frame delineation is provided at the data link layer - for example, carrying control information for time frame delineation within the Point-to-Point Protocol (PPP) payload or header. Each STS-48 frame transmitted on the output channel **8120** is encapsulated in a PPP packet.

In another alternative embodiment, time frame delineation is provided at the physical layer - for example, carrying control information for time frame delineation within the SONET frame. In a possible implementation, the SPE of the STS-48 frames **8115** received on the input channel **8110** are aligned to the common time reference (CTR) when transmitted on the output channel **8120**. On the output channel **8120** and within the TDS network, the bytes H1 and H2 in the transport overhead **TOH,** which point to the position of the SPE within the STS frame, can be used as a time frame delimiter **D-frame.** In this implementation, the beginning of a time frame, sub-time frame, control time frame, or time cycle- depending on the delimiter being implemented - must coincide with the beginning of the SPE. In other words, the SPE must be aligned with the common time reference (CTR) employed on the output channel **8120** and within the TDS network.

If time frame delineation is provided at the physical layer using a digital wrapper - for example by carrying control information for time frame delineation within the digital wrapper - the STS-48 frames **8115** or their SPEs are encapsulated in the payload of the digital wrapper.

FIG. 26A shows how the STS-48 frames **8615**, time framed and transmitted according to the embodiment presented in FIG. 21A, are time de-framed and forwarded on a SONET channel **8610**. In the scenario depicted in FIG. 26A each STS-48 frame received from the input channel 8620 during a single time frame **8125** is transmitted over the output channel **8610** according to the SONET standard. Given the capacity of the input channel **8820** (three times the capacity of the output channel **8610**) and the duration of time frames **8125** on the input channel **8620**, one STS-48 frame is received from the input channel **8620** on average every three time frames.

In a possible embodiment of the system presented in FIG. 26, whole STS-48 frames are received from the input channel **8620** and transmitted on the output channel **8610**. In an alternative embodiment, only the Synchronous Payload Environment (see FIG. 28) are received from the input channel **8620** and a corresponding complete STS-48 frame **8615** must be constructed prior to transmission over the output channel **8610.**

The pattern of time frames during which STS-48 frames are received on the input channel **8620** in FIG. 26 repeats every time cycle or super cycle. The time frames **8125** on the input channel **8620** are delineated according to at least one of the methods presented earlier in this disclosure.

FIG. 21B shows a scenario in which each STS-48 frame i **8115** received on the OC-48 channel **8110** is de-multiplexed in its four STS-12 tributaries **Fi-1, Fi-2, Fi-3,** and **Fi-4**. Each STS-12 tributary frame is transmitted over the output channel **8120** during a single time frame **8127**. Given the capacity of the output channel **8120** (three times the capacity of the input channel **8110**) and the duration of time frames **8127** on the output channel **8120**, the four tributary STS-12 frames composing one STS-48 frame are transmitted over the output channel **8120** during selected ones of six consecutive time frames **8127**.

In the example shown in FIG. 21B, the first STS-48 frame Frame 1 received on the input channel **8110** is de-multiplexed in its four STS-12 tributaries **F1-1, F1-2, F1-3,** and **F1-4.** Frames **F1-1** and **F1-3** are transmitted over the output channel **8120** during a selected first time frame **8127.** Frame **F1-2** is transmitted during a second selected time frame **8127,** while **F1-4** is transmitted during a third selected time frame, wherein the third selected time frame follows the second one, and the second selected time frame follows the first one, wherein the three selected time frame are not consecutive. In an alternative embodiment, at least two of the three selected time frames are consecutive.

In a possible embodiment, the mapping between the STS-12 frames and the time frame during which they are transmitted on the output channel **8120** repeats every time cycle or super cycle.

As shown in FIG. 21B, more than one STS-12 frame can be transmitted during the same time frame **8127**. In a possible implementation SONET frames are transmitted in an arbitrary order during the relative time frame. In another possible implementation, each SONET frame is transmitted in a separate pre-defined sub-time frame. The time frames **8127** and sub-time frames (containing different STS-12 frames) on the output channel **8120** are delineated according to at least one of the methods presented earlier in this disclosure.

In a possible embodiment, whole STS-12 frames are transmitted on the output channel **8120.** In an alternative embodiment, only the Synchronous Payload Environment (see FIG. 28) of each STS-12 frame is transmitted over the output channel 8120.

In a possible embodiment, selected STS-12 frames are transmitted during the same time frame **8127**. For example, STS-12 frames belonging to concatenated STS-12 channels can be sent during the same time frame 8127, possibly without having been previously byte de-multiplexed.

FIG. 26B shows how STS-48 frames **8615** de-multiplexed, time framed, and transmitted according to the embodiment presented in FIG. 21B are later time de-framed, multiplexed, and forwarded on a SONET channel **8610** by a FLI **8300.** In the scenario depicted in FIG. 26B, each of the four STS-12 tributaries of an STS-48 frame **8615** is received from the input channel **8620** during a single time frame **8127**. The four STS-12 tributaries of each STS-48 frame **8615** are multiplexed according to the SONET standard to obtain the corresponding STS-48 frame. Given the capacity of the input channel **8620** (three times the capacity of the output channel **8610**) and the duration of time frames **8127** on the input channel **8620**, the four tributary STS-12 frames composing one STS-48 frame **8615** are received from the input channel **8620** during selected ones of six consecutive time frames **8127**.

In the example shown in FIG. 26B, a first STS-48 frame Frame 1 was previously de-multiplexed in its four STS-12 tributaries: **FI-1, F1-2, F1-3,** and **F1-4.** Frames **F1-1** and **F1-3** are received from the input channel **8620** during a selected first time frame **8127**. Frame **F1-2** is received during a second selected time frame **8127**, while **F1-4** is received during a third selected time frame, wherein the third selected time frame follows the second one, and the second selected time frame follows the first one, wherein the three selected time frames are not consecutive. In an alternative embodiment, at least two of the three selected time frames are consecutive.

Once the four tributaries **F1-1**, **F1-2, F1-3,** and **F1-4** being part of one STS-48 frame have been received, they are multiplexed according to the SONET standard to compose the original STS-48 frame that is subsequently transmitted on the SONET OC-48 output channel **8610.**

In a possible embodiment, the mapping between the tributary STS-12 frames belonging to a given STS-48 frame and the time frame during which they are received on the input channel **8620** repeats every time cycle or super cycle.

More than one STS-12 frame can be received during the same time frame **8127**. In a possible implementation SONET frames are received in an arbitrary order during the relative time frame. In another possible implementation, each SONET frame is received in a separate pre-defined sub-time frame. The time frames **8127** and sub-time frames (containing different STS-12 frames) on the input channel **8620** are delineated according to at least one of the methods presented earlier in this disclosure.

In a possible embodiment, whole STS-12 frames are received from the input channel 8620. In an alternative embodiment, only the Synchronous Payload Environment (see FIG. 28) of each STS-12 frame is received over the input channel 8620, in which case the fractional lambda interface **8300** is responsible for reconstructing the whole STS-12 frame before multiplexing the tributaries in the original STS-48 frame.

In a possible embodiment, selected STS-12 frames are received during the same time frame **8127.** For example, STS-12 frames belonging to concatenated STS-12 channels can be received during the same time frame **8127**, possibly without having been previously byte de-multiplexed.

FIG. 21C shows a scenario in which each STS-48 frame received on the OC-48 input channels **8130-a** through **8130-c** is transmitted over the output channel **8140** during a single time frame **8145**. Given the capacity of the output channel **8140** (three times the capacity of each input channel **8130-a** through **8130-c**) and the duration of time frames **8145** on the output channel **8140**, one STS-48 frame from a selected one of the input channels **8130-a** through **8130-c** is transmitted over the output channel **8140** on average every three time frames.

STS-48 frames from different input channels **8130-a** through **8130-c** are multiplexed at the time frame level, i.e., the STS-48 SONET frames are transmitted during different consecutive time frames. In the presented embodiment, the mapping between each of the STS-48 frames from the plurality of input channels and the respective time frame during which it is transmitted on the output channel **8140** repeats every time cycle or super cycle.

In the sample scenario shown in FIG. 21C, an STS-48 frame **Frame1a** received from a selected input channel **8130-a** is transmitted on the output channel **8140** during a first selected time frame **8145.** An STS-48 frame **Frame1b** received from another selected input channel **8130-b** is transmitted during a second selected time frame **8145**, wherein the second selected time frame immediately follows the first selected time frame. An STS-48 frame **Frame1c** received from another selected input channel **8130-c** is transmitted during a third selected time frame **8145,** wherein the third selected time frame immediately follows the second selected time frame.

FIG. 26C shows a scenario in which each STS-48 frame to be forwarded on the OC-48 output channels **8630-a** through **8630-c** is received from the input channel **8640** during a single time frame **8145.** This scenario takes place when STS-48 frames were previously time framed and transmitted over a TDS network according to the method depicted in FIG. 21C. Given the capacity of the input channel **8640** in FIG. 26C (three times the capacity of each output channel **8630-a** through **8630-c**) and the duration of time frames **8145** on the input channel **8640**, one STS-48 frame is received from the input channel **8640** on average every three time frames.

STS-48 frames destined for the different output channels **8630-a** through **8630-c** are multiplexed over the input channel **8640** at the time frame level, i.e., the SONET STS-48 frames are received during different consecutive time frames. In a possible implementation, the mapping between the time frame during which each of the STS-48 frames is received from the input channel **8640** and the output channel **8630-a** through **8630-c** on which the STS-48 frame is to be transmitted repeats every time cycle or super cycle.

In the sample scenario shown in FIG. 26C, an STS-48 frame **Frame1a** to be transmitted on a selected output channel **8630-a** is received from the input channel **8640** during a first selected time frame **8145**. An STS-48 frame **Frame1b** to be transmitted on another selected output channel **8630-b** is received during a second selected time frame **8145,** wherein the second selected time frame immediately follows the first selected time frame. An STS-48 frame **Frame1c** to be transmitted on another selected output channel **8630-c** is received during a third selected time frame **8145**, wherein the third selected time frame immediately follows the second selected time frame. In an alternative embodiment, at least one of the first selected time frame, the second selected time frame, and the third selected time frame is does not immediately follow the other.

FIG. 21D shows a scenario in which each STS-48 frame received on the OC-48 input channels **8130-a** through **8130-c** is de-multiplexed in its four STS-12 tributaries. Each STS-12 tributary frame from the plurality of input channels **8130-a** through **8130-c** is transmitted over the output channel **8140** during a single time frame **8147.** Given the capacity of the output channel **8140** (three times the capacity of each input channel **8130-a** through **8130-c)** and the duration of time frames **8147** on the output channel **8140**, the four tributary STS-12 frames composing one STS-48 frame are transmitted over the output channel **8140** during selected ones of six consecutive time frames 8147.

In the example shown in FIG. 21D, the first STS-48 frame **Frame 1a** received on a first input channel **8130-a** is de-multiplexed in its four STS-12 tributaries **Fla-1, F1a-2, F1a-3,** and **F1a-4;** the first STS-48 frame **Frame 1b** received on a second input channel **8130-b** is de-multiplexed in its four STS-12 tributaries **F1b-1, F1b-2, F1b-3,** and **F1b-4;** the first STS-48 frame **Frame 1c** received on a third input channel **8130-c** is de-multiplexed in its four STS-12 tributaries **F1c-1, F1c-2, F1c-3,** and **F1c-4**

Frames **F1a-1** and **F1a-3** are transmitted over the output channel **8140** during a first selected time frame **8147.** Frame **F1a-2** is transmitted during a second selected time frame **8147,** while **F1a-4** is transmitted during a third selected time frame, wherein the third selected time frame follows the second one, and the second selected time frame follows the first one, wherein the three selected time frames are not consecutive. In another possible configuration, at least two of the three selected time frames are consecutive.

STS-12 frames **F1b-3** and **F1c-3** are transmitted in a fourth selected time frame **8147** that follows the first selected time frame, precedes the second selected time frame, and is adjacent to both of the first selected time frame and the second selected time frame. STS-12 frame **F1b-2** is transmitted on the output channel **8140** during the second selected time frame, together with frame **F1a-2.**

In a possible embodiment, the mapping between the STS-12 frames and the time frame during which they are transmitted on the output channel **8140** repeats every time cycle or super cycle.

As shown in FIG. 21D, more than one STS-12 frame can be transmitted during the same time frame **8147.** In a possible implementation, multiple SONET frames are transmitted in an arbitrary order during the respective time frame. In another possible implementation, each SONET frame is transmitted in a separate pre-defined sub-time frame. The time frames **8147** and sub-time frames (containing different STS-12 frames) on the output channel **8140** are delineated deploying delimiters implemented according to at least one of the methods presented earlier in this disclosure.

In a possible embodiment, whole STS-12 frames are transmitted on the output channel **8140**. In an alternative embodiment, only the Synchronous Payload Environment (see FFIG. 28) of each STS-12 frame is transmitted over the output channel **8140**.

In a possible embodiment, selected STS-12 frames are transmitted during the same time frame **8147.** For example, STS-12 frames belonging to concatenated STS-12 channels can be sent during the same time frame **8147**, possibly without having been previously byte de-multiplexed.

FIG. 26D shows a scenario in which each STS-48 frame to be transmitted on the OC-48 output channels **8630-a** through **8630-c** was previously de-multiplexed in its four STS-12 tributaries according to the method depicted in FIG. 21D. Each STS-12 tributary frame is received from the input channel **8640** in FIG. 26D during a single time frame **8147**. Given the capacity of the input channel **8640** (three times the capacity of each output channel **8630-a** through **8630-c**) and the duration of time frames **8147** on the input channel **8640**, the four tributary STS-12 frames composing one STS-48 frame are received from the input channel **8640** during selected ones of six consecutive time frames **8147**.

In the example shown in FIG. 26D, the first STS-48 frame **Frame 1a** transmitted on a first output channel **8630-a** had been previously de-multiplexed in its four STS-12 tributaries **F1a-1, F1a-2, F1a-3,** and **F1a-4;** the first STS-48 frame **Frame 1b** to be transmitted on a second output channel **8630-b** had been previously de-multiplexed in its four STS-12 tributaries **F1b-1, F1b-2, F1b-3,** and **F1b-4;** the first STS-48 frame **Frame 1c** to be transmitted on a third output channel **8630-c** had been previously de-multiplexed in its four STS-12 tributaries **F1c-1, F1c-2, F1c-3,** and **F1c-4**.

Frames **F1a-1** and **F1a-3** are received from the input channel **8640** during a selected first time frame **8147.** Frame **F1a-2** is received during a second selected time frame **8127,** while **F1a-4** is received during a third selected time frame, wherein the third selected time frame follows the second one, and the second selected time frame follows the first one, wherein the three selected time frame are not consecutive. In an alternative configuration, the three selected time frame are consecutive.

STS-12 frames **F1b-3** and **F1c-3** are received in a fourth selected time frame **8147** that follows the first selected time frame, precedes the second selected time frame, and is adjacent to both of the first selected time frame and the second selected time frame. STS-12 frame **F1b-2** is received from the input channel **8640** during the second selected time frame, together with frame **F1a-2.**

In the preferred embodiment, the mapping between the tributary STS-12 frames and the time frame during which they are received on the input channel **8640** repeats every time cycle or super cycle.

More than one STS-12 frame can be received during the same time frame **8147**. In a possible implementation, multiple SONET frames are received in an arbitrary order during their respective time frame. In another possible implementation, each SONET frame is received in a separate pre-defined sub-time frame of the respective time frame. The time frames **8147** and sub-time frames (containing different STS-12 frames) on the input channel **8640** are delineated by means of delimiters implemented according to at least one of the methods presented earlier in this disclosure.

In a possible embodiment, whole STS-12 frames are received from the input channel **8640**. In an alternative embodiment, only the Synchronous Payload Environment (see FIG. 28) of each STS-12 frame is received over the input channel 8640, in which case the fractional lambda interface **8300** is responsible for reconstructing the whole STS-12 frame before multiplexing the tributaries in the original STS-48 frame.

In a possible embodiment, selected STS-12 frames are received during the same time frame **8147**. For example, STS-12 frames belonging to concatenated STS-12 channels can be received during the same time frame **8147**, possibly without having been previously byte de-multiplexed.

FIG. 22A shows a scenario in which each STS-48 frame **8115** received on the OC-48 input channel **8210** is transmitted over the output channel **8220** during a plurality of time frames **8225**. Given the capacity of the output channel **8220** (the same as the input channel **8210**) and the duration of time frames **8225** on the output channel **8220**, one STS-48 frame is transmitted over the output channel **8220** during four time frames **8225**.

Each STS-48 frame **8115** is divided into four parts, which will be called "fractions" in the following, where each part is transmitted during a selected time frame **8225**. In the embodiment presented in FIG. 22A, one single STS-48 fraction is transmitted during each time frame **8225**. The time frames **8225** on the output channel **8220** are delineated by means of delimiters implemented according to at least one of the methods presented earlier in this disclosure. In the preferred embodiment, the mapping between the fractions of STS-48 frames and the time frames **8225** during which they are transmitted on the output channel **8220** repeats every time cycle or super cycle.

In the example shown in FIG. 22A, the first STS-48 frame Frame 1 received on the input channel **8210** is divided into four fractions. The first fraction is transmitted over the output channel **8220** during a selected first time frame **8225,** the second fraction is transmitted during a second selected time frame **8225**, the third fraction is transmitted during a third selected time frame **8225**, and the fourth fraction is transmitted during a fourth selected time frame **8225;** wherein the fourth selected time frame immediately follows the third one, the third selected time frame immediately follows the second one, and the second selected time frame immediately follows the first one, wherein the four selected time frame are consecutive. In an alternative configuration, the first selected time frame, the second selected time frame, the third selected time frame, and the fourth selected time frame follow each other in a different order than the one above.

In a possible embodiment, fractions of whole STS-48 frames **8115** received on the input channel **8210** are transmitted on the output channel **8220**. In an alternative embodiment, only fractions of the Synchronous Payload Environment (see FIG. 28) are transmitted over the output channel **8220**.

FIG. 27A shows how STS-48 frames **8615** time framed and transmitted according to the embodiment presented in FIG. 22A are time de-framed and forwarded on a SONET channel **8710**. FIG. 27A shows a scenario in which each STS-48 frame **8615** to be transmitted on the OC-48 output channel **8710** is received from the input channel **8720** during a plurality of time frames **8225**. Given the capacity of the input channel **8720** (the same as the output channel **8710**) and the duration of time frames **8225** on the input channel **8720**, one STS-48 frame is received from the input channel **8720** during four time frames.

Each STS-48 frame **8615** was previously divided into four parts, which we call "fractions", where each part is received during a selected time frame **8225**. In the embodiment presented in FIG. 27A, one single STS-48 fraction is received during each time frame **8225**. The time frames **8225** on the input channel **8720** are delineated by means of delimiters implemented according to at least one of the methods presented earlier in this disclosure. In the preferred embodiment, the mapping between the fractions of STS-48 frames and the time frames during which they are transmitted on the output channel **8720** repeats every time cycle or super cycle.

In the example shown in FIG. 27A, the first STS-48 frame **Frame 1** to be transmitted on the output channel **8710** was previously divided into four fractions. The first fraction is received over the output channel **8720** during a first selected time frame **8225**, the second fraction is received during a second selected time frame **8225**, the third fraction is received during a third selected time frame **8225,** and the fourth fraction is received during a fourth selected time frame **8225**, wherein the fourth selected time frame immediately follows the third one, the third selected time frame immediately follows the second one, and the second selected time frame immediately follows the first one; wherein the four selected time frames are consecutive.

In a possible embodiment, fractions of whole STS-48 frames **8615** to be transmitted on the output channel **8710** are received from the input channel **8720.** In an alternative embodiment, only fractions of the Synchronous Payload Environment (see FIG. 28) are received from the input channel **8720.**

FIG. 22B shows a scenario in which each STS-48 frame **8115** received from the OC-48 channel **8210** is transmitted over the output channel **8220** during a plurality of time frames **8227**, wherein the number of time frames during which a single STS-48 frame is transmitted can vary. Given the capacity of the output channel **8220** (the same as the input channel **8210**) and the duration of time frames **8227** on the output channel **8220**, one STS-48 frame is transmitted over the output channel **8220** during either three or four time frames.

Each STS-48 frame **8115** is divided into a plurality of parts and each part is transmitted on the output channel **8220** during a selected time frame **8227**. In the embodiment presented in FIG. 22B, fractions from one or two different STS-48 frames are transmitted during each time frame **8227.** The time frames **8227** on the output channel **8220** are delineated by means of delimiters implemented according to at least one of the methods presented earlier in this disclosure. In the preferred embodiment, the mapping between each selected fraction of STS-48 frames and the respective time frame during which the selected fraction is transmitted on the output channel **8220** repeats every time cycle or super cycle.

In a possible embodiment, fractions of the entire STS-48 frames **8115** received on the input channel **8210** are transmitted on the output channel **8220**. In an alternative embodiment, fractions of only the Synchronous Payload Environment (see FIG. 28) are transmitted over the output channel **8220.**

In the configuration shown in FIG. 22B, fractions of the same STS-48 frame can be of different size. The transmission of a fraction of an STS-48 frame can require either a whole time frame **8227**, or part of it. When transmission of an STS-48 frame fraction is completed before the end of a selected time frame **8227**, a fraction from another STS-48 frame can be transmitted during the reminder of the same selected time frame **8227**. Each SONET frame fraction is transmitted in a separate pre-defined sub-time frame. The time frames **8227** and sub-time frames (containing fractions from different STS-48 frames) on the output channel **8220** are delineated by means of delimiters implemented according to at least one of the methods presented earlier in this disclosure.

In the example shown in FIG. 22B, the first STS-48 frame Frame 1 received on the input channel **8210** is divided into three fractions. The first fraction is transmitted over the output channel **8220** during a selected first time frame **8227,** the second fraction is transmitted during a second selected time frame **8227**, while the third fraction is transmitted during a third selected time frame, wherein the third selected time frame immediately follows the second one, the second selected time frame immediately follows the first one, and the three selected time frame are consecutive. In an alternative embodiment, at least two of the three selected time frames are not consecutive.

Since, as shown in FIG. 22B, the third selected time frame is not completely filled up, i.e., the transmission of the third fraction of the STS-48 frame **Frame1** does not require a whole time frame **8227,** a fraction from the next received STS-48 frame **Frame2** is transmitted during the third selected time frame **8227**. The other two fractions of frame **Frame2** are transmitted during the two time frames **8227** following the third selected time frame **8227.**

FIG. 27B shows how STS-48 frames **8615** time framed and transmitted according to the embodiment presented in FIG. 22B are time de-framed and forwarded on a SONET channel **8710**. As shown in FIG. 27B, each STS-48 frame **8615** to be transmitted on the OC-48 channel **8710** is received from the input channel **8720** during a plurality of time frames **8227**, wherein the number of time frames during which a single STS-48 frame is received is not necessarily fixed. Given the capacity of the input channel **8720** (the same as the output channel **8710**) and the duration of time frames **8227** on the input channel **8720**, one STS-48 frame **8615** is received from the input channel **8720** during either three or four time frames.

Each STS-48 frame **8615** had been divided into a plurality of parts, each of which will be called a "fraction", and each part is received during a selected time frame **8227.** In the embodiment presented in FIG. 27B, fractions from one or two different STS-48 frames **8615** are received during each time frame **8227**. The time frames **8227** on the input channel **8720** are delineated by means of delimiters implemented according to at least one of the methods presented earlier in this disclosure. In the preferred embodiment, the mapping between the fractions of STS-48 frames **8615** and the time frames during which they are received from the input channel **8720** repeats every time cycle or super cycle.

In a possible embodiment, fractions of the entire STS-48 frames **8615** to be transmitted on the output channel **8710** are received from the input channel **8720**. In an alternative embodiment, fractions of the Synchronous Payload Environment (see FIG. 28) are received from the input channel **8720.**

Fractions of the same STS-48 frame **8615** can be of different size. An STS-48 frame fraction can be received during either a whole time frame **8227** or part of it. When reception of an STS-48 frame fraction is completed before the end of a selected time frame **8227,** a fraction from another STS-48 frame can be received during the reminder of the same selected time frame **8227.** In a possible embodiment, each SONET frame fraction is transmitted in a separate pre-defined sub-time frame. The time frames **8227** and sub-time frames (containing fractions from different STS-48 frames) on the input channel **8720** are delineated by means of delimiters implemented according to at least one of the methods described earlier in this disclosure.

In the example shown in FIG. 27B, the first STS-48 frame Frame 1 to be transmitted on the output channel **8710** is divided into three fractions. The first fraction is received from the input channel **8720** during a first selected time frame **8227**, the second fraction is received during a second selected time frame **8227**, while the third fraction is received during a third selected time frame, wherein the third selected time frame immediately follows the second one, the second selected time frame immediately follows the first one, and the three selected time frame are consecutive. In an alternative embodiment, at least two of the three selected time frames are not consecutive.

Since the third selected time frame is not completely filled up, i.e., the reception of the third fraction of the STS-48 frame **Frame1** does not require a whole time frame **8227**, a fraction from the STS-48 frame **Frame2** to be transmitted next is received during the third selected time frame **8227**. The other two fractions of frame **Frame2** are received during the two time frames **8227** following the third selected time frame **8227**.

FIG. 22C shows a scenario in which each STS-48 frame received on the OC-48 input channels **8230-a** through **8230-c** is transmitted over the output channel **8240** during a plurality of time frames **8245**. Given the capacity of the output channel **8240** (three times the capacity of each input channel **8230-a** through **8230-c**) and the duration of time frames **8245** on the output channel **8240,** one STS-48 frame from a selected one of the input channels **8230-a** through **8230-c** is transmitted over the output channel **8240** during three selected time frames **8245** every nine time frames. During each time frame **8245** bits from a single STS-48 frame are transmitted.

In the configuration shown in FIG. 22C, STS-48 frames from different input channels **8230-a** through **8230-c** are multiplexed at the time frame level, i.e., transmitted during different consecutive time frames. In the preferred embodiment, the mapping between the STS-48 frames from the plurality of input channels and the time frame during which they are transmitted on the output channel **8240** repeats every time cycle or super cycle.

In the sample scenario shown in FIG. 22C, an STS-48 frame Framela received from a first selected input channel **8230-a** is divided into three fractions. The three fractions are transmitted on the output channel **8240** during a first set of three selected time frames **8245,** with one fraction in each time frame **8245.** The fraction from a single STS-48 frame is transmitted during one time frame **8245**.

An STS-48 frame **Frame1b** received from a second selected input channel **8230-b** is divided into three fractions. The three fractions of frame **Frame1b** are transmitted on the output channel **8240** during a second set of three selected time frames **8245**, with one fraction in each time frame **8245**, wherein the second set of selected time frames immediately follows the first set.

An STS-48 frame **Frame1c** received from a third selected input channel **8230-c** is divided in three fractions. The three fractions of frame **Frame1c** are transmitted on the output channel **8240** during a third set of three selected time frames **8245**, one fraction in each time frame **8245,** wherein the third set of selected time frames immediately follows the second set.

In a possible embodiment, fractions of entire STS-48 frames are transmitted on the output channel **8240**. In an alternative embodiment, fractions of only the Synchronous Payload Environment (see FIG. 28) of each STS-48 frame are transmitted over the output channel **8240**.

FIG. 27C shows a scenario in which each STS-48 frame to be transmitted on the OC-48 output channels **8730-a** through **8730-c** is received from the input channel **8740** during a plurality of time frames **8245**. This scenario takes place when STS-48 frames had previously been time framed and transmitted over at least one of a TDS network and a TDP network according to the method depicted in FIG. 22C. Given the capacity of the input channel **8740** (three times the capacity of each output channel **8730-a** through **8730-c**) and the duration of time frames **8245** on the input channel **8740**, one STS-48 frame to be transmitted on a selected one of the output channels **8730-a** through **8730-c** is received from the input channel **8740** during three selected time frames **8245** every nine time frames. During each time frame **8245** bits from a single STS-48 frame are received.

STS-48 frames destined for different output channels **8730-a** through **8730-c** are multiplexed on the input channel **8740** at the time frame level, i.e., they are received during different consecutive time frames. In the preferred embodiment, the mapping between the STS-48 frames destined for each output channel **8730-a** through **8730-c** and the time frame during which they are received from the input channel **8740** repeats every time cycle or super cycle.

In the sample scenario shown in FIG. 27C, an STS-48 frame **Frame1a** to be transmitted on a first selected output channel **8730-a** was previously divided into three fractions. The three fractions are received from the input channel **8740** during a first set of three selected time frames **8245**, one fraction in each time frame **8245**. During each time frame **8245** a fraction from a single STS-48 frame is received.

An STS-48 frame **Frame1b** to be transmitted on a second selected output channel **8730-b** is divided into three fractions. The three fractions of frame **Frame1b** are received from the input channel **8740** during a second set of three selected time frames **8245**, with one fraction in each time frame **8245**, wherein the second set of selected time frames immediately follows the first set.

An STS-48 frame **Frame1c** to be transmitted on a third selected output channel **8730-c** is divided into three fractions. The three fractions of frame **Frame1c** are received from the input channel 8740 during a third set of three selected time frames **8245**, with one fraction in each time frame **8245**, wherein the third set of selected time frames immediately follows the second set.

In a possible embodiment, fractions of entire STS-48 frames are received from the input channel **8740**. In an alternative embodiment, fractions of only the Synchronous Payload Environment (see FIG. 28) of each STS-48 frame are received from the input channel **8740**.

FIG. 22D shows a scenario in which each STS-48 frame received on the OC-48 input channels **8230-a** through **8230-c** is divided into three fractions. Each STS-48 frame fraction from any of the plurality of input channels **8230-a** through **8230-c** is transmitted over the output channel **8240** during a single time frame **8247**. Given the capacity of the output channel **8240** (three times the capacity of each input channel **8230-a** through **8230-c**) and the duration of time frames **8247** on the output channel **8240**, the three fractions of one STS-48 frame are transmitted over the output channel **8240** during three selected ones of nine consecutive time frames **8247**.

Each fraction is transmitted during a single time frame **8247** and a single fraction of a single STS-48 frame is transmitted during each time frame. Fractions of STS-48 frames received on different input channels **8230-a** through **8230-c** are multiplexed at the time frame level on the output channel **8240**. In other words, fractions of different STS-48 frames can be transmitted during adjacent time frames **8247**.

In the example shown in FIG. 22D, the first STS-48 frame **Frame 1a** received on a first input channel **8230-a** is divided into three fractions **F1a-1, F1a-2,** and **F1a-3;** the first STS-48 frame **Frame 1b** received on a second input channel **8230-b** is divided into three fractions **F1b-1, F1b-2,** and **F1b-3;** the first STS-48 frame **Frame 1c** received on a third input channel **8230-c** is divided into three fractions **F1c-1, F1c-2,** and **F1c-3.**

Fraction **F1a-1** is transmitted during a first selected time frame **8247,** fraction **F1b-1** is transmitted during a second selected time frame **8247,** fraction **F1c-1** is transmitted during a third selected time frame **8247**, wherein the third selected time frame follows the second one, and the second selected time frame follows the first one, wherein the three selected time frame are consecutive. In an alternative embodiment the three selected time frames follow each other in a different order than the one above. In an alternative configuration, at least 2 of the three selected time frame are not consecutive.

Fractions **F1a-1, F1a-2,** and **F1a-3** are transmitted during three selected time frames **8247**, wherein the selected time frames are not consecutive and fractions of STS-48 frames received on the second input channel **8230-b** and third input channel **8230-c** are transmitted during the time frames between the three selected time frames.

In the preferred embodiment, the mapping between fractions of STS-48 frames and the time frame during which they are transmitted on the output channel **8240** repeats every time cycle or super cycle.

In another possible embodiment, fractions of more than one STS-48 frame can be transmitted during the same time frame **8247**. In a possible implementation, different fractions are transmitted in an arbitrary order during their respective time frame. In another possible implementation, each STS-48 frame fraction is transmitted in a separate pre-defined sub-time frame. The time frames **8247** and sub-time frames (containing fractions of different STS-48 frames) on the output channel **8240** are delineated by means of delimiters implemented according to at least one of the methods presented earlier in this disclosure. In a possible embodiment, STS-48 frames are divided into fractions of different sizes.

In a possible embodiment, fractions of entire STS-48 frames are transmitted on the output channel **8240**. In an alternative embodiment, fractions of only the Synchronous Payload Environment (see FIG. 28) of each STS-48 frame are transmitted over the output channel **8240**.

FIG. 27D shows a scenario in which each STS-48 frame to be transmitted on the OC-48 output channels **8730-a** through **8730-c** has been previously divided into three fractions. This scenario takes place when STS-48 frames have been time framed and transmitted over at least one of a TDS network and a TDP network according to the method depicted in FIG. 22D. As shown in FIG. 27D, each STS-48 frame fraction destined to any of the plurality of output channels **8730-a** through **8730-c** is received from the input channel **8740** during a single time frame **8247**. Given the capacity of the input channel **8740** (three times the capacity of each output channel **8730-a** through **8730-c**) and the duration of time frames **8247** on the input channel **8740**, the three fractions of one STS-48 frame are received from the output channel **8740** during three selected ones of nine consecutive time frames **8247.**

Each fraction is received during a single time frame **8247**, and a single fraction of a single STS-48 frame is received during each time frame. Fractions of STS-48 frames destined for different output channels **8730-a** through **8730-c** are multiplexed at the time frame level on the input channel **8740**. In other words, fractions of different STS-48 frames can be received during adjacent time frames 8247.

In the example shown in FIG. 27D, the first STS-48 frame **Frame 1a** to be transmitted on a first selected output channel **8730-a** was previously divided into three fractions **F1a-1**, **F1a-2,** and **F1a-3;** the first STS-48 frame **Frame 1b** to be transmitted on a second selected output channel **8730-b** was previously divided into three fractions **F1b-1, F1b-2,** and **F1b-3;** the first STS-48 frame **Frame 1c** to be transmitted on a third selected output channel **8730-c** was previously divided into three fractions **F1c-1, F1c-2,** and **F1c-3**.

Fraction **F1a-1** is received during a first selected time frame **8247**, fraction **F1b-1** is received during a second selected time frame **8227**, fraction **F1c-1** is received during a third selected time frame **8227**, wherein the third selected time frame follows the second one, and the second selected time frame follows the first one, wherein the three selected time frame are consecutive. In an alternative configuration, the three selected time frames follow each other in a different order than the one above. In an alternative embodiment, at least two of the three selected time frame are not consecutive.

In the scenario depicted in FIG. 22D, fractions **F1a-1, F1a-2,** and **F1a-3** are received during three selected time frames **8247**, wherein the selected time frames are not consecutive and fractions of STS-48 frames to be transmitted on output channels **8730-b** and **8730-c** are received during the time frames between the three selected ones.

In the preferred embodiment, the mapping between fractions of STS-48 frames and the time frame during which they are received from the input channel **8740** repeats every time cycle or super cycle.

In another possible embodiment, fractions of more than one STS-48 frame can be received during the same time frame **8247**. In a possible implementation, different fractions are received in an arbitrary order during the relative time frame. In another possible implementation, each STS-48 frame fraction is received in a separate pre-defined sub-time frame. The time frames **8247** and sub-time frames (containing fractions of different STS-48 frames) on the input channel **8740** are delineated by means of delimiters implemented according to at least one of the methods presented earlier in this disclosure. In a possible embodiment, STS-48 frames are divided into fractions of different sizes.

In a possible embodiment, fractions of entire STS-48 frames are received from the input channel **8740.** In an alternative embodiment, fractions of the Synchronous Payload Environment (see FIG. 28) of each STS-48 frame are received from the input channel **8740.**

### SONET Fractional Lambda Interface

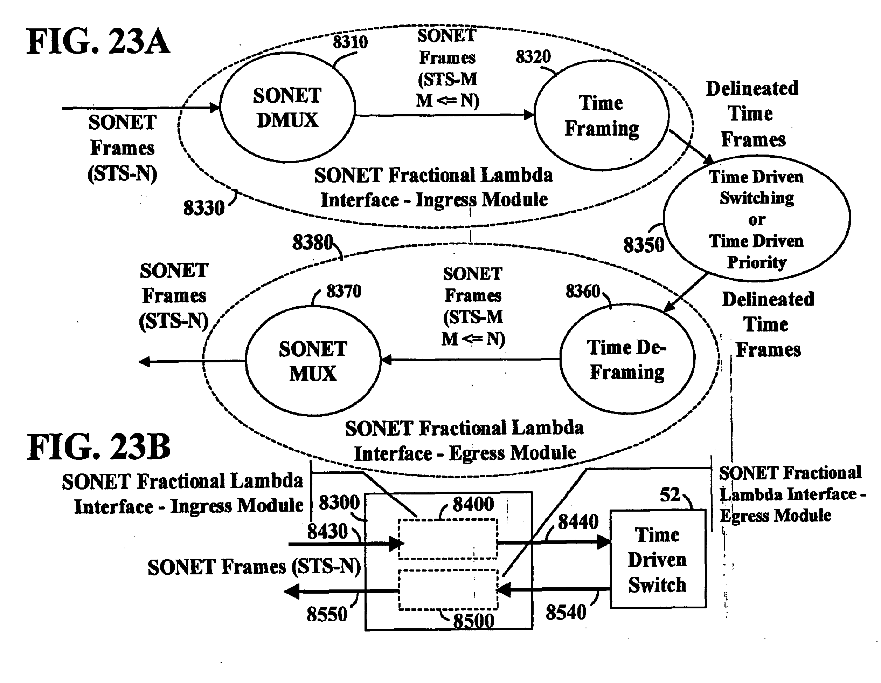

FIG. 23A shows a high level functional description of the transmission and switching of SONET frames over time driven switching networks or time driven priority networks. An STS-N SONET frame undergoes a number of manipulations **8330** prior to entering a time driven switching network or a time driven priority network and another set of manipulations **8380** prior to exiting the network. Each set of manipulations is performed by a fractional lambda interface **8300** that is installed at the boundary between a time driven switching network - or a time driven priority network - and a SONET network.

Since the set of manipulations **8330** to be performed on an STS-N frame prior to entering a time driven switching network is different from the set of manipulations **8380** to be performed on an STS-N frame prior to exiting the time driven switching network, the fractional lambda interface for SONET (or SONET FLI) is functionally comprised of two modules, as shown in FIG. 23B. An ingress module **8400** performs the manipulations required prior to entering the time driven switching network, while the egress module **8500** performs the manipulations required prior to exiting the time driven switching network.

As shown in FIG. 23B, the SONET fractional lambda interface **8300** is connected to at least one SONET device from which it receives STS-N frames through at least one input channel **8430** and to which it transmits STS-N frames through at least one output channel **8550**. The SONET FLI is also connected to at least one time driven switch **52** to which it sends data units through at least one output channel **8440** and from which it receives data units through at least one input channel **8540**.

STS-N frames are received from the SONET network through input channel 8430 by the ingress module **8400** of the FLI **8300**. The ingress module **8400** performs ingress manipulations **8330** on the received STS-N frames and transmits them to a connected time driven switch **52** through the output channel **8440**.

The egress module **8500** of the FLI **8300** receives data units from a time driven switch **52** through the input channel **8540** and performs egress manipulations **8380** required to devise corresponding STS-N frames that are transmitted to the connected SONET network through the output channel **8550.**

As shown in FIG. 23A, an STS-N frame undergoing ingress manipulations **8330** is first de-multiplexed **8310** in its STS-M tributaries, where M≤N. In an alternative embodiment, de-multiplexing of incoming STS-N frames is not performed, and following processing is performed on STS-M frames where M=N. In an alternative embodiment, the SONET de-multiplexing function **8330** is replaced by another de-multiplexing - or segmentation - function, which divides each incoming STS-N frame into a plurality of parts, or fractions, that are transmitted separately through the time driven switching network. The resulting fractions can have fixed size or variable size.

The STS-M frames to be transmitted on the TDS network are time framed **8320**. In other words, each STS-M frame is transmitted on a channel **8440** to a time driven switch **52**, as shown in FIG. 23B, during a selected time frame or sub-time frame, wherein the selected time frame or sub-time frame is delineated by means of delimiters implemented according to at least one of the time frame delineation methods described before in this disclosure. In the preferred embodiment, the mapping between an STS-M frame and the time frame or sub-time frame during which it is transmitted towards a time driven switch **52** on channel **8440** is repeated cyclically each time cycle or super cycle.

In a possible embodiment, control information can be associated to each STS-M frame or fraction thereof, being time framed **8320** and transmitted on a channel **8440** to a time driven switch **52**, as shown in FIG. 23B, during a selected time frame or sub-time frame. Said control information is used to at least route the STS-M frame through the time driven switching or time driven priority network **8250** in FIG. 23A.

The time framed STS-M frames (i.e., the STS-M frames transmitted during selected time frames or sub-time frames) are switched and routed towards their destination **8350** according to at least one of the time driven switching principles of operation and the time driven priority principles of operation.

STS-M frames (or fractions thereof) exiting the time driven switching network (i.e., received by the egress module **8500** of a SONET fractional lambda interface **8500**) are time de-framed **8360**. In other words, the original STS-M frame (or fraction thereof) is obtained after having possibly stripped out at least one of the delimiter of the time frame during which it was transmitted, the delimiter of the sub-time frame during which it was transmitted, and the associated control information and after having possibly reassembled a plurality of fractions.

A plurality of STS-M frames are multiplexed **8370** according to the SONET standard and the original STS-N frame is transmitted to the piece of SONET equipment to which the STS-N frame is to be routed. The piece of SONET equipment is connected to the egress module **8500** of the fractional lambda interface **8300** through channel **8550** shown in FIG. 23B.

In another embodiment, STS-M frames received through the time driven switching network do not need to be multiplexed in order to build higher order STS-N frames (i.e., M=N in the example shown in FIG. 23A) and the SONET MUX function **8370** is not performed. In an alternative embodiment, a plurality of fractions are composed to build the original STS-N frame that is then transmitted to the piece of SONET equipment to which the STS-N frame is to be routed.

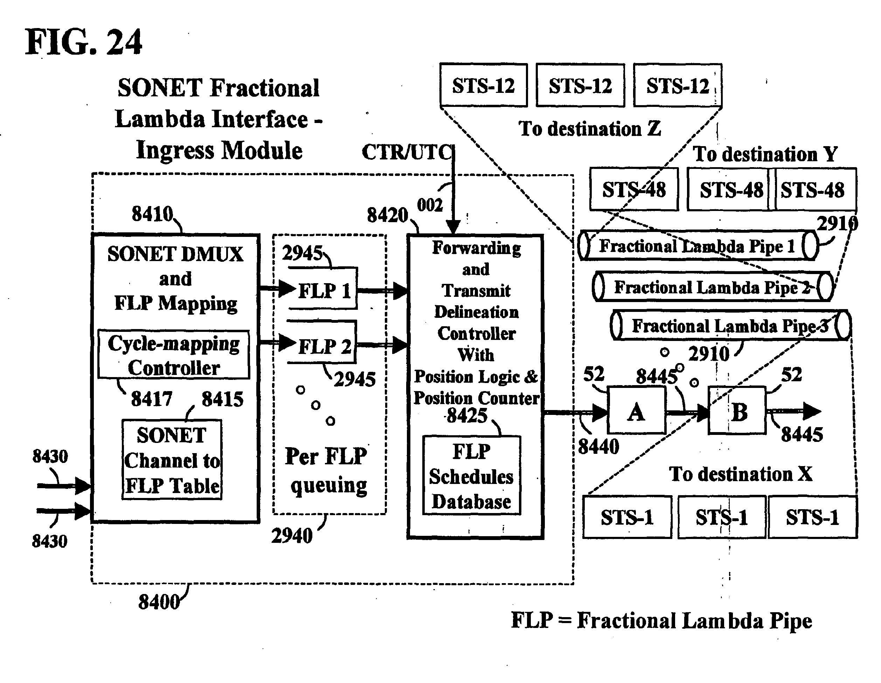

FIG. 24 depicts the functional block diagram of the ingress module **8400** of a SONET FLI **8300,** comprising a SONET DMUX and FLP mapping module **8410,** a per FLP queuing system **2940**, and a Forwarding and Transmit Delineation Controller with position logic and position counter **8420**. The ingress module **8400** of a SONET FLI **8300** performs the functions **8330** represented in FIG. 23A.

The SONET STS-N frames received through at least one of a plurality of input channels **8430** depicted in FIG. 24 are processed by a module **8410** that performs SONET de-multiplexing (DMUX) and maps each de-multiplexed tributary STS-M frame onto a selected fractional lambda pipe (FLP) **2910**, responsive to a Cycle-mapping Controller **8417.** In a possible embodiment, the mapping performed by the Cycle-mapping Controller **8417** is based on a table **8415** providing the mapping between each SONET OC-M tributary channel and a corresponding FLP.

In an alternative embodiment, the STS-N frames are divided into fractions and a table provides the mapping between each STS-N frame fraction and the corresponding FLP.

Based on the mapping information, the SONET DMUX and FLP mapping module **8410** stores the STS-M frames (or STS-N fractions) in the proper FLP queue **2945**.

The Forwarding and Transmit Delineation Controller **8420** retrieves data units (STS-M frames or STS-N fractions) from the Per FLP queuing system **2940** and transmits them over at least one of a plurality of output channels **8440** towards an time driven switch **52**. Upon transmission on the output channel **8440**, the Forwarding and Transmit Delineation controller **8420** delineates time frames by means of delimiters implemented according to at least one of the methods previously described in this disclosure.

The selected one of the FLP queues **2945** from which data units are retrieved during each time frame by the Forwarding and Transmit Delineation controller **8420** is determined based on the content of an FLP schedules database **8425** that contains information regarding reservation of transmission resources to FLPs **2910** during each time frame.

Data units (STS-M tributary frames or STS-N fractions) transmitted over an FLP traverse the time driven switching network (i.e., are switched and routed through a plurality of time driven switches **52** and communications channels **8445**) and reach the egress point of the TDS network configured for the corresponding FLP **2910.**

In an alternative embodiment, data units (STS-M tributary frames or STS-N fractions) transmitted over a pipe - also called synchronous virtual pipe (SVP) - traverse the time driven priority network (i.e., are switched and routed through a plurality of time driven priority switches **52** and communications channels **8445** in FIG. 24) and reach the egress point of the TDP network configured for the corresponding FLP **2910**.

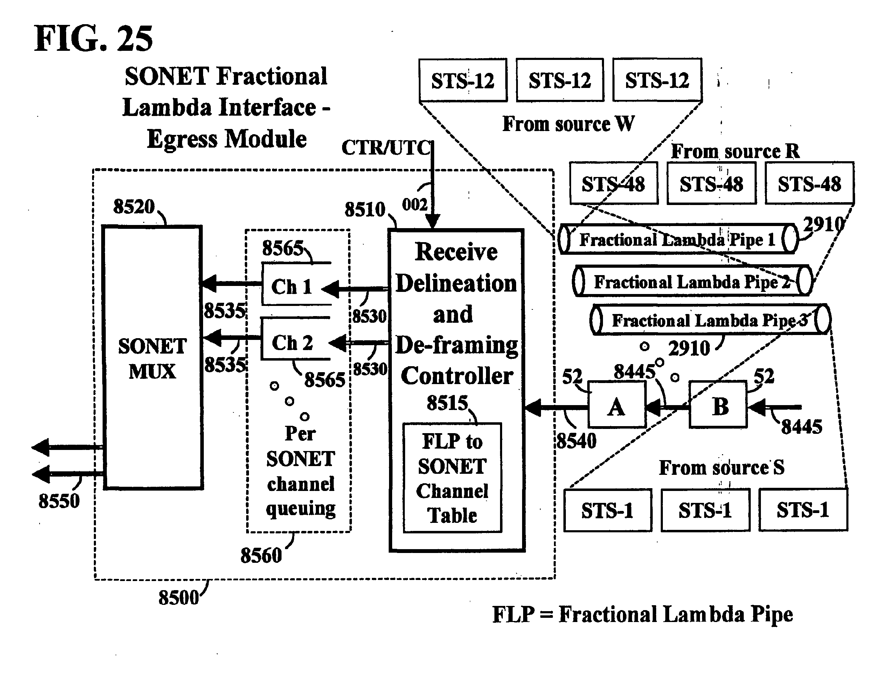

At the TDS network egress point an FLP **2910** is terminated on an FLI **8300.** The data units exiting the FLP **2910** are processed by the egress module **8500** of the FLI **8300**. FIG. 25 depicts the functional block diagram of a possible implementation of the egress module **8500** of an FLI **8300,** comprising a Receive Delineation and De-Framing Controller **8510**, a Per SONET channel queuing system **8560,** and a SONET multiplexer **8520**. The egress module **8500** of a SONET FLI **8300** performs the functions **8380** represented in FIG. 23A.

Data units that have traveled through the network of time driven switches **52** and communications channels **8445** over an FLP **2910** are fed into the egress module **8500** of the FLI **8300** through at least one of a plurality of input channels **8540**.

Data units received through an input channel **8540** are first processed by the Receive Delineation and De-framing controller **8510**. The Receive Delineation and De-framing controller **8510** utilizes delimiters embedded in the data stream according to at least one of the methods presented above in this disclosure, to identify time frame boundaries and uniquely associate data units (STS-M frames of STS-N fractions) with the time frame to which they belong. Time frame delineation is based on delimiters implemented according to at least one of the methods described earlier in this disclosure.

The Receive Delineation and de-framing controller **8510** is responsible for stripping the delineation information from the data stream (i.e., to perform time de-framing) and to map each data unit received onto the corresponding SONET channel. The mapping is based on the content of the FLP to SONET channel table **8515**. In fact, the time frame or sub-time frame to which a data unit belongs univocally associates the data unit with the FLP on which it traveled through the TDS network. The FLP to SONET channel table **8515** associates the time frame or sub-time frame (and, ultimately, the corresponding FLP **2910**) to the SONET channel to which the received data unit belongs.

Before transmitting the mapped data unit on the proper output line **8530**, the Receive Delineation and de-framing controller **8510** stores the data unit in the per SONET channel queue **8565** corresponding to the SONET channel to which it belongs.

As shown in FIG. 25, a SONET multiplexer **8520** retrieves tributary STS-M frames from the per SONET Channel queuing system **8560** and multiplexes them in STS-N frames (where N≥M) to be transmitted to a piece of SONET equipment connected to at least one of a plurality of output channels **8550**.

In an alternative embodiment, fractions of SONET frames are received over the input channels **8540** of the egress module **8500** of the FLI **8300**. The Receive Delineation and De-framing controller **8510** devises time frame delineation information and stores each SONET frame fraction in the channel queue **8565** corresponding to the FLP **2910** over which the SONET frame fraction was received. SONET frame fractions are retrieved from the per SONET channel queuing system **8560** and are composed to obtain the original STS-N frame to be transmitted to a piece of SONET equipment connected to at least one of a plurality of output channels **8550** shown in FIG. 25.

The SONET network can perform at least one of SONET switching, SONET multiplexing, and SONET de-multiplexing. In a possible embodiment, SONET switching is implemented by using at least one of time driven switching (TDS) technology and time driven priority technology, as described above in this disclosure.

### Time driven Tunable Laser-Based Switching with Common Time

### Reference

Advances in components for optical networking feature dynamic optical switching fabrics - e.g., based among others on electro-mechanical micro mirrors, holographic techniques, bubbles - and tunable lasers. The time required for changing the input/output configuration of dynamic optical switching fabrics is currently larger than the time required for changing the wavelength generated by a tunable laser. As a consequence, optical switch architectures based on tunable lasers rather than optical switching fabrics are appealing. The present disclosure describes a number of optical switch architectures based on tunable lasers.

FIG. 31A shows three possible architectures of a fractional lambda switch implemented using an array of tunable lasers **10200** and comprising a switch controller **13030**. In FIG. 31A there is 16 input and output ports, each terminating a Wavelength Division Multiplexing (WDM) optical fiber **10010** carrying 16 wavelengths. In each of the architectures, an optical de-multiplexer (WDM DMUX) **10040** separates the 16 wavelengths. The WDM DMUX **10040** is coupled with an alignment subsystem **10100** or **10900**, as show in FIG. 31A.

In an alternative embodiment sub-carrier multiplexing (SCM) is used to provide for multiple channels on each fiber. SCM multiplexers and SCM de-multiplexers - instead of WDM multiplexers (MUXes) **10050** WDM de-multiplexers (DMUXes) **10040 -** combine and separates the various optical channels on the fibers.

As shown in FIG. 31A during each time frame, aligned data units retrieved from the alignment subsystem are transmitted by a tunable laser **10200** to an output port where a WDM multiplexer (WDM MUX) **10050** combines the wavelength generated by the tunable laser with other 15 wavelengths onto the corresponding output fiber. As shown by the block diagram of a time driven tunable laser **10200** depicted in FIG. 30A, the control of the tunable laser is based on a wavelength-mapping table **10210** that is downloaded into each tunable laser scheduling controller **10220** by the switch controller **13030**. The wavelength-mapping table **10210** indicates to the tunable laser scheduling controller **10220** the wavelength to be used during each time frame of the time cycle or super cycle. As shown in FIG. 30B the tunable laser **10230** can change wavelength every time frame. The wavelength mapping follows a predefined pattern that repeats itself every time cycle or every super cycle.

The switch controller **13030** centrally computes the wavelength mapping table **10210** for all the tunable lasers **10200** guaranteeing that the same wavelength is not used during the same time frame by more than one tunable laser **10200** that is connected to the same output port WDM MUX **10050,** as shown in FIG. 31A. The wavelength-mapping table **10210**, shown in FIG. 30, of a tunable laser **10200** is changed at the FLP control level, i.e., each time an FLP is set up or torn down.

The optical alignment subsystem **10900** in FIG. 31A is based on a programmable delay system **10930**, guaranteeing that the overall delay experienced through the optical fiber and the programmable delay system **10930** is an integer number of time frames. As a result, when data units that have left the switch at the transmitting end of the fiber aligned with the CTR arrive at the WDM DMUX **10040** (see for example FIG. 31A) at the receiving end are still aligned with respect to then CTR.

In the switch depicted in FIG. 31A the tunable lasers **10200** are statically connected to the same input WDM DMUX **10040** and the same output WDM MUX **10050.** Each WDM DMUX **10040** is coupled with tunable lasers **10200** connected to each one of WDM MUXes **10050.** Due to this interconnection configuration, the wavelength on which data units are carried on the input fiber determines their routing within the switch. Thus, the wavelength deployed by a tunable laser 10200 during a time frame determines the route the data units belonging to the time frame will take in the downstream switch on the path to their destination.

This WDM wavelength switching method (by using tunable lasers) is equivalent to label switching in ATM and MPLS. The label chosen in a switch determines the routing of a cell or MPLS packet in the next switch. Equivalently, the wavelength chosen in a switch determines the routing of a time frame worth of data in the following switch. Therefore, the wavelength entry in the tunable laser's wavelength mapping table **10210** (shown in FIG. 30) is equivalent to the **Next Hop Label Forwarding Entry** (NHLFE) of an MPLS switch.

The switch architecture presented in FIG. 31A is inexpensive and scalable because it is based on simple components and static interconnections among them. The control complexity is very low, since lasers are tuned no more than once every time frame. However, the resulting switch is not flexible, since only one wavelength from an input **10010** (WDM DMUX **10040)** can be switched to a given output **10020** (WDM MUX **10050**). A more flexible architecture can be obtained in two ways:
1. When the number of wavelengths per port is larger than the number of ports, and
2. When the switch architecture depicted in FIG. 31A is generalized, which adds configurable connections between the tunable lasers **10200** and the outputs **10020** by means of an optical cross connect **10510**. The number of wavelengths on an input **10010** switched to a given output **10020** during the same time frame can be changed dynamically - even though on a possibly long time scale - to accommodate uneven traffic patterns.

### Detailed description of switch architectures

FIG. 30A shows the block diagram of a possible implementation of a time driven tunable laser **10200** comprising a tunable laser (TL) scheduling controller **10220** responsive to the CTR **002** and a control signal 13033 from the switch controller, and a tunable laser transmitter **10230** responsive to a color control signal **10240.**

The tunable laser **10200** receives data units from its input line **10165** and a tunable laser transmitter **10230** transmits them on a selected wavelength over the output line **10030**. The selected wavelength used by the tunable laser transmitter **10230** is determined responsive to the color control signal **10240** generated by the TL scheduling controller **10220.**

In a possible embodiment the color control signal **10220** selects a different wavelength for transmission of data units by the tunable laser transmitter **10230** during each time frame. FIG. 30B is a sample timing diagram describing the operation of a tunable laser transmitter **10230** in this embodiment. The timing diagram shows a sequence of CTR time frames **TF**, and, for each time frame, the wavelength used for transmission by the tunable laser transmitter **10230,** wherein each wavelength is identified by the color (green, yellow, red, and blue) of the corresponding light beam.

FIG. 30C shows the implication of the choice of a selected wavelength on the routing of data units transmitted over the wavelength. Different wavelengths are routed to different outputs **10020** of the downstream switching system **10000** due to the interconnections between the output lines **10160** of the WDM DMUXes **10040** and the input lines **10030** of the WDM MUXes **10050** of each output **10020**. For example, in a possible configuration data units transmitted by the tunable laser **10200** on the green wavelength during a first selected time frame are going to be routed to and - during a second selected time frame, wherein the second time frame follows the first one - forwarded through output 1 of the next switching system **10000** traversed by the data units, i.e., the switching system **10000** connected to the output **10020** with to the output line **10030** of the tunable laser **10200** is coupled. Instead, data units transmitted by the tunable laser **10200** on the yellow wavelength during a third selected time frame are going to be routed to and - during a fourth selected time frame, wherein the fourth time frame follows the third one - forwarded through output 3 of the next switching system **10000** traversed by the data units, i.e., the switching system **10000** connected to the output **10020** to which the output line **10030** of the tunable laser **10200** is coupled.

In an alternative embodiment the color control signal **10220** selects a different wavelength for transmission of data units by the tunable laser transmitter **10230** during each sub-time frame.

The TL scheduling controller **10220** generates the color control signal **10240** responsive to both the CTR **002** and the content of a wavelength mapping table **10210**. The wavelength mapping table **10210** contains the mapping between each CTR time frame or sub-time frame and the wavelength to be used by the tunable laser transmitter **10230** for transmitting during the selected CTR time frame or sub-time frame.

The above mentioned mapping is calculated and written in the wavelength mapping table **10210** of each one of the TL scheduling controllers **10220** by the switch controller **13030** through control signal **13033**. The switch controller **13030** calculates time frame or sub-time frame schedules on all the wavelengths of all the inputs **10010** and outputs **10020**.

In a possible embodiment, the above mentioned mapping repeats each time cycle or each super cycle.

An alternative embodiment features a centralized TL scheduling controller that generates the,color control signal **10240** for all the tunable lasers **10200** in the respective switching system **10000.** In such an embodiment the centralized TL scheduling controller can be implemented within the switch controller **13030**.

FIG. 31A is the architecture of an alternative embodiment of a time driven switch based on tunable lasers **10200**. The switching system **10000** presented in FIG. 31A has a plurality of inputs **10010** and outputs **10020**, each one consisting of an optical link with a plurality of wavelengths. The switching system **10000** in FIG. 31A comprises a switch controller **13030** a plurality of optical alignment subsystems **10900**, WDM (wavelength division multiplexing) de-multiplexers (DMUX) **10040**, tunable lasers **10200,** and WDM multiplexers (MUXes) **10050,** and connection lines **10030** between each one of the tunable lasers **10200** and a respective one of the WDM multiplexers **10050**. The WDM DMUXes **10040**, optical alignment subsystems **10900**, tunable lasers **10200**, and WDM MUXes **10050**, are controlled by the switch controller **13030**, responsive to the CTR **002**, through four bi-directional control lines **13031**, **13737**, **13033**, and **13034**, respectively. Each of the four control lines provides configuration information from the switch controller **13030** to the WDM DMUXes **10040**, optical alignment subsystems **10900**, tunable lasers **10200**, and WDM MUXes **10050;** and via the four bi-directional control lines **13031, 13737, 13033,** and **13034,** the switch controller **13030** receives various status and control information from the WDM DMUXes **10040,** alignment subsystems **10100,** tunable lasers **10200,** and WDM MUXes **10050.**

A respective one of the plurality of the optical alignment subsystems **10900** is associated to each respective one of the inputs **10010**. The Optical Alignment Subsystem **10900** aligns to the common time reference (CTR) data units received over the plurality of wavelengths of its respective input **10010.**

Each WDM DMUX **10040** divides each of the wavelengths received from the corresponding optical input line **10320** and directs it to a corresponding tunable laser **10200.** In the configuration shown in FIG. 31A the switching system **10000** comprises 16 inputs **10010** and outputs **10020**, each one comprising 16 wavelengths. Consequently, each WDM DMUX **10040** has 16 output lines **10310** and each WDM MUX **10050** has 16 input lines **10030.** For example, WDM DMUX *i* has 16 output lines **(*i*,1)** through (*i*,16) and WDM **MUX** *j* has 16 input lines **(*j*,1)** through **(*j*,16).**

The switch in FIG. 31A performs PF that is realized in two operational phases, as shown in FIG. 31B. Data units belonging to a whole time frame received from each of the optical channels during Phase 1 are switched through the switch in Phase 2. In a possible embodiment, if Phase 1 begins in time frame t, Phase 2 takes place in time frame t+1. In another embodiment, if Phase 1 ends in time frame t, Phase 2 takes place in time frame t+1. The 2 phase operation ensures that data units received from the various optical channels are aligned with the CTR before being switched. Phase 2 can be performed during either the time frame immediately following Phase 1, during time frame t+1 - immediate forwarding operation, or at a later time frame - non-immediate forwarding operation.

During each time frame, the tunable laser **10200** in FIG. 31A receives from its respective line **10310** data units to be switched during the current time frame and transmits them over a pre-selected wavelength on the connection line **10030** to its respective one of the WDM MUXes **10050.**

Each WDM MUX **10050** multiplexes the wavelengths received on its respective input lines **10030** from the tunable lasers **10200** and transmits them on its respective output **10020.** For example, WDM MUX *j* **10050** multiplexes on output *j* **10020** the wavelengths received on the connection lines **10030** (***j*,1**) through **(*j,16)*.**

As shown in FIG. 30A, each tunable laser **10200** can change the wavelength on which it transmits for each time frame according to the information stored in a (sub)-time frame table **10210** downloaded in the tunable laser controller **10220** by the switch controller **13030** through control line **13033**. By properly building the (sub)-time frame tables **10210** for all the tunable lasers **10200** of the switch in FIG. 31A, the switch controller **13030** ensures that no more than one among the plurality of tunable lasers **10200** connected to the same WDM MUX **10050** transmits over the same wavelength during the same time frame.

The topology of the interconnections **10030** between each tunable laser **10200** and a respective one of the WDM MUXes **10050,** determines the route of the data units received on each wavelength from each input **10010**. For example, with reference to FIG. 31A, the data units received on a first selected wavelength of input 1 **10010** which is de-multiplexed by the WDM **DMUX 10040** on its output line 1 **(1,1)** are going to be transmitted by the respective first tunable laser **10200** on output 1 **10020.** This is a consequence of the fact that the respective first tunable laser **10200** is connected via a first one of the connection lines **10030** to input line **(1,1)** of the WDM MUX 1 **10050** that is coupled to output 1 **10020.**

Instead, with reference to FIG. 31A, data units received on a second selected wavelength of input 1 **10010** which is de-multiplexed by the WDM DMUX **10040** on its output line *j* (1,*j*) are going to be transmitted by the respective second tunable laser **10200** on output *j* **10020.** This is a consequence of the fact that the respective second tunable laser **10200** is connected via a second one of the connection lines **10030** to input line **(*j*,1)** of the WDM MUX *j* **10050** that is coupled to output *j* **10020.**

In other words, the first wavelength over which data units are carried on a selected input link **10010** determines the selected output **10020** on which those data units will be forwarded. The second wavelength on which the data units are transmitted by the tunable laser **10200** coupled to the selected input **10010** and first wavelength from which they are received determines the routing in the switching system **10000** coupled to the selected output **10020.**

In a possible embodiment, the OXC configuration changes reoccur periodically with a period which is an integer multiple of the time cycle or the super cycle.

In a possible implementation the number of wavelengths of each input **10010** is smaller than the number of inputs **10010**. In another possible implementation the number of wavelengths of each input **10010** is larger than the number of inputs **10010**.

Transmission of data units responsive to a common time reference **002** can deploy multiple wavelengths-also called optical channels or lambdas-across a Wavelength Division Multiplexing (WDM) link and throughout a lambda routed network. FIG. 32 shows the architecture of a communications system responsive to the common time reference wherein data units are associated to a specific time frame or sub-time frame, wherein such data units are transmitted over a specific wavelength across a WDM network **7310** whose network nodes (called wavelength routers or lambda routers) possibly route different wavelengths towards different destinations. In other words, the lambda routing network **7310** couples an optical channel on an ingress link **1230-I** with an optical channel (possibly the same optical channel if the lambda routing network **7310** does not have wavelength conversion capability) on a selected egress link **1230-E**.

The transmission system in FIG. 32 couples data units from an output port **7320** to an input port **7330** through a communications network **7310** deploying lambda routing. Within the WDM communications network **7310** multiple optical channels are multiplexed over links among nodes; nodes, also called lambda routers, route different channels over different paths. The output port **7320** and the input port **7330** are connected to the communications network **7310** through WDM links **1230-I** and **1230-E,** respectively, comprising a plurality of optical channels.

The system receives a common time reference **002** and comprises a transmission delineation controller **7325**-source of delimiter signals-responsive to the CTR **002**; a serial transmitter **6012**, responsive to the delimiter signals **6030** through **6034** and the CTR **002** for sending the control signals and the data units over a line **7345** to a tunable laser **7340**. The tunable laser **7340** transmits the bit stream received on line **7345** on the output link **1230-I** on a selected optical channel responsive to the Select-WL signal **7328.**

The transmission system in FIG. 32 is connected to a lambda switching network **7310**. In fact the communications network **7310** routes different wavelengths entering the network from the same ingress point (e.g., the communications link **1230-I)** to different egress points (among which, for example, the communications link **1230-E**) of the communications network **7310**. For example, data units transmitted during a first respective time frame over the green wavelength are routed by the communications network **7310** to the egress point X, while data units transmitted during a second respective time frame over the yellow wavelength are routed by the communications network **7310** to egress point Y.

The system depicted in FIG. 32 further comprises a tunable optical receiver **7350** that receives data through the input link **1230-E** over a selected optical channel responsive to the Select-WL **7358**. The received data stream is passed through line **7355** to a serial receiver **6022,** responsive to the CTR **002**. The serial receiver **6022** is coupled to a receive delineation controller **7335,** responsive to the CTR **002,** through delimiter signals **6040** through **6044**. The input port **7330** in FIG. 32 further comprises an Alignment Subsystem **6600** for storing the data units received from the input link **1230-E** while sorting them out according the time frame or sub-time frame during which they were sent out of the output port **7320.**

The output port **7320** and the input port **7330** in FIG. 32 are connected to a lambda switching network **7310**. The communications network **7310** can route different wavelengths entering the network from various ingress points (among which, for example, the communications link **1230-I)** to one egress points (e.g., the communications link **1230-E**) of the communications network **7310**. For example, data units received during a first respective time frame over the green wavelength had been routed by the communications network **7310** from ingress point X, while data units received during a second respective time frame over the yellow wavelength had been routed by the communications network **7310** from ingress point Y.

The alignment subsystem **6600** in FIG. 32 receives data units over the data line **6020** from the serial receiver **6022**. The data units that exit from the alignment subsystem **6600** are transferred to the switching fabric over its input lines **940.** The control data units, namely the data units transmitted over the communications channel **920** during a control time frame, are transferred to the switch controller **13030** through line **980**.

In FIG. 32, the Transmit Delineation Controller **7325**, responsive to the CTR **002**, generates control signals **6030** through **6034** to indicate to the serial transmitter (TX) **6012** to insert control information in the data flow.

The serial transmitter **6012** receives data units over line **6010** and transmits them on the communications channel **920**. Responsive to the control signals **6030** through **6034** from the Transmit Delineation Controller **7325**, the serial transmitter **6012** combines the data units to be transmitted on the communications channel **920** with control information such as time frame delimiters, time cycle delimiters, and time stamps according to at least one of the plurality of methods to encode such information in the data stream.

Upon receiving the data stream, the serial receiver **6022** on the receiving side of the communications channel **1230-E** separates data units from control signals. The serial receiver **6022** outputs the received data units on the data line **6020** and notifies the receive delineation controller **7335** of the received control signals over the lines **6040** through **6044**.

The Transmit Delineation Controller **7325**, responsive to the CTR **002**, generates control signals **6030** through **6034** to indicate the serial transmitter (TX) **6012** to insert control information in the data flow. The Transmit Delineation Controller **7325** generates the control signals **6030** through **6034** according to predefined operation principles that aim at providing a receiving input port to identify the boundaries of TFs and time cycles.

In addition, the Transmit Delineation Controller **7325** generates the Select-WL signal **7328** to indicate the Tunable Laser **7340** on which optical channel the data units belonging to the current time frame or sub-time frame should be transmitted through the link **1230-I** at the ingress of the DWM network **7310.** Whenever, according to the common time reference **002**, a new time frame or sub-time frame is beginning, the Transmit Delineation Controller **7325** uses the Select-WL signal **7328** to select the optical channel on which the data units belonging to the current time frame or sub-time frame are going to be transmitted. The optical channel on which the data units are being transmitted determines the egress link **1230-E** from which such data units are going to exit the lambda routing network **7310** and ultimately the input port **7330** on which they are going to be received.

The Receive Delineation Controller **7335** receives the control signals **6040** through **6044** and handles them according to operation principles that aim at identifying the boundaries of TFs and time cycles.

In addition, the Receive Delineation Controller **7335** generates the Select-WL signal **7358** to indicate the Tunable Optical Receiver **7350** on which optical channel the data units belonging to the current time frame or sub-time frame should be received through the link **1230-E** at the egress of the DWM network **7310**. Whenever, according to the control signals **6040** through **6044,** a new UTR (Unique Time Reference) time frame or sub-time frame is beginning, the Transmit Delineation Controller **7325** uses the Select-WL signal **7358** to select the optical channel on which the data units belonging to the current time frame or sub-time frame are going to be received. The data stream received over the selected optical channel are passed to the serial receiver through the line **7355**.

In an alternative embodiment, the input port **7330** comprises a fixed receiver (instead of a tunable one **7350**) or the tunable optical receiver **7350** is kept tuned on the same wavelength. In this embodiment the lambda switching network **7310** provides a wavelength merging service, i.e., a selected wavelength of an egress WDM link **1230-E** carries data units transmitted on the selected wavelength from different ingress points (among which, possibly, the WDM link **1230-I)** in different moments. In a possible embodiment, each of the time frames of the UTR of link **1230-E** carry data units transmitted from a different ingress point, i.e., the wavelength received during each of the time frames of the link **1230-E** UTR had been generated by a different respective output port **7320**.

### Time driven Tunable Wavelength Conversion- Based Switching

Advances in components for optical networking have led to the realization of dynamic optical switching fabrics - e.g., based among others on electro-mechanical micro mirrors, holographic techniques, bubbles -, tunable lasers, tunable receivers, wavelength converters, and tunable wavelength converters. The time required for changing the input/output configuration of dynamic optical switching fabrics is currently larger than the time required for changing the wavelength received by a tunable receiver, the wavelength transmitted by a tunable laser, and the wavelength emitted by a tunable wavelength converter. As a consequence, optical switch architectures based on tunable receivers, tunable lasers, and tunable wavelength converters, rather than optical switching fabrics, are appealing. The present disclosure describes a number of optical switch architectures based on wavelength conversion achieved through the deployment of at least one of tunable receivers, tunable lasers, and tunable wavelength converters.

Architectures based on tunable wavelength converters can be appealing especially because they can provide all-optical solutions for scenarios and applications in which similar architectures deploying electronic components fail to provide the needed scalability.

FIG. 33 is the architecture of a possible embodiment of a time driven switch **13000** based on a wavelength conversion (WLC) subsystem **13100.** The switching system **13000** presented in FIG. 33 has a plurality of inputs **10010** and outputs **10020**, each one comprised of at least one optical link with a plurality of wavelengths. The switching system **13000** in FIG. 33 comprises a switch controller **13030**, a plurality of optical alignment subsystems **10900**, star couplers **13010**, WLC subsystems **13100**, and wavelength division multiplexers (WDMs) **10050,** and an optical interconnection subsystem **13020** coupling selected ones of the WLC subsystems **13100** to at least one of the wavelength division multiplexers **10050**.

An optical alignment subsystem **10900** is associated with each respective one of the inputs **10010**. The optical alignment subsystem **10900** aligns to the common time reference (CTR) data units transported over the plurality of wavelengths of its respective input **10010**.

A star coupler **13010** is associated with each input **10010**. It forwards the signal received through its input **10010**, i.e., all the wavelengths carried by the optical link coupled to its respective input **10010**, on all of its output lines **13040** to a plurality of WLC subsystems **13100**. In the embodiment presented in FIG. 33, the number of WLC subsystems **13100** connected to each star coupler **13010** is the same as the number of switch outputs **10020**. An alternative embodiment comprises a number of WLC subsystems **13100** per star coupler **13010** smaller than the number of outputs **10020**. Another alternative embodiment comprises a number of WLC subsystems **13100** per star coupler **13010** larger than the number of outputs **10020**.

The optical alignment subsystems **10900**, star couplers **13010**, WLC subsystems **13100**, optical interconnection subsystem **13020**, and WDM MUXes **10050**, are controlled by the switch controller **13030**, responsive to the CTR **002**, through five bi-directional control lines **13737, 13036, 13041, 13042,** and **13034,** respectively. Each of the five control lines provides configuration information from the switch controller **13030** to the optical alignment subsystems **10900**, star couplers **13010**, WLC subsystems **13100,** optical interconnection subsystem **13020,** and WDM MUXes **10050;** and via the five bi-directional control lines **13737,13036,13041,13042**, and **13034**, the switch controller **13030** receives various status and control information from the optical alignment subsystems **10900,** star couplers **13010,** WLC subsystems **13100,** optical interconnection subsystem **13020,** and WDM MUXes **10050.**

Each WLC subsystem **13100** converts a specific wavelength, responsive to the CTR **002.** FIG. 34A shows a possible embodiment of a WLC subsystem **13100** comprising a wavelength conversion (WLC) scheduling controller **13120** responsive to the CTR **002** and to a wavelength mapping table **13110** downloaded from the switch controller **13030** through the bi-directional control line **13041**, and a tunable wavelength conversion subsystem **13150** responsive to a signal **13140** from the WLC scheduling controller **13120**.

As shown by the switch architecture depicted in FIG. 33, the tunable wavelength conversion subsystem **13150** within the WLC subsystem **13100** in FIG. 34A is connected to a respective one of the output lines **13040** of a respective one of the star couplers **13010** from which the tunable wavelength conversion subsystem **13150** receives an optical signal comprising a plurality of wavelengths. During each time frame of the CTR the tunable wavelength conversion subsystem **13150** is tuned by the Color control signal **13140** to convert a first selected wavelength, i.e., color, into a second selected wavelength sent out on the output line **13510**.

The second selected wavelength emitted on the output line **13510** of the tunable wavelength conversion subsystem **13150** as a result of the conversion of the first wavelength received on its input line **13040** carries the same information as the first wavelength.

In a possible embodiment the color control signal **13140** selects a different first wavelength for conversion by the tunable wavelength conversion subsystem **13150** during each time frame. In a possible embodiment the tunable wavelength conversion subsystem **13150** converts the first selected wavelength into a second fixed wavelength during each time frame. In an alternative embodiment the tunable wavelength conversion subsystem **13150** converts the first selected wavelength into a second wavelength that can be different during each time frame. FIG. 34B is a sample timing diagram describing the operation of the aforementioned alternative embodiment of tunable wavelength conversion subsystem **13150**. The timing diagram shows a sequence of CTR time frames TF and for each time frame a first selected wavelength on data line **13040** being converted into a second selected wavelength emitted on data line **13510**, wherein each wavelength is identified by the color (green, yellow, red, and blue) of the corresponding light beam. For example, in the leftmost time frame shown in the timing diagram depicted in FIG. 34B the green wavelength is converted into the blue wavelength, i.e., during the leftmost time frame the blue light beam on data line **13510** carries the same information as the green light beam on data line **13040**.

In an alternative embodiment the color control signal **13140** selects a different wavelength for conversion by the tunable wavelength conversion subsystem **13150** during each sub-time frame.

The Color control signal **13140** is generated by the WLC scheduling controller **13120** according to the content of the wavelength mapping table **13110** that indicates the wavelength on which data units should be received during each TF. In a possible embodiment the wavelength mapping has a predefined pattern that is repeated every time cycle and super cycle. When the WLC subsystem **13100** in FIG. 34 is deployed in the architecture shown in FIG. 33, the mapping information contained in the wavelength mapping table **13110** determines the route within the switching system **13000** of the data units carried over the plurality of optical channels during each time frame. In a possible embodiment the content of the wavelength mapping table **13110** is updated whenever a FLP is created or torn down.

In a possible embodiment, the above mentioned mapping repeats each time cycle or each super cycle.

An alternative embodiment features a centralized WLC scheduling controller that generates the color control signal **13140** for all the tunable wavelength conversion subsystems **13100** in the respective switching system. In a possible implementation of such an embodiment the centralized WLC scheduling controller is within the switch controller **13030** depicted in FIG. 33.

The switching system **13000** architecture shown in FIG. 33 provides multicast transmission capability in that it is possible to transmits on more than one output **10020** data units received on the same wavelength of a first input **10010**. Multicasting is achieved by tuning the WLC subsystems **13100** coupled to the selected outputs **10020** to convert the same wavelength.

In a possible implementation the number of wavelengths of each input **10010** is smaller than the number of inputs **10010**. In another possible implementation the number of wavelengths of each input **10010** is smaller than the number of inputs **10010**.

In a possible embodiment the color control signal **13140** selects a different wavelength for reception of data units by the tunable receiver **13210** during each time frame. FIG. 34B is a sample timing diagram describing the operation of a tunable receiver **13210** in this embodiment. The timing diagram shows a sequence of CTR time frames TF and for each time frame the wavelength on which data units are received by the tunable receiver **13210**, wherein each wavelength is identified by the color (green, yellow, red, and blue) of the corresponding light beam.

In an alternative embodiment the color control signal **13140** selects a different wavelength for reception of data units by the tunable receiver **13210** during each sub-time frame.

In an alternative embodiment the color control signal **13140** selects a different wavelength for being converted by the TWLC **13310** during each sub-time frame.

In an alternative embodiment, the TWLC **13330** converts the first selected wavelength signal specified by the color control signal **13140** in a second selected wavelength signal specified by the color control signal **13140**. The wavelength to be converted and the wavelength resulting from the conversion can be changed each time frame, as shown in the timing diagram depicted in FIG. 34B.

The WLC scheduling controller **13120** depicted in FIG. 34B controls the color signal **13140**, and ultimately the TWLC **13310** responsive to the CTR **002** and to a wavelength mapping table **13110**. The wavelength mapping table **13110** depicted in FIG. 34A contains the mapping between each time frame and the wavelength to be converted during the time frame. The mapping can be periodic repeating every time cycle and super cycle, as defined by the CTR.

An alternative embodiment features a centralized WLC scheduling controller that generates the color control signal **13140** for all the TWLCs **13310** in the respective switching system. In such an embodiment the centralized WLC scheduling controller can be implemented within the switch controller **13030** depicted in FIG. 33.

FIG. 35A shows a possible architecture **13400** for an alternative implementation of tunable wavelength conversion subsystem **13150** that can be used in the WLC subsystem **13100** in FIG. 34 within the switching system **13000** presented in FIG. 33. The tunable wavelength conversion subsystem **13400** in FIG. 35A comprises a tunable receive (TR) **13210** and a tunable laser (TL) **13410,** both responsive to the color control signal **13140** from the WLC scheduling controller **13120**. The color control signal **13140** indicates the wavelength on which data units are to be received by the TR **13210** and the wavelength to be generated by the TL **13410** for transmitting the data units previously received by the TR **13210.** The TR **13210** receives an optical signal on line **13040**. Such optical signal possibly comprises a plurality of wavelengths.

In an embodiment, the TR **13330** receives data units on the wavelength signal specified by the color control signal **13140** and the TL **13410** transmits them using another wavelength signal specified by the color control signal **13140**. The wavelength to be received and the wavelength to be transmitted can be changed each time frame, as shown in the timing diagram depicted in FIG. 35B.

The WLC scheduling controller **13120** controls the color signal **13140**, and ultimately the TR **13210** and TL **13410** depicted in FIG. 35A responsive to the CTR **002** and to a wavelength mapping table **13110**, as shown in FIG. 34. The wavelength mapping table **13110** contains the mapping between each time frame and the wavelength to be received during the time frame. The mapping can be periodic repeating every time cycle and super cycle, as defined by the CTR.

An alternative embodiment features a centralized WLC scheduling controller that generates the color control signal **13140** for all the TRs **13310** and TLs **13410** in the respective switching system. In such an embodiment the centralized WLC scheduling controller can be implemented within the switch controller **13030** included in the switch architecture depicted in FIG. 33.

In the preferred embodiment of the present invention the color control signal **13140** selects a different wavelength (color) for being received by the TR **13210** and a different wavelength to be generated by the TL **13410** during each time frame. FIG. 35B is a sample timing diagram describing the operation of this embodiment of tunable wavelength conversion subsystem **13400**. The timing diagram shows a sequence of CTR time frames TF and for each time frame the wavelength to be received (R:) by the TR **13210** and the wavelength to be generated (T:) by the TL **13410**, wherein each wavelength is identified by the color (green, yellow, red, and blue) of the corresponding light beam.

In an alternative embodiment the color control signal **13140** selects a different wavelength for reception by the TR **13210** and for transmission by the TL **13410** during each sub-time frame.

FIG. 35C depicts the block diagram **13450** of a possible embodiment of tunable wavelength conversion subsystem **13150** comprising an alignment subsystem **10100**, a tunable receiver (TR) **13210** and a fixed laser **13220.**

During each time frame of the CTR the receiver **13210** in FIG. 35C is tuned by the Color control signal **13140** to receive data units carried by a specific wavelength, i.e., color. Received data units are stored in the alignment subsystem **10100** that aligns them to the CTR responsive to the CTR signal **002**. Data units are retrieved from the alignment subsystem **10100** to be transmitted by the laser **13220** on a fixed wavelength.

FIG. 34B contains a timing diagram showing the operation of the tunable receiver **13210** in FIG. 35C. The timing diagram shows the wavelength on which the receiver **13210** receives data units during each time frame of the CTR, responsive to the Color signal **13140** from the WLC scheduling controller **13120** depicted in FIG. 34.

In a possible embodiment the color control signal **13140** selects a different wavelength for reception of data units by the tunable receiver **13210** during each time frame. FIG. 34B is a sample timing diagram describing the operation of a tunable receiver **13210** in this embodiment. The timing diagram shows a sequence of CTR time frames TF and for each time frame the wavelength on which data units are received by the tunable receiver **13210,** wherein each wavelength is identified by the color (green, yellow, red, and blue) of the corresponding light beam.

In an alternative embodiment the color control signal **13140** selects a different wavelength for reception of data units by the tunable receiver **13210** during each sub-time frame.

When the embodiment **13450** of tunable wavelength conversion subsystem **13150** presented in FIG. 35C is deployed in a WLC subsystem **13100** within a switching system, an architecture derived from the one depicted in FIG. 33 is used. The switching system deploying the embodiment **13450** of tunable wavelength conversion subsystem **13150** presented in FIG. 35C does not need the optical alignment subsystems **10900** on the inputs **10010,** as shown in FIG. 33, since alignment is performed by the alignment subsystem **10100** within the tunable wavelength conversion subsystem **13450**.

In a switching system architecture such as the one depicted in FIG. 33, deploying at least one of the embodiments of tunable wavelength conversion subsystem presented in FIG. 35A and FIG. 35C within the WLC subsystems **13100**, the lasers **13220** of all the WLC subsystems **13100** connected to the same WDM **10050** transmit on a different wavelength. The WDM **10050** multiplexes on the same output fiber **10020** all the wavelengths received from its respective lasers **13020** through its respective lines **13030**. Hence, each wavelength on a switch output **10020** is uniquely associated to a specific one of the switch inputs **10010**. Consequently, a tunable receiver **13100** in a first switch **13000** tuned to receive data units on a first wavelength determines that data units that have reached a second upstream switch through a first input **10010** uniquely associated to the first wavelength are going to be forwarded by the first switch through the output **10020** associated to the tunable receiver.

According to the architecture depicted in FIG. 33, the wavelength (color) to which a WLC subsystem **13100** is tuned in a first switching system **13000** during a first selected time frame determines the input **10010** of a second upstream switching system **13000** from which the wavelength signal had been forwarded to the first switching system **13000**, wherein one of the inputs **10010** of the first switching system **13000** is coupled to one of the outputs **10020** of the second switching system **13000**. The wavelength (color) emitted by a WLC subsystem in the first switching system **13000** during the first selected time frame determines the output **10020** of the first switching system **13000** through which the wavelength signal is being forwarded. In other words, routing of the data units traversing one or more switching systems **13000** is determined by the tuning of the WLC subsystem **13100** comprised in each switching system **13000**, i.e., by determining the wavelength to be converted and the wavelength generated as a result of the conversion.

In the embodiment **13600** of optical interconnection subsystem **13020** for a switching system **13000** such as the one presented in FIG. 33, each of the outputs **13040** of a star coupler **13010** is coupled, through a respective WLC subsystem **13100** and star coupler **13610** to every switch output **10020**. Consequently, data units received through any switch input **10010** can be forwarded through any output **10020**. Moreover, due to the topology of the connections **13620**, the operation of the WDMs **13630**, and the filters **13640,** during each time frame multiple wavelength signals received through the same input **10010** can be transferred to a selected output **10020**. In other words, it is possible to transfer to the same output **10020** data units received on two different wavelengths carried by the same input fiber.

In a possible embodiment of the switching system **13000** depicted in FIG. 33, all the WLC subsystems **13100** are able to emit the same set of wavelengths, wherein the total number of wavelength each WLC subsystem **13100** is able to generate is equal to the number of outputs **10020**. In an alternative embodiment, there are at least two different types of WLC subsystems **13100,** wherein WLC subsystems **13100** of the first type are able to generate a first set of wavelengths and WLC subsystems **13100** of the second type are able to generate a second set of wavelengths and so on, wherein the total number of wavelength in each set of wavelength is equal to the number of outputs **10020**. In an alternative embodiment, the number of wavelengths in each set of wavelengths is greater than the number of outputs **10020**. In an alternative embodiment, the number of wavelengths in each set of wavelengths is smaller than the number of outputs **10020**. In an alternative embodiment, the number of wavelengths in at least one set of wavelengths is different than the number of wavelengths in the other sets of wavelengths.

### Optical Programmable Delay System

In the optical domain data units flow at light speed through optical fibers and other transport media. In the optical domain memory is realized via optical fiber in which optical signals are stored for the time they take to cross the optical fiber. Consequently, the amount of data units stored and the time spent by data units inside the storage medium (i.e., the optical fiber) depend on the length of the fiber.

A random access memory in which data units can be stored for any amount of time regardless of the time spent in the memory by other data units, is approximated in the optical domain by using a number of different techniques. In the following two such techniques known in the art are briefly described: serial optical delay line and parallel optical delay line.

A possible embodiment of the programmable delay system **10930** is shown in FIG. 36 and includes a programmable optical switching matrix **2730** with a plurality of input ports, or inlets, and output ports, or outlets (numbered from **1** to **N);** a programmable delay controller **2720;** a plurality of optical fibers **2740-2** through **2740-N,** each connecting one of the outputs to a respective one of the inputs, and an programmable delay controller **2720**. One or more optical fibers can have the same length or have different lengths, wherein fiber *i*'s length is given by *lᵢ* = *C t*ᵢ*,* where *C* is the speed of light in the fiber and *t*ᵢ is the delay introduced by the corresponding optical fiber.

By properly configuring input/output connections **2790** across the programmable optical switching matrix an optical signal entering the programmable delay system from a master inlet **2710** connected to switch inlet 1 is delayed, i.e., buffered, until it exists from switch outlet 1 connected to a master outlet **2715**, for a time corresponding to the sum of the propagation delay through a subset of the said plurality of optical fibers. For example, when the input/output connections **2790-1** through **2790-4** in FIG. 36 are configured, the delay experienced by an optical signal traveling from the input **2710** to the output **2715** of the programmable delay system **10930** is *t₂+t₄+t_{N},* as expressed by the delay equation in FIG. 36. In other words, the optical programmable delay system **10930** presented in FIG. 36 provides a delay which is obtained as the sum of the time required by an optical signal to traverse an arbitrary subset of the plurality of optical fibers **2740** connecting the switch outputs to the switch inputs.

In the example configuration in FIG. 36, an optical signal entering the programmable delay system **10930** through its input **2710** is switched by input/output connection **2790-1** of the programmable optical switching matrix **2730** to output 2 and travels on the corresponding optical fiber **2740-2** to input 2, where it is switched to output port 4 by the input/output connection **2790-2**. Then the optical signal enters optical fiber **2740-4** and travels to input **4** where it is switched to output port **N** by the input/output connection **2790-3**. After having traveled through optical fiber **2740-N**, the optical signal is switched to output port 1, connected to the programmable delay system output **2715,** by the input/output connection **2790-4.**

The programmable delay controller **2720** configures the programmable optical switching matrix **2730** to provide the input/output connections **2790** required to introduce the required delay between input **2710** and output **2715** of the programmable delay system **10930**. The programmable delay controller **2720** can receive control and status information from the programmable optical switching matrix **2730**.

In a possible embodiment, the length of each fiber in the set of fibers **2740** is chosen as a multiple of a base length, wherein the multiple is a power of 2. For example, if *C·t₀* is the base length, the length of each fiber in the set of *N* fibers can be chosen as C·*t*₀, 2·*C*·*t*₀, 2²·*C·t*₀,2^{N-1}·*C*·*t*₀. The choice of this set allows the delay imposed by the programmable delay system **10930** to be varied between 0 and (2^{N}-1)·*t*₀, with a granularity to. The total amount of fiber needed is (2^{N}-1)·*C*·*t*₀, which is the amount required by a tap-based optical delay line, and much smaller than the amount required by a traditional parallel fiber delay line. Given a maximum delay D, the total number of switch inputs/outputs **N** required to provide a granularity *t*₀ is ceil[log₂ceil(*D*/*t₀*+1)], where ceil(x) is a function returning the smallest integer greater than or equal to x. Notice that an optical signal delayed by an optical programmable delay system 10930 according to this embodiment traverses the programmable optical switching matrix at most N times, while the optical signal delayed by a serial optical delay line traverses *D*/*t₀* taps. In other words, assuming that a tap introduces the same attenuation as a programmable optical switching matrix (they are both switches), the attenuation (measured in dB) introduced by an optical programmable delay system **10930** according to this embodiment is roughly the base 2 logarithm of the attenuation (measured in dB) introduced by a serial optical delay line.

For example, given a basic delay *t₀*=80 ns, provided by 16 meters of fiber, and an 8-by-8 programmable optical switching matrix **2730**, an programmable delay system can be realized which provides a variable delay between 0 and 10 microseconds with a granularity of 80 ns. The resulting programmable delay system requires a total of 2,032 meters of fiber. The programmable optical switching matrix **2730** in FIG. 36 is traversed at most 8 times by an optical signal, while an equivalent serial optical delay line contains 256 taps. Given that the insertion loss of a tap is the same as the one of a programmable optical switching matrix, the power loss (measured in dB) of an optical signal traversing the presented embodiment of programmable optical delay system is (measured in dB) 8 times lower than the one introduced by a serial optical delay line.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications that fall within the scope of the claims.

## Claims

1. A switching system having an input and an output, each of the input and the output comprising at least one channel (920) coupled for communicating data units, the switching system further comprising:
a first comunications switch (52) and a second communications switch (52) connected by at least one communications link, comprising at least one channel (920), for transmitting a plurality of data units from said communications link to the output of the switching system;
wherein each channel is at least one of an input channel and an output channel;
a Common Time Reference (in the following CTR) (002), divided into a plurality of consecutive time frames (TFs);
wherein the time frames have at least one of a plurality of predefined time durations;
wherein each of the first and the second communications switches is further comprised of a plurality of input ports (450) and a plurality of output ports (455), each of the input ports connected to and receiving data units from at least one of the channels, and each of the output ports connected and transmitting data units to at least one of the channels;
wherein each of the first and the second communications switches has a respective switch fabric (490) coupled to the respective input ports (450), and the respective output ports (455);
wherein each of the first and the second communications switches has a respective switch controller (410), coupled to the CTR (002), and to at least one of:
(1) the respective input ports, (2) the respective output ports, and (3) the respective switch fabric (490);
**characterized in that**:
the switch controllers (410) of the first communications switch is responsive to the CTR (002) and to the respective predefined time durations of respective ones of the time frames, for scheduling at least one of: (1) a connection via the respective switch fabric (490) from a respective one of the input ports, on a respective one of the input channels during a first input predefined time interval and (2) a transmission via a respective one of the output ports, on a respective one of the output channels during a first output predefined time interval;
and **in that** the switch controllers (410) of the second communications switch is responsive to the CTR and to the respective predefined time durations of respective ones of the time frames, for scheduling at least one of: a connection via the respective switch fabric from a respective one of the input ports, on a respective one of the input channels during a second input predefined time interval and a transmission via a respective one of the output ports, on a respective one of the output channels during a second output predefined time interval;
and **in that** there is a predefined time interval between at least one of the following: the beginning of the first input predefined time interval and the second input predefined time interval, the beginning of the first output predefined time interval and the second output predefined time interval; and
and **in that** the predefined time interval is at least one of the following: (1) larger than the delay between the first communications switch and the second communications switch, a predefined fraction of the first input predefined time interval, an integer number of the first input predefined time interval, a predefined fraction of the first output predefined time interval, and an integer number of the first output predefined time interval.

2. The system as in claim 1, **characterized in that** each of the respective switch controllers (410) defines the coupling from each one of the respective input ports (450) for data units received during any one of the time frames, on a respective one of the channels (920), for output during a predefined time frame to at least one selected one of the respective output ports (455) on at least one selected respective one of the channels.

3. The system as in claim 2, **characterized in that** the data units that are output through the respective switch fabric during a first predefined time frame on a selected respective one of the channels (920) through the respective output port (455) on the first communications switch (52) are forwarded through the respective output port of the second communications switch during a second predefined time frame on a selected respective one of the channels responsive to the CTR (002).

4. The system as in claim 1, **characterized in that** the data units received at multiple ones of the channels during a first one of the predefined time frames are combined for output during a second one of the predefined time frames responsive to the respective switch controller (410).

5. The system as in claim 1, **characterized in that** the data units received at a single one of the channels during a plurality of the predefined time frames are combined for output to a second one of the channels during a second predefined time frame.

6. The system as in claim 1, **characterized in that** the time frames are each comprised of at least one sub-time frame.

7. The system as in claim 1,
**characterized in that** the switch fabric (490) is at least one of the following:
a crossbar, a generalized multi-stage cube network, a Clos network, a Benes network, an Omega network, a Delta network, a multi-stage shuffle exchange network, a Banyan network, a combination of optical demultiplexers and optical multiplexers, a passive optical star, a plurality of passive optical stars, a plurality of tunable lasers, a plurality of tunable lasers connected to at least one passive optical star, a plurality of optical tunable receivers connected to at least one passive optical star, an optical switch, an optical cross-bar, an optical Banyan network, a Lithium-Niobate optical switch, an Indium Phosphate optical switch, a 2-D MEMS optical switch, a 3-D MEMS optical switch, a semiconductor optical amplifier (SOA) based optical switch, an holographic optical switch, and Bubble optical switch.

8. The system as in claim 6, **characterized in that** a predefined number of at least one consecutive one of the time frames comprise a time cycle (TC), wherein a predefined number of at least one consecutive one of the time cycles comprise a super cycle (SC).

9. The system as in claim 8,
**characterized in that** the plurality of input ports (450) each receives data units over at least one of a plurality of incoming channels (j) (920), and wherein the plurality of output ports (455) each sends data units over at least one of a plurality of outgoing channels (1) (920);
and **in that** each of the incoming channels (j) has a unique time reference (UTR-j) that is phase independent of the CTR;
and **in that** the UTR-j is divided into consecutive UTR-j super cycles; wherein the UTR-j super cycles are divided into consecutive UTR-j time cycles; and wherein the UTR-j time cycles are divided into consecutive UTR-j time frames;
and **in that** the UTR-j time frames have a plurality of predefined time durations.

10. The system as in claim 9,
**characterized in that** the UTR-j time frames have at least one of the following: same duration as the CTR time frames, and different duration than the CTR time frames;
and the UTR-j time cycles have at least one of the following: same duration as the CTR time cycles, and different duration than the CTR time cycles; and
the UTR-j super cycles have at least one of the following: same duration as the CTR super cycles, and different duration than the CTR super cycles.

11. The system as in claim 9,
**characterized in that** the UTR-j super cycles have a starting time and an ending time that is at least one of: (1) different starting time and ending time than the CTR super cycles; and (2) same starting time and ending time as the respective CTR super cycles; and
the UTR-j time cycles have a starting time and an ending time that are at least one of: (1) different starting time and ending time than the CTR time cycles; and (2) same starting time and ending time as the respective CTR time cycles.

12. The system as in claim 9, further comprising:
a plurality of buffer queues (1550, 1650), wherein each of the respective buffer queues is associated, for each of the CTR time frames, with a combination of one of the incoming channels and one of the outgoing channels;
a mapping controller within the switch controller (410) system for logically mapping, for each of the (UTR-j) time frames, selected incoming channels (j) to selected buffer queues, and for logically mapping, for each of the CTR time frames, selected ones of the plurality of buffer queues to selected outgoing channels (1);
wherein each of the buffer queues is further comprised of an alignment subsystem (1500) comprised of a plurality of time frame queues, wherein each of the time frame queues comprises means to determine that the respective time frame queue is empty, wherein each of the time frame queues further comprises means to determine that the respective time frame queue is not empty;
wherein the data units that arrive via the incoming channel (j) are stored in the respective time frame queue of the alignment subsystem responsive to the mapping controller; and
wherein the mapping controller further provides for coupling of selected ones of the time frame queues to respective ones of the outgoing channels (I), for transfer of the respective stored data units during the respective associated time CTR time frames.

13. The system as in claim 12,
**characterized in that** the alignment subsystem (1500), responsive to the mapping controller, transfers the data units associated with a respective first time frame as defined by the UTR-j into an empty first time frame queue from incoming channel (j), during the respective selected first time frame of the UTR-j time frames, wherein the respective time frame queue is designated as full; and
the alignment subsystem, responsive to the mapping controller, transfers data units out of a full second time frame queue to respective outgoing channel (I), during at least one of the following: a selected one of the CTR time frames and a selected one of the CTR sub-time frames, wherein the second time frame queue is designated as empty.

14. The system as in claim 1, further comprising:
a plurality of channel bit rates;
means for mapping (8410) for each of the time frames of each of the channels that is connected to the output port a predefined subset of the data units from a respective subset of the time frames for a respective subset of the channels that are connected to the input ports.

15. The system as in claim 14,
**characterized in that** the mapping of the data units for the time frames of the input channels into the respective time frame of the respective output channel is done in a predefined order using position logic (8420).

16. The system as in claim 15, **characterized in that** the means (8300) for mapping maps between at least one of the following: selected ones of four OC-3 channels to selected one of OC-12 channels, selected ones of sixteen OC-3 channels to selected one of OC-48 channels, selected ones of four OC-12 channels to selected one of OC-48 channels, selected ones of sixteen OC-12 channels to selected one of OC-192 channels, selected ones of four OC-48 channels to selected one of OC-192 channels, and selected ones of sixteen OC-48 channels to selected one of OC-768 channels.

17. The system as in claim 1, further comprising:
a contiguous plurality of SONET frames (8115) each having a predefined time duration;
means for separating each of the SONET channels into at least one SONET sub-channel each comprising of a sequence of contiguous SONET frames;
wherein each SONET frame consists of at least one data unit;
first means for mapping each of the SONET frames to selected ones of the time frames; and
means for providing for data transport of the SONET frames responsive to the first means for mapping and the CTR.

18. The system as in Claim 17, **characterized in that** each of the SONET frames is comprised of a plurality of parts;
wherein the first means for mapping selectively maps each of the parts of one of the SONET frames to each of multiple respective ones of the time frames.

19. The system as in Claim 18, **characterized in that** each of the parts is at least one of the following: STS-1, STS-2, STS-3, STS-4, STS-5, STS-6, STS-7, STS-8, STS-9, STS-10, STS-11, STS-12, STS-48, STS-192, and STS-768;

20. The system as in claim 1, the system further comprising:
means for controlling (8300) the transport of SONET channels comprising SONET frames;
wherein the SONET frames are transported as data units during selected ones of the predefined time frames;
the system further comprising:
means for mapping the data units from the respective predefined time frame to the respective SONET frames associated with at least one SONET sub-channel; and
means for multiplexing the respective SONET frames associated with the at least one SONET sub-channel to form a sequence of SONET frames associated with a respective one of the SONET channels.

21. The system as in Claim 1, the system further comprising:
means for separating out the input channels (440), to provide separated wavelength signals, each with a defined connection to at least one of the output ports;
means for mapping, comprising a stored wavelength mapping table (10210), said means for mapping providing for a mapping of each of the separated wavelength signals to a second wavelength signal for the connection to the at least one of the output ports, responsive to the CTR signal (002) and the stored wavelength mapping table (10210);
wherein the second wavelength signals are changeable between the time frames.

22. The system as in claim 21, **characterized in that** the second wavelength signal is provided by at least one of the following: a tunable laser (10230), a tunable filter.

23. The system as in claim 21, **characterized in that** the association of the wavelength signals with respective ones of the time frames reoccurs periodically.

24. The system as in claim 21, **characterized in that** the means for separating is further comprised of a wavelength division multiplexing (WDM) demultiplexer (440) coupled to each communications link.

25. The system as in claim 21, further comprising means for alignment (1500) of all the wavelength signals with a defined connection to each of the input ports with the CTR.

26. The system as in claim 25, **characterized in that** alignment is achieved by means of adjustable delay.

27. The system as in claim 21,
**characterized in that** the switch controller (410) loads the stored wavelength mapping table (10210) responsive to the CTR (002), to coordinate the assignment of the second wavelength signals to a respective one of the time frames.

28. The system as in claim 1,
**characterized in that** each of the channels is carried on a defined first wavelength;
a plurality of wavelength conversion subsystems (WLC) (13150) each coupled to a respective one of the plurality of communications links;
each wavelength conversion subsystem selectively converts from the first wavelength to a second wavelength, responsive to the CTR, to provide a respective output of a second communications link carrying the second wavelength;
a plurality of wavelength division multiplexers (WDM's) (10050), each having a plurality of optical channel inputs;
an optical interconnection subsystem (13020) for coupling the second optical links to selected ones of the optical channel inputs of an associated one of the WDM's; and
each of the WDM's multiplexes its respective plurality of optical channel inputs to at least one respective communications link (10020).

29. The system as in claim 25, **characterized in that** the means for alignment is further comprised of:
a programmable optical switching matrix (10930) comprising a plurality of independent inlets and outlets;
a plurality of predefined-length fibers (2740) each coupling from one outlet to one inlet of the plurality of independent inlets and outlets; and
a programmable delay controller (2720) for mapping selected ones of the plurality of the inlets to selected ones of the plurality of outlets such that a subset of the plurality of fibers are concatenated to act as an effective single fiber of equivalent combined length of the subset.

30. The switching system as in claim 1,
**characterized in that** the data units are at least one of a byte, a word, a packet, an Internet protocol (IP) packet, an asynchronous transfer mode (ATM) cell, a fiber channel (FC) frame, an Ethernet frame each having a payload part and a header part;
the switching system further comprising: a plurality of time frame delimiters (TFDs) between consecutive time frames and a routing controller (5610) at selected ones of the input ports;
the TFDs are at least one of: idle time and control word;
selected ones of the data units are forwarded to the routing controller;
the routing controller (5610) determines specific defined one of the channels on a specific defined one of the output ports that the data units are to be forwarded to, responsive to at least one of: (1) decoding the header parts, (2) the TFDs and (3) the CTR (002).

31. The system as in claim 30, further comprising:
first means for mapping each of the data units to selected ones of the time frames; and
means for providing for data transport of the data units responsive to the first means for mapping and the CTR (002).

32. The system as in Claim 31, **characterized in that** each of the data units is comprised of at least one part; and the first means for mapping selectively maps each part of one of the data units to at least one respective one of the time frames.

33. The system as in Claim 32, **characterized in that** the means for providing the data transport is a time-driven switching apparatus; the system further comprising:
a switching node (52) with a plurality of input ports each having a unique address and a plurality of output ports each having a unique address;
position logic (8420) for determining a relative position for each of said respective incoming parts of the data unit within the respective particular time frame; and
a forwarding and transmit delineation controller (8420) responsive to (1) the unique address of the input port associated with each one of the incoming parts of the data units; (2) the associated time frame of arrival; and (3) the associated relative position for each said respective incoming parts of the data unit within said time frame of arrival, to provide a routing to an associated particular one of the output ports at an associated particular position and within an associated second particular time frame.

34. The system as in claim 33, **characterized in that** the forwarding and transmit delineation controller (8420) provides routing of each of the incoming parts of the data units to a plurality of the output ports, each of the plurality of the incoming parts of the data units having a respective unique associated particular position within an associated one of the predefined time frames.

35. The system as in claim 33, **characterized in that** each of the time frames has a defined duration from start to end, wherein each of the input ports is comprised of a serial receiver that provides position delimiters associated with each of the incoming parts of the data units coupled thereto, wherein the position logic (8420) is a position counter (8420), wherein said position counter counts the position delimiters that have occurred since the start of the respective one of the time frames.

36. The system as in claim 35, **characterized in that** the time frames are cyclically recurring, wherein a sequence of position delimiters within the cyclically recurring time frames is implicitly defined by a predefined sequence of time units of equal duration.

37. The system as in claim 35, **characterized in that** the time frames are cyclically recurring, wherein the sequence of position delimiters within the cyclically recurring time frames is defined by a predefined sequence of time intervals of arbitrarily different duration.

38. The system as in claim 35, **characterized in that** the position logic (8420) is incremented at predefined time intervals relative to the start of the time frame, for determining new relative positions.

39. The system as in claim 36, **characterized in that** each of the positions is of predefined time duration.

40. The system as in Claim 32, **characterized in that** the means for providing the data transport is a time-driven priority apparatus; said system further comprising:
a pipe (2910) comprising at least two switching nodes interconnected via at least one channel in a path;
a Forwarding and Transmit Delineation Controller (2920) for assigning selected predefined time frames for transfer into and out from each of the respective switching nodes responsive to the common time reference;
wherein for each switching node (52) within the pipe there is a first predefined time frame within which a respective parts of the data unit is transferred into the respective switching node, and a second predefined time frame within which the respective parts of the data unit is forwarded out of the respective switching node; and
wherein the time frame assignment provides consistent predefined intervals between the time between the input to and output from the pipe.

41. The system as in claim 40, **characterized in that** there are a plurality of the pipes (2910), each of the pipes comprising at least two of the switching nodes interconnected via channels in a path (52).

42. The system as in claim 41, **characterized in that** for each of the same predefined time frames, multiple data units can be transferred utilizing at least two of the pipes (2910).

43. The system as in any of the preceding claims,
**characterized in that** the data units are at least one of a byte, a word, a packet, a frame, an ATM cell, a fiber channel frame, an IP packet, an Ethernet frame.

44. The system as in any of the preceding claims, **characterized in that** each of the channels is at least one of: (1) optical, (2) wavelength division multiplexing (WDM), (3) dense wavelength division multiplexing DWDM, (4) Sonet, (5) point-to-point wireless, (6) multi-point wireless, (7) shared media wireless, (8) Ethernet, (9) gigabit Ethernet (GE), (10) 10-gigabit Ethernet (10GE), (11) shared media passive optical star coupler, (12) cable modem, (13) DSL, (14) ADSL, (15) SDSL, and (16) ATM circuit emulation.

## Patentansprüche

1. Vermittlungssystem mit einem Eingang und mit einem Ausgang, wobei sowohl der Eingang als auch der Ausgang wenigstens einen Kanal (920) umfasst, der für Kommunikationsdateneinheiten gekoppelt ist, wobei das Vermittlungssystem ferner umfasst:
eine erste Kommunikationsvermittlung (52) und eine zweite Kommunikationsvermittlung (52), die durch wenigstens eine Kommunikationsverbindung verbunden sind, die wenigstens einen Kanal (920) umfasst, um mehrere Dateneinheiten von der genannten Kommunikationsverbindung an den Ausgang des Vermittlungssystems zu übertragen;
wobei jeder Kanal ein Eingangskanal und/oder ein Ausgangskanal ist;
eine gemeinsame Zeitreferenz (im Folgenden CTR) (002), die in mehrere aufeinanderfolgende Zeitrahmen (TFs) geteilt ist;
wobei die Zeitrahmen wenigstens eine von mehreren vorgegebenen Zeitdauern haben;
wobei sowohl die erste als auch die zweite Kommunikationsvermittlung ferner mehrere Eingangsports (450) und mehrere Ausgangsports (455) umfasst, wobei jeder der Eingangsports mit wenigstens einem der Kanäle verbunden ist und Dateneinheiten von ihm empfängt und wobei jeder der Ausgangsports mit wenigstens einem der Kanäle verbunden ist und Dateneinheiten an ihn sendet;
wobei sowohl die erste als auch die zweite Kommunikationsvermittlung eine jeweilige Vermittlungs-Fabric (490) aufweist, die mit den jeweiligen Eingangsports (450) und mit den jeweiligen Ausgangsports (455) gekoppelt ist,
wobei sowohl die erste als auch die zweite Kommunikationsvermittlung eine jeweilige Vermittlungssteuereinheit (410) aufweist, die mit der CTR (002) und mit wenigstens einem der Folgenden gekoppelt ist: (1) den jeweiligen Eingangsports, (2) den jeweiligen Ausgangsports und (3) der jeweiligen Vermittlungs-Fabric (490);
**dadurch gekennzeichnet, dass**:
die Vermittlungssteuereinheiten (410) der ersten Kommunikationsvermittlung auf die CTR (002) und auf die jeweiligen vorgegebenen Zeitdauern der jeweiligen Zeitrahmen reagieren, um wenigstens eines der Folgenden zu planen: (1) eine Verbindung über die jeweilige Vermittlungs-Fabric (490) von einem jeweiligen der Eingangsports auf einem jeweiligen der Eingangskanäle während eines ersten vorgegebenen Eingabezeitintervalls und (2) eine Übertragung über einen jeweiligen der Ausgangsports auf einem jeweiligen der Ausgangskanäle während eines ersten vorgegebenen Ausgabezeitintervalls;
und dadurch, dass die Vermittlungssteuereinheiten (410) der zweiten Kommunikationsvermittlung auf die CTR und auf die jeweiligen vorgegebenen Zeitdauern jeweils eines der Zeitrahmen reagieren, um wenigstens eines der Folgenden zu planen: eine Verbindung über die jeweilige Vermittlungs-Fabric von einem jeweiligen der Eingangsports auf einem jeweiligen der Eingangskanäle während eines zweiten vorgegebenen Eingabezeitintervalls und eine Übertragung über einen jeweiligen der Ausgangsports auf einem jeweiligen der Ausgangskanäle während eines zweiten vorgegebenen Ausgabezeitintervalls;
und dadurch, dass es zwischen wenigstens einem der Folgenden ein vorgegebenes Zeitintervall gibt: dem Anfang des ersten vorgegebenen Eingabezeitintervalls und des zweiten vorgegebenen Eingabezeitintervalls, dem Anfang des ersten vorgegebenen Ausgabezeitintervalls und des zweiten vorgegebenen Ausgabezeitintervalls; und
und dadurch, dass das vorgegebene Zeitintervall wenigstens eines der Folgenden ist: (1) größer als die Verzögerung zwischen der ersten Kommunikationsvermittlung und der zweiten Kommunikationsvermittlung, ein vorgegebener Bruchteil des ersten vorgegebenen Eingabezeitintervalls, eine ganze Zahl des ersten vorgegebenen Eingabezeitintervalls, ein vorgegebener Bruchteil des ersten vorgegebenen Ausgabezeitintervalls und eine ganze Zahl des ersten vorgegebenen Ausgabezeitintervalls.

2. System gemäß Anspruch 1, **dadurch gekennzeichnet, dass** jede der jeweiligen Vermittlungssteuereinheiten (410) für Dateneinheiten, die während irgendeines der Zeitrahmen auf einem jeweiligen der Kanäle (920) empfangen werden, die Kopplung von einem jeweiligen der jeweiligen Eingangsports (450) zur Ausgabe während eines vorgegebenen Zeitintervalls an wenigstens einen ausgewählten der jeweiligen Ausgangsports (455) auf wenigstens einem ausgewählten der Kanäle definiert.

3. System gemäß Anspruch 2, **dadurch gekennzeichnet, dass** die Dateneinheiten, die über die jeweilige Vermittlungs-Fabric während eines ersten vorgegebenen Zeitrahmens auf einem jeweiligen ausgewählten der Kanäle (920) über den jeweiligen Ausgangsport (455) an der ersten Kommunikationsvermittlung (52) ausgegeben werden, in Reaktion auf die CTR (002) während eines zweiten vorgegebenen Zeitrahmens über den jeweiligen Ausgangsport der zweiten Kommunikationsvermittlung auf einem jeweiligen ausgewählten der Kanäle weitergeleitet werden.

4. System gemäß Anspruch 1, **dadurch gekennzeichnet, dass** die Dateneinheiten, die während eines ersten der vorgegebenen Zeitrahmen auf mehreren der Kanäle empfangen werden, in Reaktion auf eine jeweilige Vermittlungssteuereinheit (410) während eines zweiten der vorgegebenen Zeitrahmen zur Ausgabe kombiniert werden.

5. System gemäß Anspruch 1, **dadurch gekennzeichnet, dass** die während mehrerer der vorgegebenen Zeitrahmen auf einem einzelnen der Kanäle empfangenen Dateneinheiten zur Ausgabe während eines zweiten vorgegebenen Zeitrahmens an einen zweiten der Kanäle kombiniert werden.

6. System gemäß Anspruch 1, **dadurch gekennzeichnet, dass** die Zeitrahmen jeweils wenigstens einen Unterzeitrahmen umfassen.

7. System gemäß Anspruch 1,
**dadurch gekennzeichnet, dass** die Vermittlungs-Fabric (490) wenigstens eines der Folgenden ist: eine Kreuzschiene, ein verallgemeinertes mehrstufiges Würfelnetz, ein Clos-Netz, ein Benes-Netz, ein Omega-Netz, ein Delta-Netz, ein mehrstufiges Umordnungsvermittlungsstellennetz, ein Banyan-Netz, eine Kombination optischer Demultiplexer und optischer Multiplexer, ein passiver optischer Stern, mehrere passive optische Sterne, mehrere durchstimmbare Laser, mehrere durchstimmbare Laser, die mit wenigstens einem passiven optischen Stern verbunden sind, mehrere durchstimmbare optische Empfänger, die mit wenigstens einem passiven optischen Stern verbunden sind, ein optischer Schalter, eine optische Kreuzschiene, ein optisches Banyan-Netz, ein optischer Lithiumniobatschalter, ein optischer Indiumphosphatschalter, ein optischer 2-D-MEMS-Schalter, ein optischer 3-D-MEMS-Schalter, ein optischer Schalter auf der Grundlage eines optischen Halbleiterverstärkers (SOA), ein holographischer optischer Schalter und ein optischer Blasenschalter.

8. System gemäß Anspruch 6, **dadurch gekennzeichnet, dass** eine vorgegebene Anzahl wenigstens eines aufeinanderfolgenden der Zeitrahmen einen Zeitzyklus (TC) umfasst, wobei eine vorgegebene Anzahl wenigstens eines aufeinanderfolgenden der Zeitzyklen einen Superzyklus (SC) umfasst.

9. System gemäß Anspruch 8,
**dadurch gekennzeichnet, dass** die mehreren Eingangsports (450) jeweils über wenigstens einen von mehreren ankommenden Kanälen (j) (920) Dateneinheiten empfangen und dass die mehreren Ausgangsports (455) jeweils über wenigstens einen von mehreren abgehenden Kanälen (I) (920) Dateneinheiten senden;
und dadurch, dass jeder der ankommenden Kanäle (j) eine eindeutige Zeitreferenz (UTR-j) besitzt, die phasenunabhängig von der CTR ist;
und dadurch, dass die UTR-j in aufeinanderfolgende UTR-j-Superzyklen geteilt ist; wobei die UTR-j-Superzyklen in aufeinanderfolgende UTR-j-Zeitzyklen geteilt sind; und wobei die UTR-j-Zeitzyklen in aufeinanderfolgende UTR-j-Zeitrahmen geteilt sind;
und dadurch, dass die UTR-j-Zeitrahmen mehrere vorgegebene Zeitdauern haben.

10. System gemäß Anspruch 9,
**dadurch gekennzeichnet, dass** die UTR-j-Zeitrahmen wenigstens eines der Folgenden haben: dieselbe Dauer wie die CTR-Zeitrahmen und eine andere Dauer als die CTR-Zeitrahmen;
und dass die UTR-j-Zeitzyklen wenigstens eines der Folgenden haben: dieselbe Dauer wie die CTR-Zeitzyklen und eine andere Dauer als die CTR-Zeitzyklen; und
dass die UTR-j-Superzyklen wenigstens eines der Folgenden haben: dieselbe Dauer wie die CTR-Superzyklen und eine andere Dauer als die CTR-Superzyklen.

11. System gemäß Anspruch 9,
**dadurch gekennzeichnet, dass** die UTR-j-Superzyklen eine Anfangszeit und eine Endzeit haben, die wenigstens eines der Folgenden sind: (1) eine andere Anfangszeit und Endzeit als die CTR-Superzyklen; und (2) dieselbe Anfangszeit und Endzeit wie die jeweiligen CTR-Superzyklen; und
dass die UTR-j-Zeitzyklen eine Anfangszeit und eine Endzeit haben, die wenigstens eines der Folgenden sind: (1) eine andere Anfangszeit und Endzeit als die CTR-Zeitzyklen; und (2) dieselbe Anfangszeit und Endzeit wie die jeweiligen CTR-Zeitzyklen.

12. System gemäß Anspruch 9, das ferner umfasst:
mehrere Pufferwarteschlangen (1550, 1650), wobei jede der jeweiligen Pufferwarteschlangen für jeden der CTR-Zeitrahmen einer Kombination eines der ankommenden Kanäle und eines der abgehenden Kanäle zugeordnet ist;
eine Abbildungsteuereinheit im System der Vermittlungssteuereinheit (410) zum logischen Abbilden ausgewählter ankommender Kanäle (j) auf ausgewählte Pufferwarteschlangen für jeden der (UTR-j)-Zeitrahmen und zum logischen Abbilden ausgewählter der mehreren Pufferwarteschlangen auf ausgewählte abgehende Kanäle (I) für jeden der CTR-Zeitrahmen;
wobei jede der Pufferwarteschlangen ferner ein Ausrichtungsteilsystem (1500) umfasst, das mehrere Zeitrahmenwarteschlangen umfasst, wobei jede der Zeitrahmenwarteschlangen ein Mittel umfasst, um zu bestimmen, dass die jeweilige Zeitrahmenwarteschlange leer ist, wobei jede der Zeitrahmenwarteschlangen ferner ein Mittel umfasst, um zu bestimmen, dass die jeweilige Zeitrahmenwarteschlange nicht leer ist;
wobei die Dateneinheiten, die über den ankommenden Kanal (j) ankommen, in Reaktion auf die Abbildungsteuereinheit in der jeweiligen Zeitrahmenwarteschlange des Ausrichtungsteilsystems gespeichert werden; und
wobei die Abbildungssteuereinheit ferner das Koppeln ausgewählter der Zeitrahmenwarteschlangen mit jeweiligen der abgehenden Kanäle (I) für die Übertragung der jeweiligen während jeweiliger zugeordneter Zeit-CTR-Zeitrahmen gespeicherten Dateneinheiten bereitstellt.

13. System gemäß Anspruch 12,
**dadurch gekennzeichnet, dass** das Ausrichtungsteilsystem (1500) in Reaktion auf die Abbildungsteuereinheit während des jeweils ausgewählten ersten Zeitrahmens der UTR-j-Zeitrahmen die Dateneinheiten, die einem jeweiligen ersten wie durch die UTR-j definierten Zeitrahmen zugeordnet sind, vom ankommenden Kanal (j) in eine leere erste Zeitrahmenwarteschlange überträgt, wobei die jeweilige Zeitrahmenwarteschlange als voll bestimmt wird; und
das Ausrichtungsteilsystem in Reaktion auf die Abbildungsteuereinheit während wenigstens eines der Folgenden Dateneinheiten aus einer vollen zweiten Zeitrahmenwarteschlange an einen jeweiligen abgehenden Kanal (I) übertragt: eines ausgewählten der CTR-Zeitrahmen und eines ausgewählten der CTR-Unterzeitrahmen, wobei die zweite Zeitrahmenwarteschlange als leer bestimmt wird.

14. System gemäß Anspruch 1, das ferner umfasst:
mehrere Kanalbitraten;
ein Mittel, um für jeden der Zeitrahmen jedes der Kanäle, der mit dem Ausgangsport verbunden ist, eine vorgegebenen Teilmenge der Dateneinheiten von einer jeweiligen Teilmenge der Zeitrahmen für eine jeweilige Teilmenge der Kanäle, die mit den Eingangsports verbunden sind, abzubilden (8410).

15. System gemäß Anspruch 14,
**dadurch gekennzeichnet, dass** das Abbilden der Dateneinheiten für die Zeitrahmen der Eingangskanäle auf den jeweiligen Zeitrahmen des jeweiligen Ausgangskanals unter Verwendung einer Positionslogik (8420) in einer vorgegebenen Reihenfolge erfolgt.

16. System gemäß Anspruch 15, **dadurch gekennzeichnet, dass** das Mittel (8300) zum Abbilden zwischen wenigstens einem der Folgenden abbildet: ausgewählte der vier OC-3-Kanäle auf einen ausgewählten der OC-12-Kanäle, einen ausgewählten der sechzehn OC-3-Kanäle auf einen ausgewählten der OC-48-Kanäle, einen ausgewählten der vier OC-12-Kanäle auf einen ausgewählten der OC-48-Kanäle, einen ausgewählten der sechzehn OC-12-Kanäle auf einen ausgewählten der OC-192-Kanäle, einen ausgewählten der vier OC-48-Kanäle auf einen ausgewählten der OC-192-Kanäle und einen ausgewählten der sechzehn OC-48-Kanäle auf einen ausgewählten der OC-768-Kanäle.

17. System gemäß Anspruch 1, das ferner umfasst:
mehrere zusammenhängende SONET-Rahmen (8115), die jeweils eine vorgegebene Zeitdauer haben;
ein Mittel zum Trennen jedes der SONET-Kanäle in wenigstens einen SONET-Teilkanal, der jeweils eine Folge zusammenhängender SONET-Rahmen umfasst;
wobei jeder SONET-Rahmen aus wenigstens einer Dateneinheit besteht;
ein erstes Mittel zum Abbilden jedes der SONET-Rahmen auf ausgewählte der Zeitrahmen; und
ein Mittel zum Bereitstellen des Datentransports der SONET-Rahmen in Reaktion auf das erste Mittel zum Abbilden und auf die CTR.

18. System gemäß Anspruch 17, **dadurch gekennzeichnet, dass** jeder der SONET-Rahmen mehrere Teile umfasst;
wobei das erste Mittel zum Abbilden wahlweise jedes der Teile eines der SONET-Rahmen auf jeden von mehreren jeweiligen der Zeitrahmen abbildet.

19. System gemäß Anspruch 18, **dadurch gekennzeichnet, dass** jeder der Teile wenigstens eines der Folgenden ist: STS-1, STS-2, STS-3, STS-4, STS-5, STS-6, STS-7, STS-8, STS-9, STS-10, STS-11, STS-12, STS-48, STS-192 und STS-768.

20. System gemäß Anspruch 1, wobei das System ferner umfasst:
ein Mittel zum Steuern (8300) des Transports von SONET-Kanälen, die SONET-Rahmen umfassen;
wobei die SONET-Rahmen während ausgewählter der vorgegebenen Zeitrahmen als Dateneinheiten transportiert werden;
wobei das System ferner umfasst:
ein Mittel zum Abbilden der Dateneinheiten von dem jeweiligen vorgegebenen Zeitrahmen auf die jeweiligen SONET-Rahmen, die wenigstens einem SONET-Teilkanal zugeordnet sind; und
ein Mittel zum Multiplexieren der jeweiligen SONET-Rahmen, die wenigstens einem SONET-Teilkanal zugeordnet sind, um eine Folge von SONET-Rahmen zu bilden, die einem jeweiligen der SONET-Kanäle zugeordnet sind.

21. System gemäß Anspruch 1, wobei das System ferner umfasst:
ein Mittel zum Absondern der Eingangskanäle (440), um getrennte Wellenlängensignale, jeweils mit einer definierten Verbindung zu wenigstens einem der Ausgangsports, zu liefern;
ein Mittel zum Abbilden, das eine gespeicherte Wellenlängenabbildungstabelle (10210) umfasst, wobei das genannte Mittel zum Abbilden in Reaktion auf das CTR-Signal (002) und die gespeicherte Wellenlängenabbildungstabelle (10210) eine Abbildung jedes der getrennten Wellenlängensignale auf ein zweites Wellenlängensignal für die Verbindung mit dem wenigstens einen der Ausgangsports liefert;
wobei die zweiten Wellenlängensignale zwischen den Zeitrahmen änderbar sind.

22. System gemäß Anspruch 21, **dadurch gekennzeichnet, dass** das zweite Wellenlängensignal durch wenigstens eines der Folgenden geliefert wird: einen durchstimmbaren Laser (10230), ein durchstimmbares Filter.

23. System gemäß Anspruch 21, **dadurch gekennzeichnet, dass** die Zuordnung der Wellenlängensignale zu jeweiligen der Zeitrahmen periodisch wieder geschieht.

24. System gemäß Anspruch 21, **dadurch gekennzeichnet, dass** das Mittel zum Trennen ferner einen mit jeder Kommunikationsverbindung gekoppelten Wellenlängenmultiplexierungs-Demultiplexer (WDM-Demultiplexer) (440) umfasst.

25. System gemäß Anspruch 21, das ferner ein Mittel zum Ausrichten (1500) aller Wellenlängensignale mit einer definierten Verbindung mit jedem der Eingangsports auf den CTR umfasst.

26. System gemäß Anspruch 25, **dadurch gekennzeichnet, dass** das Ausrichten mittels einer einstellbaren Verzögerung erzielt wird.

27. System gemäß Anspruch 21,
**dadurch gekennzeichnet, dass** die Vermittlungssteuereinheit (410) in Reaktion auf die CTR (002) die gespeicherte Wellenlängenabbildungstabelle (10210) lädt, um die Zuweisung der Wellenlängensignale zu einem jeweiligen der Zeitrahmen zu koordinieren.

28. System gemäß Anspruch 1,
**dadurch gekennzeichnet, dass** jeder der Kanäle auf einer definierten ersten Wellenlänge übermittelt wird;
wobei mehrere Wellenlängenumsetzungsteilsysteme (WLC) (13150) jeweils mit einer jeweiligen der mehreren Kommunikationsverbindungen gekoppelt sind;
wobei jedes Wellenlängenumsetzungsteilsystem in Reaktion auf die CTR wahlweise von der ersten Wellenlänge auf eine zweite Wellenlänge umsetzt, um eine jeweilige Ausgabe einer zweiten Kommunikationsverbindung zu liefern, die die zweite Wellenlänge übermittelt;
mehrere Wellenlängenmultiplexer (WDMs) (10050), die jeweils mehrere optische Kanaleingänge aufweisen;
ein optisches Zwischenverbindungsteilsystem (13020) zum Koppeln der zweiten optischen Verbindungen mit ausgewählten der optischen Kanaleingänge eines zugeordneten der WDMs; und
wobei jeder der WDMs seine jeweiligen mehreren optischen Kanaleingänge auf wenigstens eine jeweilige Kommunikationsverbindung (10020) multiplexiert.

29. System gemäß Anspruch 25, **dadurch gekennzeichnet, dass** das Mittel zum Ausrichten ferner umfasst:
eine programmierbare optische Vermittlungsmatrix (10930), die mehrere unabhängige Einlässe und Auslässe umfasst;
mehrere Fasern (2740) mit vorgegebener Länge, die jeweils von einem Auslass zu einem Einlass der mehreren unabhängigen Einlässe und Auslässe koppeln; und
eine Steuereinheit (2720) programmierbarer Verzögerung zum Abbilden ausgewählter der mehreren Einlässe auf ausgewählte der mehreren Auslässe, sodass eine Teilmenge der mehreren Fasern verkettet werden, um als eine effektive Einzelfaser mit einer äquivalenten kombinierten Länge der Teilmenge zu wirken.

30. Vermittlungssystem gemäß Anspruch 1,
**dadurch gekennzeichnet, dass** die Dateneinheiten wenigstens eines der Folgenden sind: ein Byte, ein Wort, ein Paket, ein Internetprotokoll-Paket (IP-Paket), eine Zelle des asynchronen Übertragungsmodus (ATM-Zelle), ein Faserkanalrahmen (FC-Rahmen), ein Ethernet-Rahmen jeweils mit einem Nutzinformationsteil und einem Anfangsblockteil;
wobei das Vermittlungssystem ferner umfasst: mehrere Zeitrahmenbegrenzer (TFDs) zwischen aufeinanderfolgenden Zeitrahmen und eine Leitweglenkungssteuereinheit (5610) bei ausgewählten der Eingangsports;
wobei die TFDs wenigstens eines der Folgenden sind: Leerlaufzeit und Steuerwort;
wobei ausgewählte der Dateneinheiten zu der Leitweglenkungssteuereinheit weitergeleitet werden;
wobei die Leitweglenkungssteuereinheit (5610) an einem spezifischen definierten eines der Ausgangsports spezifische definierte der Kanäle bestimmt, an die die Dateneinheiten in Reaktion auf wenigstens eines der Folgenden weitergeleitet werden sollen: (1) Decodierung der Anfangsblockteile, (2) die TFDs und (3) die CTR (002).

31. System gemäß Anspruch 30, das ferner umfasst:
ein erstes Mittel zum Abbilden jeder der Dateneinheiten auf ausgewählte der Zeitrahmen; und
ein Mittel zum Bereitstellen des Datentransports der Dateneinheiten in Reaktion auf das erste Mittel zum Abbilden und die CTR (002).

32. System gemäß Anspruch 31, **dadurch gekennzeichnet, dass** jede der Dateneinheiten wenigstens einen Teil umfasst; und dass das erste Mittel zum Abbilden wahlweise jeden Teil einer der Dateneinheiten auf wenigstens einen der Zeitrahmen abbildet.

33. System gemäß Anspruch 32, **dadurch gekennzeichnet, dass** das Mittel zum Bereitstellen des Datentransports eine zeitgesteuerte Vermittlungsvorrichtung ist; wobei das System ferner umfasst:
einen Vermittlungsknoten (52) mit mehreren Eingangsports, die jeweils eine eindeutige Adresse haben, und mit mehreren Ausgangsports, die jeweils eine eindeutige Adresse haben;
eine Positionslogik (8420) zum Bestimmen einer relativen Position für jeden der genannten jeweiligen ankommenden Teile der Dateneinheit in dem jeweiligen bestimmten Zeitrahmen; und
eine Weiterleitungs- und Sendebegrenzungssteuereinheit (8420), die für jeden der genannten jeweiligen ankommenden Teile der Dateneinheit in dem genannten Zeitrahmen der Ankunft in Reaktion auf (1) die eindeutige Adresse des Eingangsports, der jedem der ankommenden Teile der Dateneinheiten zugeordnet ist; (2) den zugeordneten Zeitrahmen der Ankunft; und (3) die zugeordnete relative Position, eine Leitweglenkung zu einem zugeordneten bestimmten der Ausgangsports an einer zugeordneten bestimmten Position und in einem zugeordneten zweiten bestimmten Zeitrahmen bereitstellt.

34. System gemäß Anspruch 33, **dadurch gekennzeichnet, dass** die Weiterleitungs- und Sendebegrenzungssteuereinheit (8420) eine Leitweglenkung jedes der ankommenden Teile der Dateneinheiten zu mehreren der Ausgangsports liefert, wobei jeder der mehreren ankommenden Teile der Dateneinheiten in einem zugeordneten der vorgegebenen Zeitrahmen eine jeweils eindeutige zugeordnete bestimmte Position hat.

35. System gemäß Anspruch 33, **dadurch gekennzeichnet, dass** jeder Zeitrahmen vom Anfang bis zum Ende eine definierte Dauer hat, wobei jeder der Eingangsports einen seriellen Empfänger umfasst, der Positionsbegrenzer liefert, die jedem der ankommenden Teile der damit gekoppelten Dateneinheiten zugeordnet sind, wobei die Positionslogik (8420) ein Positionszähler (8420) ist, wobei der genannte Positionszähler die Positionsbegrenzer zählt, die seit dem Anfang des jeweiligen der Zeitrahmen aufgetreten sind.

36. System gemäß Anspruch 35, **dadurch gekennzeichnet, dass** die Zeitrahmen zyklisch wieder auftreten, wobei eine Folge von Positionsbegrenzern in den zyklisch wieder auftretenden Zeitrahmen implizit durch eine vorgegebene Folge von Zeiteinheiten gleicher Dauer definiert ist.

37. System gemäß Anspruch 35, **dadurch gekennzeichnet, dass** die Zeitrahmen zyklisch wieder auftreten, wobei die Folge der Positionsbegrenzer in den zyklisch wieder auftretenden Zeitrahmen durch eine vorgegebene Folge von Zeitrahmen mit beliebig verschiedener Dauer definiert ist.

38. System gemäß Anspruch 35, **dadurch gekennzeichnet, dass** die Positionslogik (8420) in vorgegebenen Zeitintervallen relativ zu dem Anfang des Zeitrahmens inkrementiert wird, um neue relative Positionen zu bestimmen.

39. System gemäß Anspruch 36, **dadurch gekennzeichnet, dass** jede der Positionen eine vorgegebene Zeitdauer besitzt.

40. System gemäß Anspruch 32, **dadurch gekennzeichnet, dass** das Mittel zum Bereitstellen des Datentransports eine zeitgesteuerte Prioritätsvorrichtung ist; wobei das genannte System ferner umfasst:
eine Pipe (2910), die wenigstens zwei Vermittlungsknoten umfasst, die über wenigstens einen Kanal in einem Weg miteinander verbunden sind;
eine Weiterleitungs- und Sendebegrenzungs-Steuereinheit (2920) zum Zuweisen ausgewählter vorgegebener Zeitrahmen zur Übertragung in jeden und aus jedem der jeweiligen Vermittlungsknoten in Reaktion auf die gemeinsame Zeitreferenz;
wobei es für jeden Vermittlungsknoten (52) in der Pipe einen ersten vorgegebenen Zeitrahmen, innerhalb dessen jeweilige Teile der Dateneinheit in den jeweiligen Vermittlungsknoten übertragen werden, und einen zweiten vorgegebenen Zeitrahmen, innerhalb dessen die jeweiligen Teile der Dateneinheit aus dem jeweiligen Vermittlungsknoten weitergeleitet werden, gibt; und
wobei die Zeitrahmenzuweisung zwischen der Zeit zwischen der Eingabe in die Pipe und der Ausgabe aus der Pipe gleichbleibende vorgegebene Intervalle bereitstellt.

41. System gemäß Anspruch 40, **dadurch gekennzeichnet, dass** es mehrere der Pipes (2910) gibt, wobei jede der Pipes wenigstens zwei der Vermittlungsknoten umfasst, die über Kanäle in einem Weg (52) miteinander verbunden sind.

42. System gemäß Anspruch 41, **dadurch gekennzeichnet, dass** unter Nutzung wenigstens zweier der Pipes (2910) für jeden derselben vorgegebenen Zeitrahmen mehrere Dateneinheiten übertragen werden können.

43. System gemäß einem vorherigen Anspruch,
**dadurch gekennzeichnet, dass** die Dateneinheiten wenigstens eines der Folgenden sind: ein Byte, ein Wort, ein Paket, ein Rahmen, eine ATM-Zelle, ein Faserkanalrahmen, ein IP-Paket und ein Ethernet-Rahmen.

44. System gemäß einem vorherigen Anspruch, **dadurch gekennzeichnet, dass** jeder der Kanäle wenigstens eines der Folgenden ist: (1) optisch, (2) wellenlängenmultiplexierend (WDM), (3) dicht wellenlängenmultiplexierend (DWDM), (4) Sonet, (5) Punkt-zu-Punkt, drahtlos, (6) Mehrpunkt, drahtlos, (7) gemeinsam genutzte Medien, drahtlos, (8) Ethernet, (9) Gigabit-Ethernet (GE), (10) 10-Gigabit-Ethernet (10GE), (11) gemeinsam genutzte Medien, passiver optischer Sternkoppler, (12) Kabelmodem, (13) DSL, (14) ADSL, (15) SDSL und (16) ATM-Schaltungsemulation.

## Revendications

1. Système de commutation ayant une entrée et une sortie, chaque entrée et chaque sortie comprenant au moins un canal (920) couplé pour communiquer des unités de données, le système de commutation comprenant, en outre :
un premier commutateur (52) de communication et un deuxième commutateur (52) de communication connectés par au moins une liaison de communication, comprenant au moins un canal (920) pour transmettre une pluralité d'unités de données de ladite liaison de communication à la sortie du système de commutation ;
dans lequel chaque canal est au moins un canal d'entrée ou un canal de sortie ;
une référence de temps commune (par la suite « CTR ») (002) divisée en une pluralité de tranches de temps successives (TF) ;
dans lequel les tranches de temps ont au moins l'une d'une pluralité de durées temporelles prédéfinies ;
dans lequel chacun des premier et deuxième commutateurs de communication comprend, en outre, une pluralité de ports d'entrée (450) et une pluralité de ports de sortie (455), chacun des ports d'entrée étant connecté à au moins l'un des canaux et recevant des unités de données en provenance de ceux-ci, et chacun des ports de sortie étant connecté à au moins l'un des canaux et transmettant des unités de données à ceux-ci ;
dans lequel chacun des premier et deuxième commutateurs de communication a une matrice (490) de commutation respective couplée aux ports d'entrée (450) respectifs et aux ports de sortie (455) respectifs ;
dans lequel chacun des premier et deuxième commutateurs de communication a un contrôleur (410) de commutation respectif, couplé à la CTR (002) et à au moins l'un de : (1) les ports d'entrée respectifs, (2) les ports de sortie respectifs, et (3) la matrice (490) de commutation respective ;
**caractérisé en ce que** :
le contrôleur (410) de commutation du premier commutateur de communication répond à la CTR (002) et aux durées temporelles prédéfinies respectives de certaines respectives des tranches de temps, en ordonnançant au moins l'une de : (1) une connexion via la matrice (490) de commutation respective, à partir de l'un respectif des ports d'entrée, sur l'un respectif des canaux d'entrée, au cours d'un premier intervalle de temps prédéfini d'entrée, et (2) une transmission via l'un respectif des ports de sortie, sur l'un respectif des canaux de sortie, au cours d'un premier intervalle de temps prédéfini de sortie ;
et **en ce que** le contrôleur (410) de commutation du deuxième commutateur de communication répond à la CTR et aux durées temporelles prédéfinies respectives de certaines respectives des tranches de temps, en ordonnançant au moins l'une de : une connexion via la matrice de commutation respective, à partir de l'un respectif des ports d'entrée, sur l'un respectif des canaux d'entrée, au cours d'un deuxième intervalle de temps prédéfini d'entrée, et une transmission via l'un respectif des ports de sortie, sur l'un respectif des canaux de sortie, au cours d'un deuxième intervalle de temps prédéfini de sortie ;
et **en ce qu'**il existe un intervalle de temps prédéfini entre au moins l'un de ce qui suit : le début du premier intervalle de temps prédéfini d'entrée et le deuxième intervalle de temps prédéfini d'entrée, le début du premier intervalle de temps prédéfini de sortie et le deuxième intervalle de temps prédéfini de sortie ; et
et **en ce que** l'intervalle de temps prédéfini est au moins l'un de ce qui suit : (1) supérieur au délai entre le premier commutateur de communication et le deuxième commutateur de communication, une fraction prédéfinie du premier intervalle de temps prédéfini d'entrée, un nombre entier du premier intervalle de temps prédéfini d'entrée, une fraction prédéfinie du premier intervalle de temps prédéfini de sortie, et à nombre entier du premier intervalle de temps prédéfini de sortie.

2. Système selon la revendication 1, **caractérisé en ce que** chacun des contrôleurs (410) de commutation respectifs définit le couplage à partir de chacun des ports (450) d'entrée respectifs pour des unités de données reçues au cours de l'une quelconque des tranches de temps, sur l'un respectif des canaux (920), pour une sortie au cours d'une tranche de temps prédéfinie vers au moins l'un sélectionné respectif des ports de sortie (455), sur au moins l'un sélectionné des canaux.

3. Système selon la revendication 2, **caractérisé en ce que** les unités de données qui sont émises en sortie par le biais de la matrice de commutation respective, au cours d'une première tranche de temps prédéfinie, sur l'un sélectionné respectif des canaux (920), via le port de sortie (455) respectif, sur le premier commutateur (52) de communication, sont réacheminées via le port de sortie respectif du deuxième commutateur de communication, au cours d'une deuxième tranche de temps respective, sur l'un sélectionné respectif des canaux, en réponse à la CTR (002).

4. Système selon la revendication 1, **caractérisé en ce que** les unités de données reçues sur certains multiples des canaux, au cours d'une première des tranches de temps prédéfinies, sont combinées pour leur sortie, au cours d'une deuxième des tranches de temps prédéfinies, en réponse au contrôleur (410) de commutation respectif.

5. Système selon la revendication 1, **caractérisé en ce que** les unités de données reçues sur l'un unique des canaux, au cours d'une pluralité des tranches de temps prédéfinies, sont combinées pour leur sortie vers un deuxième des canaux, au cours d'une deuxième tranche de temps prédéfinie.

6. Système selon la revendication 1, **caractérisé en ce que** les tranches de temps se composent chacune d'au moins une sous-tranche de temps.

7. Système selon la revendication 1,
**caractérisé en ce que** la matrice (490) de commutation est au moins l'une de ce qui suit : un système crossbar, un réseau cubique généralisé à étages multiples, un réseau Clos, un réseau Benes, un réseau oméga, un réseau delta, un réseau de mélange et échange à étages multiples, un réseau Banyan, une combinaison de démultiplexeurs optiques et de multiplexeurs optiques, une étoile passive optique, une pluralité d'étoiles passives optiques, une pluralité de lasers accordables, une pluralité de lasers accordables connectés à au moins une étoile passive optique, une pluralité de récepteurs optiques accordables connectés à au moins une étoile passive optique, un commutateur optique, un système crossbar optique, un réseau Banyan optique, un commutateur optique au niobate de lithium, un commutateur optique au phosphate d'indium, un commutateur optique MEMS 2D, un commutateur optique MEMS 3D, un commutateur optique à amplificateur optique à semiconducteur (SOA), un commutateur optique holographique, et un commutateur optique à bulles.

8. Système selon la revendication 6, **caractérisé en ce qu'**un nombre prédéfini d'au moins une successive des tranches de temps comprend un cycle temporel (TC), dans lequel un nombre prédéfini d'au moins l'un successif des cycles temporels comprend un super-cycle (SC).

9. Système selon la revendication 8,
**caractérisé en ce que** chacun de la pluralité de ports d'entrée (450) reçoit des unités de données sur au moins l'un d'une pluralité de canaux entrants (j) (920), et dans lequel chacun de la pluralité de ports de sortie (455) envoie des unités de données sur au moins l'un d'une pluralité de canaux sortants (1) (920) ;
et **en ce que** chacun des canaux entrants (j) a une référence de temps unique (UTR-j) dont la phase est indépendante de la CTR ;
et **en ce que** l'UTR-j est divisée en super-cycles d'UTR-j successifs ; dans lequel les super-cycles d'UTR-j sont divisés en cycles temporels d'UTR-j successifs ; et dans lequel les cycles temporels d'UTR-j sont divisés en tranches de temps d'UTR-j successives ;
et dans lequel les tranches de temps d'UTR-j ont une pluralité de durées temporelles prédéfinies.

10. Système selon la revendication 9,
**caractérisé en ce que** les tranches de temps d'UTR-j ont au moins l'une de ce qui suit : la même durée que les tranches de temps de CTR, et une durée différente des tranches de temps de CTR ;
et les cycles temporels d'UTR-j ont au moins l'une de ce qui suit : la même durée que les cycles temporels de CTR, et une durée différente des cycles temporels de CTR ; et
les super-cycles d'UTR-j ont au moins l'une de ce qui suit : la même durée que les super-cycles de CTR, et une durée différente des super-cycles de CTR ;

11. Système selon la revendication 9,
**caractérisé en ce que** les super-cycles d'UTR-j ont un temps de début et un temps de fin qui est au moins l'un de ce qui suit : (1) un temps de début et un temps de fin différents des super-cycles de CTR ; et (2) les mêmes temps de début et temps de fin que les super-cycles de CTR respectifs ; et
les cycles temporels d'UTR-j ont un temps de début et un temps de fin qui sont au moins l'un de ce qui suit : (1) un temps de début et un temps de fin différents des cycles temporels de CTR ; et (2) les mêmes temps de début et temps de fin que les cycles temporels de CTR respectifs.

12. Système selon la revendication 9 comprenant, en outre :
une pluralité de files (1550, 1650) d'attente de tampons, dans lequel chacune des files d'attente de tampons respectives est associée, pour chacune des tranches de temps de CTR, à une combinaison de l'un des canaux entrants et de l'un des canaux sortants ;
un contrôleur de mappage à l'intérieur du contrôleur (410) de commutation, pour mettre en correspondance logique, pour chacune des tranches de temps (UTR-j), des canaux entrants (j) sélectionnés avec des files d'attente de tampons sélectionnées, et pour mettre en correspondance logique, pour chacune des tranches de temps de CTR, certaines sélectionnées des multiples files d'attente de tampons avec des canaux sortants (1) sélectionnés ;
dans lequel chacune des files d'attente de tampons comprend, en outre, un sous-système (1500) d'alignement composé d'une pluralité de files d'attente de tranches de temps, dans lequel chacune des files d'attente de tranches de temps comprend des moyens destinés à déterminer que la file d'attente de tranche de temps respective est vide, dans lequel chacune des files d'attente de tranches de temps comprend, en outre, des moyens destinés à déterminer que la file d'attente de tranche de temps respective n'est pas vide ;
dans lequel les unités de données qui arrivent via le canal entrant (j) sont stockées dans la file d'attente de tranche de temps respective du sous-système d'alignement, en réponse au contrôleur de mappage ; et
dans lequel le contrôleur de mappage permet, en outre, le couplage de certaines sélectionnées des files d'attente de tranches de temps à certains respectifs des canaux sortants (1), pour le transfert des unités de données respectives stockées, au cours des tranches de temps de CTR associées respectives.

13. Système selon la revendication 12,
**caractérisé en ce que** le sous-système (1500) d'alignement, en réponse au contrôleur de mappage, transfère les unités de données associées à une première tranche de temps respective, telle que définie par l'UTR-j, dans une première file d'attente de tranche de temps vide, à partir d'un canal entrant (j), au cours de la première tranche de temps sélectionnée respective des tranches de temps d'UTR-j, dans lequel la file d'attente de tranche de temps respective est désignée comme pleine ; et
le sous-système d'alignement, en réponse au contrôleur de mappage, transfère des unités de données à partir d'une deuxième file d'attente de tranche de temps pleine, vers le canal sortant (1) respectif, au cours de l'une au moins de ce qui suit : l'une sélectionnée des tranches de temps de CTR et l'une sélectionnée des sous-tranches de temps de CTR, dans lequel la deuxième file d'attente de tranche de temps est désignée comme vide.

14. Système selon la revendication 1 comprenant, en outre :
une pluralité de débits binaires de canaux;
des moyens (8410) destinés à mettre en correspondance, pour chacune des tranches de temps de chacun des canaux qui est connecté au port de sortie, un sous-ensemble prédéfini des unités de données à partir d'un sous-ensemble respectif des tranches de temps pour un sous-ensemble respectif des canaux qui sont connectés aux ports d'entrée.

15. Système selon la revendication 14,
**caractérisé en ce que** le mappage des unités de données pour les tranches de temps des canaux d'entrée, dans la tranche de temps respective du canal de sortie respectif, est effectué dans un ordre prédéfini, à l'aide d'une logique (8420) de position.

16. Système selon la revendication 15, **caractérisé en ce que** le moyen (8300) de mappage établit une correspondance entre au moins l'un de ce qui suit : certains sélectionnés de quatre canaux OC-3 avec l'un sélectionné de canaux OC-12, certains sélectionnés de seize canaux OC-3 avec l'un sélectionné de canaux OC-48, certains sélectionnés de quatre canaux OC-12 avec l'un sélectionné de canaux OC-48, certains sélectionnés de seize canaux OC-12 avec l'un sélectionné de canaux OC-192, certains sélectionnés de quatre canaux OC-48 avec l'un sélectionné de canaux OC-192, et certains sélectionnés de seize canaux OC-48 avec l'un sélectionné de canaux OC-768.

17. Système selon la revendication 1 comprenant, en outre:
une pluralité continue de trames (8115) SONET ayant chacune une durée temporelle prédéfinie ;
des moyens destinés à séparer chacun des canaux SONET en au moins un sous-canal SONET composé chacun d'une séquence continue de trames SONET ;
dans lequel chaque trame SONET se compose d'au moins une unité de données ;
un premier moyen destiné au mappage de chacune des trames SONET avec certaines sélectionnées des tranches de temps ; et
des moyens destinés à assurer le transport de données des trames SONET, en réponse au premier moyen de mappage et à la CTR.

18. Système selon la revendication 17, **caractérisé en ce que** chacune des trames SONET est composée d'une pluralité de parties ;
dans lequel le premier moyen de mappage met en correspondance de manière sélective chacune des parties de l'une des trames SONET avec chacune de certaines multiples et respectives des tranches de temps.

19. Système selon la revendication 18, **caractérisé en ce que** chacune des parties est au moins l'une des suivantes : STS-1, STS-2, STS-3, STS-4, STS-5, STS-6, STS-7, STS-8, STS-9, STS-10, STS-11, STS-12, STS-48, STS-192 et STS-768.

20. Système selon la revendication 1, le système comprenant, en outre :
un moyen (8300) destiné à commander le transport de canaux SONET comprenant des trames SONET ;
dans lequel les trames SONET sont transportées en tant qu'unités de données, au cours de certaines sélectionnées des tranches de temps prédéfinies ;
le système comprenant, en outre :
des moyens destinés au mappage des unités de données à partir de la tranche de temps prédéfinie respective vers les trames SONET respectives associées à au moins un sous-canal SONET ; et
des moyens destinés à multiplexer les trames SONET respectives associées audit au moins un sous-canal SONET, pour former une séquence de trames SONET associées à l'un respectif des canaux SONET.

21. Système selon la revendication 1, le système comprenant, en outre :
des moyens destinés à séparer les canaux d'entrée (440), pour fournir des signaux de longueurs d'onde séparées ayant chacun une connexion définie à au moins l'un des ports de sortie ;
des moyens de mappage comprenant une table (10210) de mappage de longueurs d'onde stockées, lesdits moyens de mappage assurant un mappage de chacun des signaux de longueurs d'onde séparées avec un deuxième signal de longueur d'onde pour la connexion dudit au moins un des ports de sortie, en réponse au signal CTR (002) et à la table (10210) de mappage de longueurs d'onde stockées ;
dans lequel les deuxièmes signaux de longueurs d'onde sont interchangeables entre les tranches de temps.

22. Système selon la revendication 21, **caractérisé en ce que** le deuxième signal de longueur d'onde est fourni par au moins l'un de ce qui suit : un laser (10230) accordable et un filtre accordable.

23. Système selon la revendication 21, **caractérisé en ce que** l'association des signaux de longueurs d'onde avec certaines respectives des tranches de temps se reproduit périodiquement.

24. Système selon la revendication 21, **caractérisé en ce que** le moyen de séparation se compose, en outre, d'un démultiplexeur (440) de multiplexage par répartition en longueur d'onde (WDM) couplé à chaque liaison de communication.

25. Système selon la revendication 21, comprenant, en outre, des moyens (1500) d'alignement de tous les signaux de longueurs d'onde ayant une connexion définie à chacun de ports d'entrée avec la CTR.

26. Système selon la revendication 25, **caractérisé en ce que** l'alignement est effectué au moyen d'un retard réglable.

27. Système selon la revendication 21,
**caractérisé en ce que** le contrôleur (410) de commutation charge la table (10210) de mappage de longueurs d'onde stockées, en réponse à la CTR (002), pour coordonner l'attribution des deuxièmes signaux de longueurs d'onde à l'une respectives des tranches de temps.

28. Système selon la revendication 1,
**caractérisé en ce que** chacun des canaux est acheminé sur une première longueur d'onde définie ;
une pluralité de sous-systèmes (13150) de conversion de longueurs d'onde (WLC) couplés chacun à l'une respective d'une pluralité de liaisons de communication ;
chaque sous-système de conversion de longueurs d'onde convertit de manière sélective la première longueur d'onde en une deuxième longueur d'onde, en réponse à la CTR, pour délivrer une sortie respective d'une deuxième liaison de communication acheminant la deuxième longueur d'onde ;
une pluralité de multiplexeurs (10050) en longueur d'onde (WDM) ayant chacun une pluralité d'entrées de canaux optiques ;
un sous-système (13020) d'interconnexion optique pour coupler les deuxièmes liaisons optiques à certaines sélectionnées des entrées de canaux optiques de l'un associé des WDM ; et
chacun des WDM multiplexe sa pluralité respective d'entrées de canaux optiques sur au moins une liaison (10020) de communication respective.

29. Système selon la revendication 25, **caractérisé en ce que** le moyen d'alignement se compose, en outre, de :
une matrice (10930) de commutation optique programmable comprenant une pluralité d'entrées et de sorties indépendantes ;
une pluralité de fibres (2740) de longueurs prédéfinies couplant chacune une sortie à une entrée de la pluralité d'entrées et de sorties indépendantes ; et
un contrôleur (2720) de retard programmable pour mettre en correspondance certaines sélectionnées de la pluralité d'entrées avec certaines sélectionnées de la pluralité de sorties, de telle sorte qu'un sous-ensemble de la pluralité de fibres est concaténé pour agir comme une fibre utile unique de longueur combinée équivalente du sous-ensemble.

30. Système commutation selon la revendication 1,
**caractérisé en ce que** les unités de données sont au moins l'un(e) d'un octet, d'un mot, d'un paquet, d'un paquet selon le protocole Internet (IP), d'une cellule de mode de transfert asynchrone (ATM), d'une trame Fiber Channel (FC), d'une trame Ethernet ayant chacun(e) une partie formant données utiles et une partie formant entête ;
le système de commutation comprenant, en outre : une pluralité de délimiteurs de tranches de temps (TFD) entre des tranches de temps successives et un contrôleur (5610) de routage à certains sélectionnés des ports d'entrée ;
les TFD sont au moins l'un de : un temps mort et un mot de contrôle ;
certaines sélectionnées des unités de données sont réacheminées vers le contrôleur de routage ;
le contrôleur (5610) de routage détermine l'un défini spécifique des canaux sur l'un défini spécifique des ports de sortie vers lequel les unités de données doivent être réacheminées, en réponse à l'un(e) au moins de : (1) le décodage des parties formant entêtes, (2) les TFD et (3) la CTR (002).

31. Système selon la revendication 30 comprenant, en outre :
un premier moyen destiné au mappage de chacune des unités de données avec certaines sélectionnées des tranches de temps ; et
des moyens destinés à assurer le transport de données des unités de données, en réponse au premier moyen de mappage et à la CTR (002).

32. Système selon la revendication 31, **caractérisé en ce que** chacune des unités de données se compose d'au moins une partie ; et le premier moyen de mappage met en correspondance de manière sélective chaque partie de l'une des unités de données avec au moins l'une respective des tranches de temps.

33. Système selon la revendication 32, **caractérisé en ce que** le moyen assurant le transport de données est un dispositif de commutation commandé par le temps ; le système comprenant, en outre :
un noeud (52) de commutation ayant une pluralité de ports d'entrée ayant chacun une adresse unique, et une pluralité de ports de sortie ayant chacun une adresse unique ;
une logique (8420) de position pour déterminer une position relative pour chacune desdites parties entrantes respectives de l'unité de données, à l'intérieur de la tranche de temps particulière respective ; et
un contrôleur (8420) de délimitation de réacheminement et d'émission répondant à (1) l'adresse unique du port d'entrée associé à chacune des parties entrantes des unités de données ; (2) la tranche de temps associée d'arrivée ; et (3) la position relative associée pour chacune desdites parties entrantes respectives de l'unité de données à l'intérieur de ladite tranche de temps d'arrivée, en assurant un routage vers l'un particulier associé des ports de sortie à une position particulière associée et à l'intérieur d'une deuxième tranche de temps particulière associée.

34. Système selon la revendication 33, **caractérisé en ce que** le contrôleur (8420) de délimitation de réacheminement et d'émission assure le routage de chacune des parties entrantes des unités de données, vers une pluralité de ports de sortie, chacune de la pluralité des parties entrantes des unités de données ayant une position particulière associée unique respective, à l'intérieur de l'une associée des trames de temps prédéfinies.

35. Système selon la revendication 33, **caractérisé en ce que** chacune des tranches de temps a une durée définie du début à la fin, dans lequel chacun des ports d'entrée se compose d'un récepteur série qui fournit des délimiteurs de positions associés à chacune des parties entrantes des unités de données couplées à celui-ci, dans lequel la logique (8420) de position est un compteur (8420) de positions, dans lequel ledit compteur de positions compte les délimiteurs de positions qui sont apparus depuis le début de celle respective des tranches de temps.

36. Système selon la revendication 35, **caractérisé en ce que** les tranches de temps sont cycliquement récurrentes, dans lequel une séquence de délimiteurs de positions à l'intérieur des tranches de temps cycliquement récurrentes est implicitement définie par une séquence prédéfinie d'unités de temps de durée égale.

37. Système selon la revendication 35, **caractérisé en ce que** les tranches de temps sont cycliquement récurrentes, dans lequel la séquence de délimiteurs de positions à l'intérieur des tranches de temps cycliquement récurrentes est définie par une séquence prédéfinie d'intervalles de temps de durée arbitrairement différente.

38. Système selon la revendication 35, **caractérisé en ce que** la logique (8420) de position est incrémentée à des intervalles de temps prédéfinis, par rapport au début de la tranche de temps, pour déterminer de nouvelles positions relatives.

39. Système selon la revendication 36, **caractérisé en ce que** chacune des positions est de durée temporelle prédéfinie.

40. Système selon la revendication 32, **caractérisé en ce que** le moyen assurant le transport de données est un dispositif de priorité commandé par le temps ; ledit système comprenant, en outre :
un tuyau (2910) comprenant au moins deux noeuds de commutation interconnectés via au moins un canal sur un trajet ;
un contrôleur (2920) de délimitation de réacheminement et d'émission pour attribuer des tranches de temps prédéfinies sélectionnées pour le transfert vers et depuis chacun des noeuds de commutation respectifs, en réponse à la référence de temps commune ;
dans lequel pour chaque noeud (52) de commutation à l'intérieur du tuyau, il existe une première tranche de temps prédéfinie, à l'intérieur de laquelle une partie respective de l'unité de données est transférée vers le noeud de commutation respectif, et une deuxième tranche de temps prédéfinie, à l'intérieur de laquelle la partie respective de l'unité de données est réacheminée à partir du noeud de commutation respectif ; et
dans lequel l'attribution de tranches de temps procure des intervalles prédéfinis constants entre les temps compris entre l'entrée dans le tuyau et la sortie hors du tuyau.

41. Système selon la revendication 40, **caractérisé en ce qu'**il existe une pluralité des tuyaux (2910), chacun des tuyaux comprenant au moins deux des noeuds de commutation interconnectés via des canaux sur un trajet (52).

42. Système selon la revendication 41, **caractérisé en ce que** pour chacune des mêmes tranches de temps prédéfinies, de multiples unités de données peuvent être transférées, à l'aide d'au moins deux des tuyaux (2910).

43. Système selon l'une quelconque des revendications précédentes,
**caractérisé en ce que** les unités de données sont au moins l'un(e) d'un octet, d'un mot, d'un paquet, d'une trame, d'une cellule ATM, d'une trame Fiber Channel, d'un paquet IP et d'une trame Ethernet.

44. Système selon l'une quelconque des revendications précédentes, **caractérisé en ce que** chacun des canaux est au moins l'un de ce qui suit : (1) optique, (2) de multiplexage par répartition en longueur d'onde (WDM), (3) de multiplexage par répartition en longueur d'onde dense (DWDM), (4) Sonet, (5) sans fil point à point, (6) sans fil multipoint, (7) sans fil à ligne unique, (8) Ethernet, (9) Gigabit Ethernet (GE), (10) 10 Gigabit Ethernet (10GE), (11) un coupleur à étoile passive optique et à ligne unique, (12) un modem câblé, (13) DSL, (14) ADSL, (15) SDSL, et (16) d'émulation de circuit ATM.
